# EUROPEAN PATENT APPLICATION

(11) **EP 4 799 483 A2**
(43) Date of publication of application: **02.09.2026**
(21) Application number: 26177167.9
(22) Date of filing: 03.03.2023
(51) Int. Cl.: A01P 3/00

(54) **FUNGICIDAL COMBINATIONS, MIXTURES AND COMPOSITIONS AND USES THEREOF**

(30) Priority: 03.03.2022 US 202263316366 P
(62) Document number(s) of the earlier application(s) in accordance with Art. 76 EPC: 25170557.0 / 4 566 450; 23711568.8 / 4 486 126
(71) Applicant: ADAMA MAKHTESHIM LTD., 8410001 Beer Sheva (IL)
(72) Inventor: CONESE, Salvatore, 30161 Hannover (DE); ROSENMUND, Alexandra, 8050 Zurich (CH)
(74) Representative: Modiano, Gabriella Diana

(57) **Abstract**

The present invention provides fungicidal combination comprising: (i) an amount of a compound of Formula I 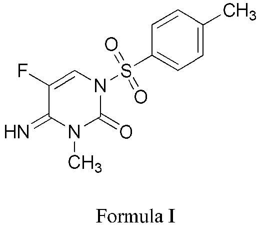 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.

## Description

Throughout this application various publications are referenced. The disclosures of these documents in their entireties are hereby incorporated by reference into this application in order to more fully describe the state of the art to which this invention pertains .

### FIELD OF THE INVENTION

This disclosure concerns combinations comprising (i) an amount of a compound of Formula I and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.

This disclosure also concerns compositions comprising the combinations described herein and methods of use of the combinations described herein.

### BACKGROUND AND SUMMARY

Fungicides are compounds, of natural or synthetic origin, which act to protect plants against damage caused by fungi. Current methods of agriculture rely heavily on the use of fungicides. In fact, some crops cannot be grown usefully without the use of fungicides. Using fungicides allows a grower to increase the yield and the quality of the crop, and consequently, increase the value of the crop. In most situations, the increase in value of the crop is worth at least three times the cost of the use of the fungicide.

5-fluoro-4-imino-3-methyl-1-tosyl-3,4-dihydropyrimidin-2(1*H*)-one is a compound which provides control of a variety of pathogens affecting economically important crops including, but not limited to, the causal agent of leaf blotch in wheat, *Zymoseptoria tritici* (SEPTTR) and fungi of the classes ascomycetes and basidiomycetes.

5-fluoro-4-imino-3-methyl-1-tosyl-3,4-dihydropyrimidin-2(1*H*)-one has both preventive and curative effects.

Uses of N3-substituted-N1-sulfonyl-5-fluoropyrimidinone derivatives as fungicides were described in U.S. Patent No. 8,263,603, issued September 11, 2012, the content of which is incorporated herein by reference in its entirety. Methods of preparation of 5-fluoro-4-imino-3-methyl-1-tosyl-3,4-dihydropyrimidin-2(1H)-one were described in U.S. Patent No. 9,850,215, issued December 26, 2017, U.S. Patent No. 9,840,476, issued December 12, 2017, and PCT International Application Publications Nos. WO 2021/059160 A1, published April 1, 2021 and WO 2021/181274, published September 16, 2021, the contents of each of which are incorporated herein by reference in their entirety.

U.S. Patent No. 8,263,603 also described fungicidal compositions for the control or prevention of fungal attack comprising N3-substituted-N1-sulfonyl-5-fluoropyrimidinone derivatives and a phytologically acceptable carrier material, and methods of use thereof.

Use of 5-fluoro-4-imino-3-(alkyl/substituted alkyl)-1-(arylsulfonyl)-3,4-dihydropyrimidin-2(1H)-one as seed treatment to prevent or control plant disease was described U.S. Patent Application Publication No. 2018/0000082, published on January 4, 2018.

Synergistic mixtures comprising 5-fluoro-4-imino-3-methyl-1-tosyl-3,4-dihydropyrimidin-2(1*H*)-one and at least one fungicidal sterol biosynthesis inhibitor were described in U.S. Patent No. 9,526,245, issued December 27, 2016 and U.S. Patent No. 10,045,533, issued August 14, 2018.

Synergistic mixtures comprising 5-fluoro-4-imino-3-methyl-1-tosyl-3,4-dihydropyrimidin-2(1*H*)-one and at least one succinate dehydrogenase inhibitor were described in U.S. Patent No. 9,532,570, issued January 3, 2017 and U.S. Patent No. 10,045,534, issued August 14, 2018.

Synergistic mixtures comprising 5-fluoro-4-imino-3-methyl-1-tosyl-3,4-dihydropyrimidin-2(1*H*)-one and an amount of at least one fungicide (A) selected from the group consisting of fluindapyr, pydiflumetofen, mefentrifluconazole, inpyrfluxam, isofetamid and Qi inhibitor were described in PCT International Application Publication No. WO 2021/014346 A1, published January 28, 2021.

Many fungicides are not useful in all situations and repeated usage of a single fungicide frequently leads to the development of resistance to the related fungicides. Consequently, research is being conducted to produce fungicides and combinations of fungicides that are safer, that have better performance, that are effective over long periods of time, that require lower dosages, that are easier to use, and that cost less.

It is an object of this disclosure to provide synergistic combinations, including mixtures, comprising the compound of Formula I and at least one additional fungicide. It is a further object of this disclosure to provide composition and uses of these synergistic combinations, including mixtures.

### SUMMARY OF THE INVENTION

The present invention provides a fungicidal combination comprising:
(i) an amount of a compound of Formula I 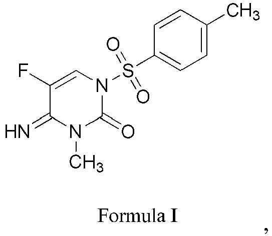 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin.

The present invention also provides a mixture comprising the combinations described herein.

The present invention also provides a composition comprising the combinations described herein.

The present invention also provides a method for treating a plant or locus against fungal infection comprising applying (i) an amount of a compound of Formula I 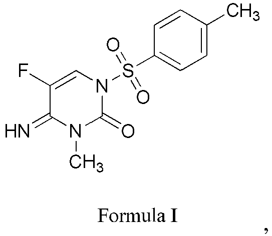 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin, so as to thereby treat the plant or locus against fungal infection.

The present invention also provides a method for treating a plant or a locus against fungal infection comprising applying an effective amount of any one of the combinations, mixtures, or compositions described herein to the plant or locus so as to thereby treat the plant or locus against fungal infection.

The present invention also provides a method for controlling a plant disease caused by phytopathologic fungi comprising contacting the plant or a locus of the plant with an effective amount of any one of the combinations, mixtures, or compositions described herein to thereby control the plant disease.

The present invention also provides a method for controlling fungal attack on a plant, seed or seedling comprising applying any one of the combinations, mixtures, or compositions described herein to the plant, seed, seedling and/or a locus of the plant so as to thereby treat or prevent fungal attack on the plant, seed or seedling.

The present invention also provides a method for controlling fungal attack on a plant, seed or seedling comprising applying any one of the combinations, mixtures, or compositions described herein to the plant, seed, seedling and/or locus of the plant so as to thereby control fungal attack on the plant, seed or seedling.

The present invention also provides a method of treating a plant, seed or seedling to produce a plant resistant to fungal attack, the method comprising applying any one of the combinations, mixtures, or compositions described herein to the plant, seed adapted to produce the plant, seeding adapted to produce the plant, or a locus of the plant so as to thereby produce a plant resistant to fungal attack.

The present invention also provides a method of protecting a plant from fungal attack, the method comprising applying any one of the combinations, mixtures, or compositions described herein to the plant, a locus of the plant, or a seed or seedling adapted to produce the plant so as to thereby protect the plant from fungal attack.

The present invention also provides a plant resistant to fungal attack, wherein the seed adapted to produce the plant, the seedling adapted to produce the plant, or a locus of plant is treated with any one of the combinations, mixtures, or compositions described herein.

The present invention also provides a plant seed or seedling adapted to produce a plant resistant to fungal attack, wherein the plant seed or seedling is treated with any one of the combinations, mixtures, or compositions described herein.

The present invention also provides a method for the controlling fungal attack on a plant comprising applying any one of the combinations, mixtures, or compositions described herein to locus, plant, root, foliage, seed, locus of the fungus, and/or a locus in which the infestation is to be prevented so as to thereby control fungal attack on the plant.

The present invention also provides a method for the controlling plant and/or soil fungal diseases comprising applying any one of the combinations, mixtures, or compositions described herein to soil, plant, root, foliage, seed, locus of the fungus, and/or a locus in which the infestation is to be prevented so as to thereby control plant and/or soil fungal diseases.

The present invention also provides a method for controlling plant disease caused by phytopathologic fungi comprising contacting the plant, propagation material of the plant, or a locus of the plant with (i) an amount of a compound of Formula I 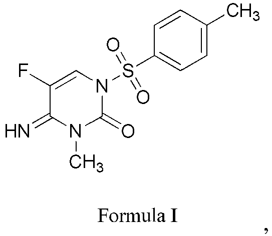 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin to the plant or locus, so as to thereby control the plant disease.

The present invention also provides a method for controlling fungal attack on a plant, seed or seedling comprising applying to the plant, seed, seedling and/or a locus of the plant (i) an amount of a compound of Formula I 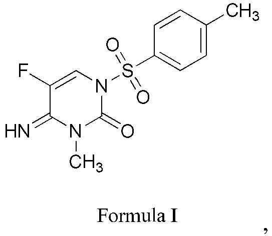 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin, so as to thereby control fungal attack on the plant, seed or seedling.

The present invention also provides a method for protecting a plant, seed or seedling from fungal attack comprising applying to the plant, seed, seedling and/or locus of the plant (i) an amount of a compound of Formula I 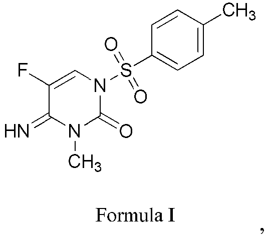 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin, so as to thereby protect the plant, seed or seedling from fungal attack.

The present invention also provides use of any one of the combinations, mixtures, or compositions described herein for treating a plant or locus against fungal infection.

The present invention also provides any one of the combinations, mixtures, or compositions described herein for use to treat a plant or locus against fungal infection.

### DETAILED DESCRIPTION

### Definitions

Unless defined otherwise, all technical and scientific terms used herein have the meaning commonly understood by persons of ordinary skill in the art to which this subject matter belongs.

As used herein, the term "compound of Formula I" includes all solid forms thereof including, but not limited to, amorphous, crystalline, solvate or hydrate. Crystalline forms of the compound of Formula I are disclosed in PCT International Application Publication No. WO 2019/038583 A1, published February 28, 2019, and in U.S. Provisional Application No. 63/184,074 issued May 4, 2021, the entire content of which is hereby incorporated by reference. The term "compound of Formula I" also includes salts and optical isomers thereof.

As used herein, the term "combination" means an assemblage of agrochemicals for application either by simultaneous or contemporaneous application.

As used herein, the term "simultaneous" when used in connection with application of agrochemicals means that the agrochemicals are applied in an admixture, for example, a tank mix. For simultaneous application, the combination may be the admixture or separate containers each containing an agrochemical that are combined prior to application.

As used herein, the term "contemporaneous" when used in connection with application of agrochemicals means that an individual agrochemical is applied separately from another agrochemical or premixture at the same time or at times sufficiently close together that an activity that is additive or more than additive or synergistic relative to the activity of either agrochemical alone at the same dose is achieved.

As used herein, the term "mixture" refers to, but is not limited to, a combination in any physical form, e.g., blend, solution, suspension, dispersion, emulsion, alloy, or the like.

As used herein, the term "tank mix" means one or more of the components of the combination, mixture or composition of the present invention are added are mixed in a spray tank at the time of spray application or prior to spray application.

As used herein, the term "composition" includes at least one of the combinations or mixtures of the present invention with agriculturally acceptable carrier.

As used herein, the term "effective" when used in connection with an amount of the active ingredient, combination, mixture or composition refers to an amount of the active ingredient, combination, mixture or composition that achieve a agriculturally beneficial level of control of the fungus, pathogen, and/or disease when applied to a plant, propagation material of the plant, soil or a locus.

As used herein, the term "fungicidally effective amount" refers to an amount of the active component that is commercially recommended for use to control fungi. The commercially recommended amount for each active component, often specified as application rates of the commercial formulation, may be found on the label accompanying the commercial formulation. The commercially recommended application rates of the commercial formulation may vary depending on factors such as the plant species and the fungus to be controlled.

As used herein, the term "effective" when used in connection with a method for treating a plant or locus against fungal infection means that the method provides an agriculturally beneficial level of treatment without significantly interfering with the normal growth and development of the plant.

As used herein, the term "treating a plant or locus against fungal infection" includes, but is not limited to, protecting the plant or locus against fungal infection and/or controlling fungal infection of the plant or locus.

As used herein, the term "protecting the plant or locus against fungal infection" includes, but is not limited to, protecting the plant or locus against fungal attack, protecting the plant or locus from fungal disease, and/or preventing fungal infection of the plant or locus.

As used herein, the term "controlling fungal infection of the plant or locus" includes, but is not limited to, controlling fungal disease infecting the plant or locus, controlling a plant or soil disease caused by phytopathologic fungi, controlling fungal attack on the plant or locus, reducing fungal infection of the plant or locus, and/or curing plant or soil disease caused by phytopathologic fungi.

As used herein, the term "more effective for protecting the plant or locus against fungal attack" includes, but is not limited to, prolonging the duration of protection against fungal attack after application and extending the protection period against fungal attack.

As used herein, the term "more effective for controlling fungal disease" includes, but is not limited to, increasing efficacy of fungal disease control and reducing the amount of time needed to achieve a given level of fungal control.

As used herein, the term "protectant application" means an application of one or more fungicide for preventing fungal infection of the plant or locus, wherein the fungicidal combination, mixture or composition is applied before infection occurs, before any disease symptoms are shown or when the disease pressure is low. Disease pressure may be assessed based on the conditions associated with disease development such as spore concentration and certain environmental conditions.

As used herein the term "curative application" means an application of one or more fungicide for controlling fungal infection of the plant or locus, wherein the fungicidal combination, mixture or composition is applied after an infection or after disease symptoms are shown.

As used herein, the term "agriculturally acceptable carrier" means carriers which are known and accepted in the art for the formation of compositions for agricultural or horticultural use.

As used herein, the term "adjuvant" is broadly defined as any substance that itself is not an active ingredient, but which enhances or is intended to enhance the effectiveness of the fungicide with which it is used. Adjuvants may be understood to include, spreading agents, penetrants, compatibility agents, and drift retardants.

As used herein, the term "agriculturally acceptable inert additives" is defined as any substance that itself is not an active ingredient but is added to the composition such as sticking agents, surfactants, synergists, buffers, acidifiers, anti-oxidation agent, defoaming agents and thickeners. As used herein, the term "plant" includes reference to the whole plant, plant organ (e.g., leaves, stems, twigs, roots, trunks, limbs, shoots, fruits etc.), plant cells, and propagation material of the plant.

As used herein the term "plant" includes reference to agricultural crops include field crops (soybean, maize, wheat, rice, etc.), vegetable crops (potatoes, cabbages, etc.) and fruits (peach, etc.).

As used herein the term "propagation material" is to be understood to denote all the generative parts of the plant such as seeds and spores, seedlings, and vegetative structures such as bulbs, corms, tubers, rhizomes, roots stems, basal shoots, stolons and buds.

As used herein, the term "locus" includes not only areas where fungal infection may already be shown, but also areas where fungal infection have yet to show, and also to areas under cultivation. Locus includes, but is not limited to, soil and other plant growth medium.

As used herein the term "ha" refers to hectare.

As used herein, the term "excipient" refers to any chemical which has no significant pesticidal activity, such as surfactant(s), solvent(s), or adjuvant(s). One or more excipients can be added to any combination, mixture or composition disclosed herein.

As used herein, the term "stabilizing surfactant" is defined as any surfactant that increases the physical and/or chemical stability of the compound of Formula I when added to a liquid combination, mixture or composition comprising the compound of Formula I. In some embodiments, the stabilizing surfactant is effective for inhibiting crystal growth.

The term "a" or "an" as used herein includes the singular and the plural, *unless specifically stated* otherwise. Therefore, the terms "a," "an," or "at least one" can be used interchangeably in this application.

Throughout the application, descriptions of various embodiments use the term "comprising"; however, it will be understood by one of skill in the art, that in some specific instances, an embodiment can be described using the language "consisting essentially of" or "consisting of."

The term "about" herein specifically includes ±10% from the indicated values in the range. In addition, the endpoints of all ranges directed to the same component or property herein are inclusive of the endpoints, are independently combinable, and include all intermediate points and ranges.

It is understood that where a parameter range is provided, all integers within that range, and tenths thereof, are also provided by the invention as if the integers and tenths thereof are expressly described herein. For example, "5 g/ha to 120 g/ha" includes 5.0 g/ha, 5.1 g/ha, 5.2 g/ha, 5.3 g/ha, 5.4 g/ha, etc. up to 120 g/ha.

All publications, patents and patent applications mentioned in this specification are herein incorporated in their entirety by reference into the specification, to the same extent as if each individual publication, patent or patent application was specifically and individually indicated to be incorporated herein by reference.

The following examples illustrate the practice of the present subject matter in some of its embodiments but should not be construed as limiting the scope of the present subject matter. Other embodiments apparent to persons of ordinary skill in the art from consideration of the specification and examples herein that fall within the spirit and scope of the appended claims are part of this invention. The specification, including the examples, is intended to be exemplary only, without limiting the scope and spirit of the invention.

Aspects and embodiments of the present invention will now be described .

### Fungicidal Combinations, Mixtures and Compositions

The present invention provides a fungicidal combination, comprising: (i) an amount of a compound of Formula I 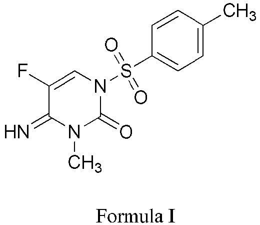 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin.

In some embodiments, the combination is synergistic.

In some embodiments, the combination is more effective for treating a plant or locus against fungal infection than when each fungicide at the same amount is applied alone.

In some embodiments, the amount of compound of Formula I and the amount of fungicide (A) are more effective for treating a plant or locus against fungal infection than when the amount of compound of Formula I and the amount of fungicide (A) are applied alone.

In some embodiments, the amount of compound of Formula I is more effective for treating a plant or locus against fungal infection when applied in combination with the amount of fungicide (A) than when the same amount of the compound of Formula I is applied not in combination with the same amount of the fungicide (A).

In some embodiments, the amount of the fungicide (A) is more effective for treating a plant or locus against fungal infection when applied in combination with the amount of the compound of Formula (I) than when the same amount of the fungicide (A) is applied not in combination with the same amount of the compound of Formula (I).

In some embodiments, the amount of the compound of Formula (I) improves the fungicidal efficacy of the amount of the fungicide (A) compared to when the same amount of fungicide (A) is applied not in combination with the amount of the compound of Formula (I).

In some embodiments, fungicidal efficacy is increased by at least 10%, 20%, or 30% compared to when the same amount of fungicide (A) is applied alone. In some embodiments, fungicidal efficacy is increased by at least 50%, 100%, 200% or 300% compared to when the same amount of fungicide (A) is applied alone.

In some embodiments, fungicidal efficacy is measured in a treated area of the plant. In some embodiments, fungicidal efficacy is measured in an untreated area of the plant. In some embodiments, fungicidal efficacy is increased in a treated area of the plant. In some embodiments, fungicidal efficacy is increased in an untreated area of the plant.

In some embodiments, fungicidal efficacy is measure at least 7 days after treatment. In some embodiments, fungicidal efficacy is measure at least 14 days after treatment. In some embodiments, fungicidal efficacy is measure at least 21 days after treatment. In some embodiments, fungicidal efficacy is measure at least 28 days after treatment.

In some embodiments, a substantially similar level of fungicidal efficacy is achieved by using a lesser amount of the compound of Formula (I) and/or the fungicide (A).

In some embodiments, the amount of the compound of Formula (I) in the combination is less than the fungicidally effective amount of the compound of Formula (I) when used alone. In some embodiments, the amount of the compound of Formula (I) is less than its fungicidally effective amount.

In some embodiments, the amount of the fungicide (A) in the combination is less than the fungicidally effective amount of the fungicide (A) when used alone. In some embodiments, the amount of the compound (A) is less than its fungicidally effective amount.

In some embodiments, the amount of the fungicide (A) and the amount of the compound of Formula (I) are more effective for treating a plant or locus against fungal infection than when the amount of the compound of Formula (I) and the amount of a fungicide (A) are applied alone.

In some embodiments, the combination comprises one or more fungicide(s) (A) and the combination of the compound of Formula (I) and at least one of the fungicide (A) applied is more effective in treating the plant or soil against fungal infection than when each fungicide at the same amount is applied alone.

In some embodiments, the combination comprises two or more fungicide (A) and the combination of the compound of Formula (I) and at least two of the fungicide (A) applied is more effective in treating the plant or soil against fungal infection than when each fungicide at the same amount is applied alone.

In some embodiments, treating a plant or locus against fungal infection comprises combating phytopathogenic diseases on the plant or locus.

In some embodiments, treating the plant or locus against fungal infection comprises protecting the plant or locus from fungal attack.

In some embodiments, treating the plant or locus against fungal infection comprises preventing fungal infection of the plant or locus. In some embodiments, treating the plant or locus against fungal infection comprises preventing fungal attack on the plant, seed or seedling.

In some embodiments, treating the plant or locus against fungal infection comprises controlling fungal disease affecting the plant or locus.

In some embodiments, treating the plant or locus against fungal infection comprises controlling a fungal pathogen, a fungal pathogen group or a fungal pathogen class affecting the plant or locus. In some embodiments, treating the plant or locus against fungal infection comprises controlling fungal attack on a plant.

In some embodiments, treating the plant or locus against fungal infection comprises controlling a fungal disease caused by a fungal pathogen, a fungal pathogen group or a fungal pathogen class affecting the plant or locus. In some embodiments, treating the plant or locus against fungal infection comprises controlling a plant disease caused by phytopathologic fungi.

In some embodiments, treating the plant or locus against fungal infection comprises controlling fungal attack on a plant, seed or seedling.

In some embodiments, treating the plant or locus against fungal infection comprises reducing fungal infection of the plant or locus.

In some embodiments, the combination reduces the amount of time needed to achieve a level of fungal control than when the amount of the compound of Formula (I) and the amount of a fungicide (A)are applied alone.

An example for reduction is, if each fungicide is applied alone achieves 50% control of fungal disease 7 days after application, the mixture or composition disclosed herein achieves 50% control of fungal diseases 2 days after application where each fungicide is applied at the amount.

In some embodiments, the amount of time needed to achieve a level of fungal control is reduced by at least 1 day, 2 days, 3 days, 4 day, 5 days, 7 days, 10 days, 14 days or 21 days, or 28 days.

In some embodiments, the combination improves plant development compared to the development of a plant affected by the same type and degree of fungal infection to which the combination is not applied. In some embodiments, the plant is a crop plant. In some embodiments, the fungicide (A) as part of the combination is more effective in improving plant development than when applied at the same amount alone. In some embodiments, the compound of Formula (I) as part of the combination is more effective in improving plant development than when applied at the same amount alone.

In some embodiments, the plant development is improved by treating the plant against fungal attack.

In some embodiments, improving plant development comprises enhancing crop plants. In some embodiment, improving plant development comprises improving plant quality.

Improving plant development includes, but is not limited to, enhancing the root systems, enhancing shoot of the plant, enhancing plant vigor, enhancing greening effect on leaves and/or enhancing plant potential yield.

In some embodiments, improving plant development comprises enhancing the root system. In some embodiments, enhancement in root system is measured by root weight. In some embodiments, root weight is increased by at least 1%, 5%, 10, 20%, 30%, 40%, 50%, 60%, 70%, 80%, or 90%.

In some embodiments, improving plant development comprises enhancing shoot of the plant. In some embodiments, enhancement in shoot is measured by shoot weight. In some embodiments, shoot weight is increased by at least 1%, 5%, 10, 20%, 30%, 40%, 50%, 60%, 70%, 80%, or 90%.

In some embodiments, improving plant development comprises enhancing plant vigor. In some embodiments, plant vigor is assessed using the relative vigor index. In some embodiments, plant vigor is increased by at least 1%, 5%, 10, 20%, 30%, 40%, 50%, 60%, 70%, 80%, or 90%.

In some embodiments, improving plant development comprises enhancing greening effect on leaves. In some embodiments, greening effect on leaves is assessed using the relative vigor index. In some embodiments, greening effect on leaves is increased by at least 1%, 5%, or 10%.

In some embodiments, improving plant development comprises enhancing plant yield. In some embodiments, plant yield is increased by at least 1%, 5%, 10, 20%, 30%, 40%, 50%, 60%, 70%, 80%, or 90%.

In some embodiments, the amount of the compound of Formula (I) in the combination is less than the fungicidally effective amount of the compound of Formula (I) when the compound of Formula (I) is applied alone.

In some embodiments, the amount of the fungicide (A) in the combination is less than the fungicidally effective amount of the fungicide (A) when the fungicide (A) is applied not in combination with the compound of Formula (I).

The present invention provides a synergistic fungicidal combination, comprising: (i) an amount of a compound of Formula I 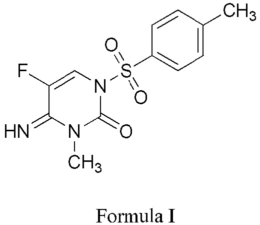 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin.

The present invention provides a fungicidal combination, comprising: (i) an amount of a compound of Formula I 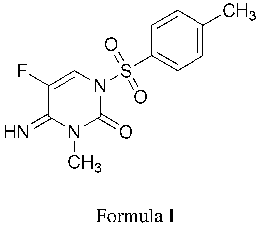 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,

wherein the combination is more effective in treating a plant or locus against fungal infection than when each fungicide at the same amount is applied alone.

The present invention provides a fungicidal combination, comprising: (i) an amount of a compound of Formula I 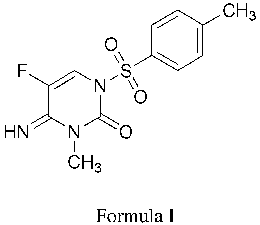 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,

wherein the amount of the compound of Formula I and the amount of the fungicide (A) when applied together is more effective in treating a plant or locus against fungal infection than when each fungicide at the same amount is applied alone.

The present invention provides a fungicidal combination, comprising: (i) an amount of a compound of Formula I 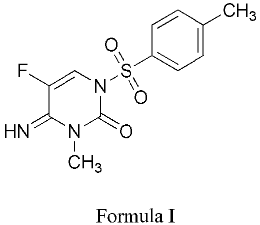
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,
wherein the amount of the compound of Formula I applied is less than the fungicidally effective amount of the compound of Formula I when the compound of Formula I is used alone, and/or
wherein the amount of the fungicide (A) applied is less than the fungicidally effective amount of the fungicide (A) when the fungicide (A) is used alone.

In some embodiments, the combination is synergistic.

In some embodiments, the combination is a mixture. In some embodiments, the mixture is a tank mix. In some embodiments, the mixture is synergistic.

The present invention provides a fungicidal mixture, comprising: (i) an amount of a compound of Formula I 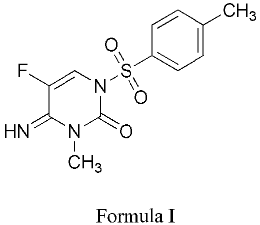 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin.

The present invention provides a synergistic fungicidal mixture, comprising: (i) an amount of a compound of Formula I 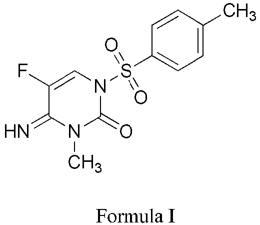 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin.

The present invention provides a fungicidal mixture, comprising: (i) an amount of a compound of Formula I 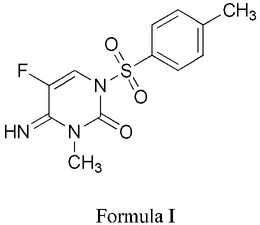
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,
wherein the mixture is more effective in treating a plant or locus against fungal infection than when each fungicide at the same amount is applied alone.

The present invention provides a fungicidal mixture, comprising: (i) an amount of a compound of Formula I 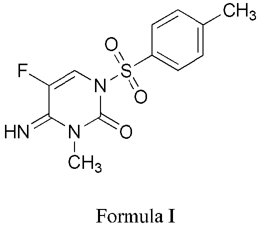
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,
wherein the amount of the compound of Formula I and the amount of the fungicide (A) when applied together is more effective in treating a plant or locus against fungal infection than when each fungicide at the same amount is applied alone.

The present invention provides a fungicidal mixture, comprising: (i) an amount of a compound of Formula I 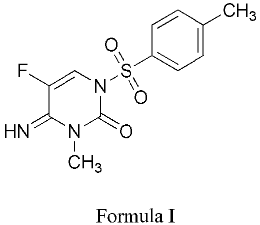
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, hexaconazole, penconazole, triadimefon, triadimenol, triflumizole, bromuconazole, imazalil, tridemorph, flutolanil, thifluzamide and metominostrobin,
wherein the amount of the compound of Formula I applied is less than the fungicidally effective amount of the compound of Formula I when the compound of Formula I is used alone, and/or
wherein the amount of the fungicide (A) applied is less than the fungicidally effective amount of the fungicide (A) when the fungicide (A) is used alone.

The present invention also provides a fungicidal composition comprising any one of the combinations or mixtures disclosed herein.

As used herein, compound of formula I is 5-fluoro-4-imino-3-methyl-1-tosyl-3,4-dihydropyrimidin-2(1*H*)-one and possesses the structure:

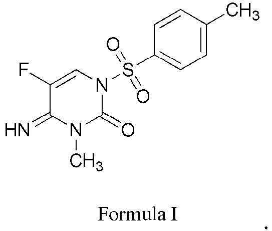

In some embodiments, the compound of Formula I refers to any solid form including but not limited to amorphous, crystalline, solvate or hydrate. Crystalline forms of the compound of Formula I are described in PCT International Application Publication No. WO/2019/038583, published February 28, 2019, the entire content of which is hereby incorporated by reference.

In some embodiments, the fungicide (A) is a pyrimidine.

In some embodiments, the pyrimidine is a bupirimate.

In some embodiments, the fungicide (A) is an antibiotic.

In some embodiments, the antibiotic is kasugamycin or kasugamycin hydrochloride hydrate, oxytetracycline, streptomycin and/or validamycin.

In some embodiments, the fungicide (A) is an AP.

In some embodiments, the AP is cyprodinil and/or pyrimethanil.

In some embodiments, the fungicide (A) is an aromatic hydrocarbon.

In some embodiments, the aromatic hydrocarbon is tolclofos-M.

In some embodiments, the fungicide (A) is an aryl-phenylketone.

In some embodiments, the aryl-phenylketone is metrafenone and/ or pyriofenone.

In some embodiments, the fungicide (A) is an azanaphthalene.

In some embodiments, the azanaphthalene is proquinazid and/or quinoxyfen.

In some embodiments, the fungicide (A) is a benzamide.

In some embodiments, the benzamide is fluopicolide and/or zoxamide.

In some embodiments, the fungicide (A) is a benzenesulfonamide.

In some embodiments, the benzenesulfonamide is flusulfamide.

In some embodiments, the fungicide (A) is a BTH.

In some embodiments, the BTH is probenazole and/or acibenzolar-S-M.

In some embodiments, the fungicide (A) is a CAA.

In some embodiments, the CAA is dimethomorph, mandipropamid, valifenalate, benthiavalicarb-isopropyl and/or iprovalicarb.

In some embodiments, the fungicide (A) is a carbamate.

in some embodiments, the carbamate is propamocarb or propamocarb hydrochlorideand/or diethofencarb.

In some embodiments, the fungicide (A) is a cyanoacetamideoxime.

In some embodiments, the cyanoacetamideoxime is cymoxanil.

In some embodiments, the fungicide (A) is a dicarboximide.

In some embodiments, the dicarboximide is iprodione and/or procymidone.

In some embodiments, the fungicide (A) is a dithiolane.

In some embodiments, the dithiolane is isoprothiolane.

In some embodiments, the fungicide (A) is a growth regulator.

In some embodiments, the growth regulator is ethephon and/or paclobutrazol.

In some embodiments, the fungicide (A) is a guanidine.

In some embodiments, the guanidine is dodine or dodin free base.

In some embodiments, the fungicide (A) is a heteroaromatic fungicide.

In some embodiments, the heteroaromatic fungicide is etridiazole.

In some embodiments, the fungicide (A) is an inorganic fungicide.

In some embodiments, the inorganic fungicide is potassium-bicarbonate, potassium-carbonate and/or potassium-phosphite-monobasic.

In some embodiments, the fungicide (A) is an MBC.

In some embodiments, the MBC is carbendazim, thiophanate-M, benomyl and/or thiabendazole.

In some embodiments, the fungicide (A) is an MBI.

In some embodiments, the MBI is tricyclazole.

In some embodiments, the fungicide (A) is a membrane disruptor.

In some embodiments, the membrane disruptor is iminoctadine and/or iminoctadine-triacetate.

In some embodiments, the fungicide (A) is an organo tin compound.

In some embodiments, the organo tin compound is fentin-hydroxide.

In some embodiments, the fungicide (A) is an OSBPI.

In some embodiments, the OSBPI is oxathiapiprolin.

In some embodiments, the fungicide (A) is a PA.

In some embodiments, the PA is metalaxyl-M, benalaxyl, metalaxyl and/or oxadixyl.

In some embodiments, the fungicide (A) is a phenylacetamide.

In some embodiments, the phenylacetamide is cyflufenamid.

In some embodiments, the fungicide (A) is a phenylurea.

In some embodiments, the phenylurea is pencycuron.

In some embodiments, the fungicide (A) is a phosphonate.

In some embodiments, the phosphonate is fosetyl-Al, potassium-phosphonate, and/or disodium-phosphonate.

In some embodiments, the fungicide (A) is a polyoxin.

In some embodiments, the fungicide (A) is a phenylpyrrole.

In some embodiments, the phenylpyrrole is fludioxonil.

In some embodiments, the fungicide (A) is an uncouplers of oxidative phosphorylation.

In some embodiments, the uncouplers of oxidative phosphorylation is fluazinam, dinocap and/or meptyldinocap.

In some embodiments, the fungicide (A) is dithianon.

In some embodiments, the fungicide (A) is sulphur.

In some embodiments, the fungicide (A) is bordeaux-mixture.

In some embodiments, the fungicide (A) is thiram.

In some embodiments, the fungicide (A) is zineb.

In some embodiments, the fungicide (A) is ziram.

In some embodiments, the fungicide (A) is famoxadone.

In some embodiments, the fungicide (A) is fenamidone.

In some embodiments, the fungicide (A) is pyribencarb.

In some embodiments, the fungicide (A) is ametoctradin.

In some embodiments, the fungicide (A) is diniconazole or diniconazole-M.

In some embodiments, the fungicide (A) is penconazole.

In some embodiments, the fungicide (A) is triadimefon.

In some embodiments, the fungicide (A) is triadimenol.

In some embodiments, the fungicide (A) is triflumizole.

In some embodiments, the fungicide (A) is bromuconazole.

In some embodiments, the fungicide (A) is imazalil or imazalil sulfate.

In some embodiments, the fungicide (A) is tridemorph.

In some embodiments, the fungicide (A) is flutolanil.

In some embodiments, the fungicide (A) is thifluzamide.

In some embodiments, the fungicide (A) is metominostrobin.

In some embodiments, the weight ratio the compound of Formula I to fungicide (A) in the combination, mixture or composition is from 400:1 to 1:400. In some embodiments, the weight ratio of the compound of Formula I to fungicide (A) in the combination, mixture or composition is from 200:1 to 1:200. In some embodiments, the weight ratio of the compound of Formula I to fungicide (A) in the combination, mixture or composition is from 100:1 to 1:100. In some embodiments, the weight ratio of the compound of Formula I to fungicide (A) in the combination, mixture or composition is from 50:1 to 1:50. In some embodiments, the weight ratio of the compound of Formula I to fungicide (A) in the combination, mixture or composition is from 40:1 to 1:40. In some embodiments, the weight ratio of the compound of Formula I to fungicide (A) in the combination, mixture or composition is from 30:1 to 1:30. In some embodiments, the weight ratio of the compound of Formula I to fungicide (A) in the combination, mixture or composition is from 20:1 to 1:20. In some embodiments, the weight ratio of the compound of Formula I to fungicide (A) in the combination, mixture or composition is from 10:1 to 1:10. In some embodiments, the weight ratio of the compound of Formula I to fungicide (A) in the combination, mixture or composition is from 5:1 to 1:5. In some embodiments, the weight ratio of the compound of Formula I to fungicide (A) in the combination, mixture or composition is from 2:1 to 1:2. In some embodiments, the weight ratio of the compound of Formula I to fungicide (A) in the combination, mixture or composition is from 1:1 to 1:2. In some embodiments, the weight ratio of the compound of Formula I to fungicide (A) in the combination, mixture or composition is from 1:1 to 1:3. In some embodiments, the weight ratio of the compound of Formula I to fungicide (A) in the combination, mixture or composition is from 1:1 to 1:4. In some embodiments, the weight ratio of the compound of Formula I to fungicide (A) in the combination, mixture or composition is from 1:1 to 1:5. In some embodiments, the weight ratio of the compound of Formula I to fungicide (A) in the combination, mixture or composition is from 1:1 to 1:6. In some embodiments, the weight ratio of the compound of Formula I to fungicide (A) in the combination, mixture or composition is from 1:1 to 1:7. In some embodiments, the weight ratio of the compound of Formula I to fungicide (A) in the combination, mixture or composition is from 1:1 to 1:8. In some embodiments, the weight ratio of the compound of Formula I to fungicide (A) in the combination, mixture or composition is from 1:1 to 1:9. In some embodiments, the weight ratio of the compound of Formula I to fungicide (A) in the combination, mixture or composition is from 1:1 to 1:10. In some embodiments, the weight ratio of the compound of Formula I to fungicide (A) in the combination, mixture or composition is from 1:1 to 1:15. In some embodiments, the weight ratio of the compound of Formula I to fungicide (A) in the combination, mixture or composition is from 1:1 to 1:20. In some embodiments, the weight ratio of the compound of Formula I to fungicide (A) in the combination, mixture or composition is from 1:1 to 1:25. In some embodiments, the weight ratio of the compound of Formula I to fungicide (A) in the combination, mixture or composition is from 1:1 to 1:30. In some embodiments, the weight ratio of the compound of Formula I to fungicide (A) in the combination, mixture or composition is from 1:1 to 1:40. In some embodiments, the weight ratio of the compound of Formula I to fungicide (A) in the combination, mixture or composition is from 1:1 to 1:50. In some embodiments, the weight ratio of the compound of Formula I to fungicide (A) in the combination, mixture or composition is from 1:1 to 1:60. In some embodiments, the weight ratio of the compound of Formula I to fungicide (A) in the combination, mixture or composition is from 1:1 to 1:70. In some embodiments, the weight ratio of the compound of Formula I to fungicide (A) in the combination, mixture or composition is from 1:1 to 1:80. In some embodiments, the weight ratio of the compound of Formula I to fungicide (A) in the combination, mixture or composition is from 1:1 to 1:90. In some embodiments, the weight ratio of the compound of Formula I to fungicide (A) in the combination, mixture or composition is from 1:1 to 1:100. In some embodiments, the weight ratio of the compound of Formula I to fungicide (A) in the combination, mixture or composition is from 1:1 to 2:1. In some embodiments, the weight ratio of the compound of Formula I to fungicide (A) in the combination, mixture or composition is from 1:1 to 3:1. In some embodiments, the weight ratio of the compound of Formula I to fungicide (A) in the combination, mixture or composition is from 1:1 to 4:1. In some embodiments, the weight ratio of the compound of Formula I to fungicide (A) in the combination, mixture or composition is from 1:1 to 5:1. In some embodiments, the weight ratio of the compound of Formula I to fungicide (A) in the combination, mixture or composition is from 1:1 to 6:1. In some embodiments, the weight ratio of the compound of Formula I to fungicide (A) in the combination, mixture or composition is from 1:1 to 7:1. In some embodiments, the weight ratio of the compound of Formula I to fungicide (A) in the combination, mixture or composition is from 1:1 to 8:1. In some embodiments, the weight ratio of the compound of Formula I to fungicide (A) in the combination, mixture or composition is from 1:1 to 9:1. In some embodiments, the weight ratio of the compound of Formula I to fungicide (A) in the combination, mixture or composition is from 1:1 to 10:1. In some embodiments, the weight ratio of the compound of Formula I to fungicide (A) in the combination, mixture or composition is from 1:1 to 15:1. In some embodiments, the weight ratio of the compound of Formula I to fungicide (A) in the combination, mixture or composition is from 1:1 to 20:1. In some embodiments, the weight ratio of the compound of Formula I to fungicide (A) in the combination, mixture or composition is from 1:1 to 25:1. In some embodiments, the weight ratio of the compound of Formula I to fungicide (A) in the combination, mixture or composition is from 1:1 to 30:1. In some embodiments, the weight ratio of the compound of Formula I to fungicide (A) in the combination, mixture or composition is from 1:1 to 40:1. In some embodiments, the weight ratio of the compound of Formula I to fungicide (A) in the combination, mixture or composition is from 1:1 to 50:1. In some embodiments, the weight ratio of the compound of Formula I to fungicide (A) in the combination, mixture or composition is from 1:1 to 60:1. In some embodiments, the weight ratio of the compound of Formula I to fungicide (A) in the combination, mixture or composition is from 1:1 to 70:1. In some embodiments, the weight ratio of the compound of Formula I to fungicide (A) in the combination, mixture or composition is from 1:1 to 80:1. In some embodiments, the weight ratio of the compound of Formula I to fungicide (A) in the combination, mixture or composition is from 1:1 to 90:1. In some embodiments, the weight ratio of the compound of Formula I to fungicide (A) in the combination, mixture or composition is from 1:1 to 100:1. In some embodiments, the weight ratio of the compound of Formula I to fungicide (A) in the combination, mixture or composition is 1:1. In some embodiments, the weight ratio of the compound of Formula I to fungicide (A) in the combination, mixture or composition is 1:1.12. In some embodiments, the weight ratio of the compound of Formula I to fungicide (A) in the combination, mixture or composition is 1:1.2. In some embodiments, the weight ratio of the compound of Formula I to fungicide (A) in the combination, mixture or composition is 1:1.3. In some embodiments, the weight ratio of the compound of Formula I to fungicide (A) in the combination, mixture or composition is 1:1.7. In some embodiments, the weight ratio of the compound of Formula I to fungicide (A) in the combination, mixture or composition is 1:1.8. In some embodiments, the weight ratio of the compound of Formula I to fungicide (A) in the combination, mixture or composition is 1:2. In some embodiments, the weight ratio of the compound of Formula I to fungicide (A) in the combination, mixture or composition is 1:2.5. In some embodiments, the weight ratio of the compound of Formula I to fungicide (A) in the combination, mixture or composition is 1:2.6. In some embodiments, the weight ratio of the compound of Formula I to fungicide (A) in the combination, mixture or composition is 1:2.7. In some embodiments, the weight ratio of the compound of Formula I to fungicide (A) in the combination, mixture or composition is 1:3. In some embodiments, the weight ratio of the compound of Formula I to fungicide (A) in the combination, mixture or composition is 1:4. All the possible sub-ranges as well as individual numerical values within that range should be considered to have been specifically disclosed.

In some embodiments, the combination, mixture or composition is synergistic. In some embodiments, the combination, mixture or composition has synergistic effect in treating a plant or locus against fungal infection. In some embodiments, the combination, mixture or composition has synergistic curative effect. In some embodiments, the combination, mixture or composition has synergistic protectant effect.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 400:1 to 1:400.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 200:1 to 1:200.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 100:1 to 1:100.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 50:1 to 1:50.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 10:1 to 1:10.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 5:1 to 1:5.

In some embodiments of the combinations, mixtures and compositions described herein, the weight ratio of the compound of Formula I to fungicide (A) at which the fungicidal effect is synergistic against SEPTTR in protectant and/or curative applications lies within the range of about 1:1.

In some embodiments, SEPTTR refers to *Zymoseptoria tritici.*

In some embodiments, the weight ratio of the compound of Formula I to fungicide (A) at which the fungicidal effect is synergistic in protectant applications lies within the range of about 400:1 to 1:400. In some embodiments, the weight ratio of the compound of Formula I to fungicide (A) at which the fungicidal effect is synergistic in protectant applications lies within the range of about 200:1 to 1:200. In some embodiments, the weight ratio of the compound of Formula I to fungicide (A) at which the fungicidal effect is synergistic in protectant applications lies within the range of about 100:1 to 1:100. In some embodiments, the weight ratio of the compound of Formula I to fungicide (A) at which the fungicidal effect is synergistic in protectant applications lies within the range of about 50:1 to 1:50. In some embodiments, the weight ratio of the compound of Formula I at which the fungicidal effect is synergistic with the fungicide (A) in protectant applications lies within the range of about 40:1 to 1:40. In some embodiments, the weight ratio of the compound of Formula I at which the fungicidal effect is synergistic with the fungicide (A) in protectant applications lies within the range of about 30:1 to 1:30. In some embodiments, the weight ratio of the compound of Formula I at which the fungicidal effect is synergistic with the fungicide (A) in protectant applications lies within the range of about 20:1 to 1:20. In some embodiments, the weight ratio of the compound of Formula I at which the fungicidal effect is synergistic with the fungicide (A) in protectant applications lies within the range of about 10:1 to 1:10. In some embodiments, the weight ratio of the compound of Formula I to fungicide (A) at which the fungicidal effect is synergistic in protectant applications lies within the range of about 5:1 to 1:5. In some embodiments, the weight ratio of the compound of Formula I to fungicide (A) at which the fungicidal effect is synergistic in protectant applications lies within the range of about 2:1 to 1:2. In some embodiments, the weight ratio of the compound of Formula I at which the fungicidal effect is synergistic with the fungicide (A) in protectant applications lies within the range of about 1:1 to 1:2. In some embodiments, the weight ratio of the compound of Formula I at which the fungicidal effect is synergistic with the fungicide (A) in protectant applications lies within the range of about 1:1 to 1:3. In some embodiments, the weight ratio of the compound of Formula I at which the fungicidal effect is synergistic with the fungicide (A) in protectant applications lies within the range of about 1:1 to 1:4. In some embodiments, the weight ratio of the compound of Formula I at which the fungicidal effect is synergistic with the fungicide (A) in protectant applications lies within the range of about 1:1 to 1:5. In some embodiments, the weight ratio of the compound of Formula I at which the fungicidal effect is synergistic with the fungicide (A) in protectant applications lies within the range of about 1:1 to 1:6. In some embodiments, the weight ratio of the compound of Formula I at which the fungicidal effect is synergistic with the fungicide (A) in protectant applications lies within the range of about 1:1 to 1:7. In some embodiments, the weight ratio of the compound of Formula I at which the fungicidal effect is synergistic with the fungicide (A) in protectant applications lies within the range of about 1:1 to 1:8. In some embodiments, the weight ratio of the compound of Formula I at which the fungicidal effect is synergistic with the fungicide (A) in protectant applications lies within the range of about 1:1 to 1:9. In some embodiments, the weight ratio of the compound of Formula I at which the fungicidal effect is synergistic with the fungicide (A) in protectant applications lies within the range of about 1:1 to 1:10. In some embodiments, the weight ratio of the compound of Formula I at which the fungicidal effect is synergistic with the fungicide (A) in protectant applications lies within the range of about 1:1 to 1:15. In some embodiments, the weight ratio of the compound of Formula I at which the fungicidal effect is synergistic with the fungicide (A) in protectant applications lies within the range of about 1:1 to 1:20. In some embodiments, the weight ratio of the compound of Formula I at which the fungicidal effect is synergistic with the fungicide (A) in protectant applications lies within the range of about 1:1 to 1:25. In some embodiments, the weight ratio of the compound of Formula I at which the fungicidal effect is synergistic with the fungicide (A) in protectant applications lies within the range of about 1:1 to 1:30. In some embodiments, the weight ratio of the compound of Formula I at which the fungicidal effect is synergistic with the fungicide (A) in protectant applications lies within the range of about 1:1 to 1:40. In some embodiments, the weight ratio of the compound of Formula I at which the fungicidal effect is synergistic with the fungicide (A) in protectant applications lies within the range of about 1:1 to 1:50. In some embodiments, the weight ratio of the compound of Formula I at which the fungicidal effect is synergistic with the fungicide (A) in protectant applications lies within the range of about 1:1 to 1:60. In some embodiments, the weight ratio of the compound of Formula I at which the fungicidal effect is synergistic with the fungicide (A) in protectant applications lies within the range of about 1:1 to 1:70. In some embodiments, the weight ratio of the compound of Formula I at which the fungicidal effect is synergistic with the fungicide (A) in protectant applications lies within the range of about 1:1 to 1:80. In some embodiments, the weight ratio of the compound of Formula I at which the fungicidal effect is synergistic with the fungicide (A) in protectant applications lies within the range of about 1:1 to 1:90. In some embodiments, the weight ratio of the compound of Formula I at which the fungicidal effect is synergistic with the fungicide (A) in protectant applications lies within the range of about 1:1 to 1:100. In some embodiments, the weight ratio of the compound of Formula I at which the fungicidal effect is synergistic with the fungicide (A) in protectant applications lies within the range of about 1:1 to 2:1. In some embodiments, the weight ratio of the compound of Formula I at which the fungicidal effect is synergistic with the fungicide (A) in protectant applications lies within the range of about 1:1 to 3:1. In some embodiments, the weight ratio of the compound of Formula I at which the fungicidal effect is synergistic with the fungicide (A) in protectant applications lies within the range of about 1:1 to 4:1. In some embodiments, the weight ratio of the compound of Formula I at which the fungicidal effect is synergistic with the fungicide (A) in protectant applications lies within the range of about 1:1 to 5:1. In some embodiments, the weight ratio of the compound of Formula I at which the fungicidal effect is synergistic with the fungicide (A) in protectant applications lies within the range of about 1:1 to 6:1. In some embodiments, the weight ratio of the compound of Formula I at which the fungicidal effect is synergistic with the fungicide (A) in protectant applications lies within the range of about 1:1 to 7:1. In some embodiments, the weight ratio of the compound of Formula I at which the fungicidal effect is synergistic with the fungicide (A) in protectant applications lies within the range of about 1:1 to 8:1. In some embodiments, the weight ratio of the compound of Formula I at which the fungicidal effect is synergistic with the fungicide (A) in protectant applications lies within the range of about 1:1 to 9:1. In some embodiments, the weight ratio of the compound of Formula I at which the fungicidal effect is synergistic with the fungicide (A) in protectant applications lies within the range of about 1:1 to 10:1. In some embodiments, the weight ratio of the compound of Formula I at which the fungicidal effect is synergistic with the fungicide (A) in protectant applications lies within the range of about 1:1 to 15:1. In some embodiments, the weight ratio of the compound of Formula I at which the fungicidal effect is synergistic with the fungicide (A) in protectant applications lies within the range of about 1:1 to 20:1. In some embodiments, the weight ratio of the compound of Formula I at which the fungicidal effect is synergistic with the fungicide (A) in protectant applications lies within the range of about 1:1 to 25:1. In some embodiments, the weight ratio of the compound of Formula I at which the fungicidal effect is synergistic with the fungicide (A) in protectant applications lies within the range of about 1:1 to 30:1. In some embodiments, the weight ratio of the compound of Formula I at which the fungicidal effect is synergistic with the fungicide (A) in protectant applications lies within the range of about 1:1 to 40:1. In some embodiments, the weight ratio of the compound of Formula I at which the fungicidal effect is synergistic with the fungicide (A) in protectant applications lies within the range of about 1:1 to 50:1. In some embodiments, the weight ratio of the compound of Formula I at which the fungicidal effect is synergistic with the fungicide (A) in protectant applications lies within the range of about 1:1 to 60:1. In some embodiments, the weight ratio of the compound of Formula I at which the fungicidal effect is synergistic with the fungicide (A) in protectant applications lies within the range of about 1:1 to 70:1. In some embodiments, the weight ratio of the compound of Formula I at which the fungicidal effect is synergistic with the fungicide (A) in protectant applications lies within the range of about 1:1 to 80:1. In some embodiments, the weight ratio of the compound of Formula I at which the fungicidal effect is synergistic with the fungicide (A) in protectant applications lies within the range of about 1:1 to 90:1. In some embodiments, the weight ratio of the compound of Formula I at which the fungicidal effect is synergistic with the fungicide (A) in protectant applications lies within the range of about 1:1 to 100:1. In some embodiments, the weight ratio of the compound of Formula I to fungicide (A) at which the fungicidal effect is synergistic in protectant applications is of about 1:1. In some embodiments, the weight ratio of the compound of Formula I to fungicide (A) at which the fungicidal effect is synergistic in protectant applications is about 1:1.2. In some embodiments, the weight ratio of the compound of Formula I to fungicide (A) at which the fungicidal effect is synergistic in protectant applications is about 1:1.7. In some embodiments, the weight ratio of the compound of Formula I to fungicide (A) at which the fungicidal effect is synergistic in protectant applications is about 1:2. In some embodiments, the weight ratio of the compound of Formula I to fungicide (A) at which the fungicidal effect is synergistic in protectant applications is about 1:2.5. In some embodiments, the weight ratio of the compound of Formula I to fungicide (A) at which the fungicidal effect is synergistic in protectant applications is about 1:3. In some embodiments, the weight ratio of the compound of Formula I to fungicide (A) at which the fungicidal effect is synergistic in protectant applications is about 1:4. In some embodiments, the weight ratio of the compound of Formula I to fungicide (A) at which the fungicidal effect is synergistic in protectant applications is 1:1.12. In some embodiments, the weight ratio of the compound of Formula I to fungicide (A) at which the fungicidal effect is synergistic in protectant applications is 1:1.3. In some embodiments, the weight ratio of the compound of Formula I to fungicide (A) at which the fungicidal effect is synergistic in protectant applications is 1:1.8. In some embodiments, the weight ratio of the compound of Formula I to fungicide (A) at which the fungicidal effect is synergistic in protectant applications is 1:2.6. In some embodiments, the weight ratio of the compound of Formula I to fungicide (A) at which the fungicidal effect is synergistic in protectant applications is 1:2.7. All the possible sub-ranges as well as individual numerical values within that range should be considered to have been specifically disclosed.

In some embodiments, the weight ratio of the compound of Formula I to fungicide (A) at which the fungicidal effect is synergistic in curative applications lies within the range of about 400:1 to 1:400. In some embodiments, the weight ratio of the compound of Formula I to fungicide (A) at which the fungicidal effect is synergistic in curative applications lies within the range of about 200:1 to 1:200. In some embodiments, the weight ratio of the compound of Formula I to fungicide (A) at which the fungicidal effect is synergistic in curative applications lies within the range of about 100:1 to 1:100. In some embodiments, the weight ratio of the compound of Formula I to fungicide (A) at which the fungicidal effect is synergistic in curative applications lies within the range of about 50:1 to 1:50. In some embodiments, the weight ratio of the compound of Formula I to fungicide (A ) at which the fungicidal effect is synergistic in curative applications lies within the range of about 40:1 to 1:40. In some embodiments, the weight ratio of the compound of Formula I to fungicide (A ) at which the fungicidal effect is synergistic in curative applications lies within the range of about 30:1 to 1:30. In some embodiments, the weight ratio of the compound of Formula I to fungicide (A ) at which the fungicidal effect is synergistic in curative applications lies within the range of about 20:1 to 1:20. In some embodiments, the weight ratio of the compound of Formula I to fungicide (A ) at which the fungicidal effect is synergistic in curative applications lies within the range of about 10:1 to 1:10. In some embodiments, the weight ratio of the compound of Formula I to fungicide (A) at which the fungicidal effect is synergistic in curative applications lies within the range of about 5:1 to 1:5. In some embodiments, the weight ratio of the compound of Formula I to fungicide (A) at which the fungicidal effect is synergistic in curative applications lies within the range of about 2:1 to 1:2.

In some embodiments, the weight ratio of the compound of Formula I to fungicide (A) at which the fungicidal effect is synergistic in curative applications lies within the range of about 1:1 to 1:2. In some embodiments, the weight ratio of the compound of Formula I to fungicide (A) at which the fungicidal effect is synergistic in curative applications lies within the range of about 1:1 to 1:3. In some embodiments, the weight ratio of the compound of Formula I to fungicide (A) at which the fungicidal effect is synergistic in curative applications lies within the range of about 1:1 to 1:4. In some embodiments, the weight ratio of the compound of Formula I to fungicide (A) at which the fungicidal effect is synergistic in curative applications lies within the range of about 1:1 to 1:5. In some embodiments, the weight ratio of the compound of Formula I to fungicide (A) at which the fungicidal effect is synergistic in curative applications lies within the range of about 1:1 to 1:6. In some embodiments, the weight ratio of the compound of Formula I to fungicide (A) at which the fungicidal effect is synergistic in curative applications lies within the range of about 1:1 to 1:7. In some embodiments, the weight ratio of the compound of Formula I to fungicide (A) at which the fungicidal effect is synergistic in curative applications lies within the range of about 1:1 to 1:8. In some embodiments, the weight ratio of the compound of Formula I to fungicide (A) at which the fungicidal effect is synergistic in curative applications lies within the range of about 1:1 to 1:9. In some embodiments, the weight ratio of the compound of Formula I to fungicide (A) at which the fungicidal effect is synergistic in curative applications lies within the range of about 1:1 to 1:10. In some embodiments, the weight ratio of the compound of Formula I to fungicide (A) at which the fungicidal effect is synergistic in curative applications lies within the range of about 1:1 to 1:15. In some embodiments, the weight ratio of the compound of Formula I to fungicide (A) at which the fungicidal effect is synergistic in curative applications lies within the range of about 1:1 to 1:20. In some embodiments, the weight ratio of the compound of Formula I to fungicide (A) at which the fungicidal effect is synergistic in curative applications lies within the range of about 1:1 to 1:25. In some embodiments, the weight ratio of the compound of Formula I to fungicide (A) at which the fungicidal effect is synergistic in curative applications lies within the range of about 1:1 to 1:30. In some embodiments, the weight ratio of the compound of Formula I to fungicide (A) at which the fungicidal effect is synergistic in curative applications lies within the range of about 1:1 to 1:40. In some embodiments, the weight ratio of the compound of Formula I to fungicide (A) at which the fungicidal effect is synergistic in curative applications lies within the range of about 1:1 to 1:50. In some embodiments, the weight ratio of the compound of Formula I to fungicide (A) at which the fungicidal effect is synergistic in curative applications lies within the range of about 1:1 to 1:60. In some embodiments, the weight ratio of the compound of Formula I to fungicide (A) at which the fungicidal effect is synergistic in curative applications lies within the range of about 1:1 to 1:70. In some embodiments, the weight ratio of the compound of Formula I to fungicide (A) at which the fungicidal effect is synergistic in curative applications lies within the range of about 1:1 to 1:80. In some embodiments, the weight ratio of the compound of Formula I to fungicide (A) at which the fungicidal effect is synergistic in curative applications lies within the range of about 1:1 to 1:90. In some embodiments, the weight ratio of the compound of Formula I to fungicide (A) at which the fungicidal effect is synergistic in curative applications lies within the range of about 1:1 to 1:100. In some embodiments, the weight ratio of the compound of Formula I to fungicide (A) at which the fungicidal effect is synergistic in curative applications lies within the range of about 1:1 to 2:1. In some embodiments, the weight ratio of the compound of Formula I to fungicide (A) at which the fungicidal effect is synergistic in curative applications lies within the range of about 1:1 to 3:1. In some embodiments, the weight ratio of the compound of Formula I to fungicide (A) at which the fungicidal effect is synergistic in curative applications lies within the range of about 1:1 to 4:1. In some embodiments, the weight ratio of the compound of Formula I to fungicide (A) at which the fungicidal effect is synergistic in curative applications lies within the range of about 1:1 to 5:1. In some embodiments, the weight ratio of the compound of Formula I to fungicide (A) at which the fungicidal effect is synergistic in curative applications lies within the range of about 1:1 to 6:1. In some embodiments, the weight ratio of the compound of Formula I to fungicide (A) at which the fungicidal effect is synergistic in curative applications lies within the range of about 1:1 to 7:1. In some embodiments, the weight ratio of the compound of Formula I to fungicide (A) at which the fungicidal effect is synergistic in curative applications lies within the range of about 1:1 to 8:1. In some embodiments, the weight ratio of the compound of Formula I to fungicide (A) at which the fungicidal effect is synergistic in curative applications lies within the range of about 1:1 to 9:1. In some embodiments, the weight ratio of the compound of Formula I to fungicide (A) at which the fungicidal effect is synergistic in curative applications lies within the range of about 1:1 to 10:1. In some embodiments, the weight ratio of the compound of Formula I to fungicide (A) at which the fungicidal effect is synergistic in curative applications lies within the range of about 1:1 to 15:1. In some embodiments, the weight ratio of the compound of Formula I to fungicide (A) at which the fungicidal effect is synergistic in curative applications lies within the range of about 1:1 to 20:1. In some embodiments, the weight ratio of the compound of Formula I to fungicide (A) at which the fungicidal effect is synergistic in curative applications lies within the range of about 1:1 to 25:1. In some embodiments, the weight ratio of the compound of Formula I to fungicide (A) at which the fungicidal effect is synergistic in curative applications lies within the range of about 1:1 to 30:1. In some embodiments, the weight ratio of the compound of Formula I to fungicide (A) at which the fungicidal effect is synergistic in curative applications lies within the range of about 1:1 to 40:1. In some embodiments, the weight ratio of the compound of Formula I to fungicide (A) at which the fungicidal effect is synergistic in curative applications lies within the range of about 1:1 to 50:1 In some embodiments, the weight ratio of the compound of Formula I to fungicide (A) at which the fungicidal effect is synergistic in curative applications lies within the range of about 1:1 to 60:1. In some embodiments, the weight ratio of the compound of Formula I to fungicide (A) at which the fungicidal effect is synergistic in curative applications lies within the range of about 1:1 to 70:1. In some embodiments, the weight ratio of the compound of Formula I to fungicide (A) at which the fungicidal effect is synergistic in curative applications lies within the range of about 1:1 to 80:1. In some embodiments, the weight ratio of the compound of Formula I to fungicide (A) at which the fungicidal effect is synergistic in curative applications lies within the range of about 1:1 to 90:1. In some embodiments, the weight ratio of the compound of Formula I to fungicide (A) at which the fungicidal effect is synergistic in curative applications lies within the range of about 1:1 to 100:1. In some embodiments, the weight ratio of the compound of Formula I to fungicide (A) at which the fungicidal effect is synergistic in curative applications is of about 1:1. In some embodiments, the weight ratio of the compound of Formula I to fungicide (A) at which the fungicidal effect is synergistic in curative applications is about 1:1.2. In some embodiments, the weight ratio of the compound of Formula I to fungicide (A) at which the fungicidal effect is synergistic in curative applications is about 1:1.7. In some embodiments, the weight ratio of the compound of Formula I to fungicide (A) at which the fungicidal effect is synergistic in curative applications is about 1:2. In some embodiments, the weight ratio of the compound of Formula I to fungicide (A) at which the fungicidal effect is synergistic in curative applications is about 1:2.5. In some embodiments, the weight ratio of the compound of Formula I to fungicide (A) at which the fungicidal effect is synergistic in curative applications is about 1:3. In some embodiments, the weight ratio of the compound of Formula I to fungicide (A) at which the fungicidal effect is synergistic in curative applications is about 1:4. In some embodiments, the weight ratio of the compound of Formula I to fungicide (A) at which the fungicidal effect is synergistic in curative applications is 1:1.12. In some embodiments, the weight ratio of the compound of Formula I to fungicide (A) at which the fungicidal effect is synergistic in curative applications is 1:1.3. In some embodiments, the weight ratio of the compound of Formula I to fungicide (A) at which the fungicidal effect is synergistic in curative applications is 1:1.8. In some embodiments, the weight ratio of the compound of Formula I to fungicide (A) at which the fungicidal effect is synergistic in curative applications is 1:2.6. In some embodiments, the weight ratio of the compound of Formula I to fungicide (A) at which the fungicidal effect is synergistic in curative applications is 1:2.7. All the possible sub-ranges as well as individual numerical values within that range should be considered to have been specifically disclosed.

In some embodiments, the weight ratio the compound of Formula I to ametoctradin in the combination, mixture or composition is from 400:1 to 1:400. In some embodiments, the weight ratio of the compound of Formula I to ametoctradin in the combination, mixture or composition is from 200:1 to 1:200. In some embodiments, the weight ratio of the compound of Formula I to ametoctradin in the combination, mixture or composition is from 100:1 to 1:100. In some embodiments, the weight ratio of the compound of Formula I to ametoctradin in the combination, mixture or composition is from 50:1 to 1:50. In some embodiments, the weight ratio of the compound of Formula I to ametoctradin in the combination, mixture or composition is from 30:1 to 1:30. In some embodiments, the weight ratio of the compound of Formula I to ametoctradin in the combination, mixture or composition is from 20:1 to 1:20. In some embodiments, the weight ratio of the compound of Formula I to ametoctradin in the combination, mixture or composition is from 10:1 to 1:10. In some embodiments, the weight ratio of the compound of Formula I to ametoctradin in the combination, mixture or composition is from 5:1 to 1:5. In some embodiments, the weight ratio of the compound of Formula I to ametoctradin in the combination, mixture or composition is from 2:1 to 1:2. In some embodiments, the weight ratio of the compound of Formula I to ametoctradin in the combination, mixture or composition is from 1:1 to 1:2. In some embodiments, the weight ratio of the compound of Formula I to ametoctradin in the combination, mixture or composition is from 1:1 to 1:3. In some embodiments, the weight ratio of the compound of Formula I to ametoctradin in the combination, mixture or composition is from 1:1 to 1:4. In some embodiments, the weight ratio of the compound of Formula I to ametoctradin in the combination, mixture or composition is from 1:1 to 1:5. In some embodiments, the weight ratio of the compound of Formula I to ametoctradin in the combination, mixture or composition is from 1:1 to 1:6. In some embodiments, the weight ratio of the compound of Formula I to ametoctradin in the combination, mixture or composition is from 1:1 to 1:7. In some embodiments, the weight ratio of the compound of Formula I to ametoctradin in the combination, mixture or composition is from 1:1 to 1:8. In some embodiments, the weight ratio of the compound of Formula I to ametoctradin in the combination, mixture or composition is from 1:1 to 1:9. In some embodiments, the weight ratio of the compound of Formula I to ametoctradin in the combination, mixture or composition is from 1:1 to 1:10. In some embodiments, the weight ratio of the compound of Formula I to ametoctradin in the combination, mixture or composition is from 1:1 to 1:15. In some embodiments, the weight ratio of the compound of Formula I to ametoctradin in the combination, mixture or composition is from 1:1 to 1:20. In some embodiments, the weight ratio of the compound of Formula I to ametoctradin in the combination, mixture or composition is from 1:1 to 1:25. In some embodiments, the weight ratio of the compound of Formula I to ametoctradin in the combination, mixture or composition is from 1:1 to 1:30. In some embodiments, the weight ratio of the compound of Formula I to ametoctradin in the combination, mixture or composition is from 1:1 to 1:40. In some embodiments, the weight ratio of the compound of Formula I to ametoctradin in the combination, mixture or composition is from 1:1 to 1:50. In some embodiments, the weight ratio of the compound of Formula I to ametoctradin in the combination, mixture or composition is from 1:1 to 1:60. In some embodiments, the weight ratio of the compound of Formula I to ametoctradin in the combination, mixture or composition is from 1:1 to 1:70. In some embodiments, the weight ratio of the compound of Formula I to ametoctradin in the combination, mixture or composition is from 1:1 to 1:80. In some embodiments, the weight ratio of the compound of Formula I to ametoctradin in the combination, mixture or composition is from 1:1 to 1:90. In some embodiments, the weight ratio of the compound of Formula I to ametoctradin in the combination, mixture or composition is from 1:1 to 1:100. In some embodiments, the weight ratio of the compound of Formula I to ametoctradin in the combination, mixture or composition is from 1:1 to 2:1. In some embodiments, the weight ratio of the compound of Formula I to ametoctradin in the combination, mixture or composition is from 1:1 to 3:1. In some embodiments, the weight ratio of the compound of Formula I to ametoctradin in the combination, mixture or composition is from 1:1 to 4:1. In some embodiments, the weight ratio of the compound of Formula I to ametoctradin in the combination, mixture or composition is from 1:1 to 5:1. In some embodiments, the weight ratio of the compound of Formula I to ametoctradin in the combination, mixture or composition is from 1:1 to 6:1. In some embodiments, the weight ratio of the compound of Formula I to ametoctradin in the combination, mixture or composition is from 1:1 to 7:1. In some embodiments, the weight ratio of the compound of Formula I to ametoctradin in the combination, mixture or composition is from 1:1 to 8:1. In some embodiments, the weight ratio of the compound of Formula I to ametoctradin in the combination, mixture or composition is from 1:1 to 9:1. In some embodiments, the weight ratio of the compound of Formula I to ametoctradin in the combination, mixture or composition is from 1:1 to 10:1. In some embodiments, the weight ratio of the compound of Formula I to ametoctradin in the combination, mixture or composition is from 1:1 to 15:1. In some embodiments, the weight ratio of the compound of Formula I to ametoctradin in the combination, mixture or composition is from 1:1 to 20:1. In some embodiments, the weight ratio of the compound of Formula I to ametoctradin in the combination, mixture or composition is from 1:1 to 25:1. In some embodiments, the weight ratio of the compound of Formula I to ametoctradin in the combination, mixture or composition is from 1:1 to 30:1. In some embodiments, the weight ratio of the compound of Formula I to ametoctradin in the combination, mixture or composition is from 1:1 to 40:1. In some embodiments, the weight ratio of the compound of Formula I to ametoctradin in the combination, mixture or composition is from 1:1 to 50:1. In some embodiments, the weight ratio of the compound of Formula I to ametoctradin in the combination, mixture or composition is from 1:1 to 60:1. In some embodiments, the weight ratio of the compound of Formula I to ametoctradin in the combination, mixture or composition is from 1:1 to 70:1. In some embodiments, the weight ratio of the compound of Formula I to ametoctradin in the combination, mixture or composition is from 1:1 to 80:1. In some embodiments, the weight ratio of the compound of Formula I to ametoctradin in the combination, mixture or composition is from 1:1 to 90:1. In some embodiments, the weight ratio of the compound of Formula I to ametoctradin in the combination, mixture or composition is from 1:1 to 100:1. In some embodiments, the weight ratio of the compound of Formula I to ametoctradin in the combination, mixture or composition is 1:1. In some embodiments, the weight ratio of the compound of Formula I to ametoctradin in the combination, mixture or composition is 1:1.12. In some embodiments, the weight ratio of the compound of Formula I to ametoctradin in the combination, mixture or composition is 1:1.2. In some embodiments, the weight ratio of the compound of Formula I to ametoctradin in the combination, mixture or composition is 1:1.3. In some embodiments, the weight ratio of the compound of Formula I to ametoctradin in the combination, mixture or composition is 1:1.7. In some embodiments, the weight ratio of the compound of Formula I to ametoctradin in the combination, mixture or composition is 1:1.8. In some embodiments, the weight ratio of the compound of Formula I to ametoctradin in the combination, mixture or composition is 1:2. In some embodiments, the weight ratio of the compound of Formula I to ametoctradin in the combination, mixture or composition is 1:2.5. In some embodiments, the weight ratio of the compound of Formula I to ametoctradin in the combination, mixture or composition is 1:2.6. In some embodiments, the weight ratio of the compound of Formula I to ametoctradin in the combination, mixture or composition is 1:2.7. In some embodiments, the weight ratio of the compound of Formula I to ametoctradin in the combination, mixture or composition is 1:3. In some embodiments, the weight ratio of the compound of Formula I to ametoctradin in the combination, mixture or composition is 1:4. All the possible sub-ranges as well as individual numerical values within that range should be considered to have been specifically disclosed.

In some embodiments, the weight ratio the compound of Formula I to fluopicolide in the combination, mixture or composition is from 400:1 to 1:400. In some embodiments, the weight ratio of the compound of Formula I to fluopicolide in the combination, mixture or composition is from 200:1 to 1:200. In some embodiments, the weight ratio of the compound of Formula I to fluopicolide in the combination, mixture or composition is from 100:1 to 1:100. In some embodiments, the weight ratio of the compound of Formula I to fluopicolide in the combination, mixture or composition is from 50:1 to 1:50. In some embodiments, the weight ratio of the compound of Formula I to fluopicolide in the combination, mixture or composition is from 30:1 to 1:30. In some embodiments, the weight ratio of the compound of Formula I to fluopicolide in the combination, mixture or composition is from 20:1 to 1:20. In some embodiments, the weight ratio of the compound of Formula I to fluopicolide in the combination, mixture or composition is from 10:1 to 1:10. In some embodiments, the weight ratio of the compound of Formula I to fluopicolide in the combination, mixture or composition is from 5:1 to 1:5. In some embodiments, the weight ratio of the compound of Formula I to fluopicolide in the combination, mixture or composition is from 2:1 to 1:2. In some embodiments, the weight ratio of the compound of Formula I to fluopicolide in the combination, mixture or composition is from 1:1 to 1:2. In some embodiments, the weight ratio of the compound of Formula I to fluopicolide in the combination, mixture or composition is from 1:1 to 1:3. In some embodiments, the weight ratio of the compound of Formula I to fluopicolide in the combination, mixture or composition is from 1:1 to 1:4. In some embodiments, the weight ratio of the compound of Formula I to fluopicolide in the combination, mixture or composition is from 1:1 to 1:5. In some embodiments, the weight ratio of the compound of Formula I to fluopicolide in the combination, mixture or composition is from 1:1 to 1:6. In some embodiments, the weight ratio of the compound of Formula I to fluopicolide in the combination, mixture or composition is from 1:1 to 1:7. In some embodiments, the weight ratio of the compound of Formula I to fluopicolide in the combination, mixture or composition is from 1:1 to 1:8. In some embodiments, the weight ratio of the compound of Formula I to fluopicolide in the combination, mixture or composition is from 1:1 to 1:9. In some embodiments, the weight ratio of the compound of Formula I to fluopicolide in the combination, mixture or composition is from 1:1 to 1:10. In some embodiments, the weight ratio of the compound of Formula I to fluopicolide in the combination, mixture or composition is from 1:1 to 1:15. In some embodiments, the weight ratio of the compound of Formula I to fluopicolide in the combination, mixture or composition is from 1:1 to 1:20. In some embodiments, the weight ratio of the compound of Formula I to fluopicolide in the combination, mixture or composition is from 1:1 to 1:25. In some embodiments, the weight ratio of the compound of Formula I to fluopicolide in the combination, mixture or composition is from 1:1 to 1:30. In some embodiments, the weight ratio of the compound of Formula I to fluopicolide in the combination, mixture or composition is from 1:1 to 1:40. In some embodiments, the weight ratio of the compound of Formula I to fluopicolide in the combination, mixture or composition is from 1:1 to 1:50. In some embodiments, the weight ratio of the compound of Formula I to fluopicolide in the combination, mixture or composition is from 1:1 to 1:60. In some embodiments, the weight ratio of the compound of Formula I to fluopicolide in the combination, mixture or composition is from 1:1 to 1:70. In some embodiments, the weight ratio of the compound of Formula I to fluopicolide in the combination, mixture or composition is from 1:1 to 1:80. In some embodiments, the weight ratio of the compound of Formula I to fluopicolide in the combination, mixture or composition is from 1:1 to 1:90. In some embodiments, the weight ratio of the compound of Formula I to fluopicolide in the combination, mixture or composition is from 1:1 to 1:100. In some embodiments, the weight ratio of the compound of Formula I to fluopicolide in the combination, mixture or composition is from 1:1 to 2:1. In some embodiments, the weight ratio of the compound of Formula I to fluopicolide in the combination, mixture or composition is from 1:1 to 3:1. In some embodiments, the weight ratio of the compound of Formula I to fluopicolide in the combination, mixture or composition is from 1:1 to 4:1. In some embodiments, the weight ratio of the compound of Formula I to fluopicolide in the combination, mixture or composition is from 1:1 to 5:1. In some embodiments, the weight ratio of the compound of Formula I to fluopicolide in the combination, mixture or composition is from 1:1 to 6:1. In some embodiments, the weight ratio of the compound of Formula I to fluopicolide in the combination, mixture or composition is from 1:1 to 7:1. In some embodiments, the weight ratio of the compound of Formula I to fluopicolide in the combination, mixture or composition is from 1:1 to 8:1. In some embodiments, the weight ratio of the compound of Formula I to fluopicolide in the combination, mixture or composition is from 1:1 to 9:1. In some embodiments, the weight ratio of the compound of Formula I to fluopicolide in the combination, mixture or composition is from 1:1 to 10:1. In some embodiments, the weight ratio of the compound of Formula I to fluopicolide in the combination, mixture or composition is from 1:1 to 15:1. In some embodiments, the weight ratio of the compound of Formula I to fluopicolide in the combination, mixture or composition is from 1:1 to 20:1. In some embodiments, the weight ratio of the compound of Formula I to fluopicolide in the combination, mixture or composition is from 1:1 to 25:1. In some embodiments, the weight ratio of the compound of Formula I to fluopicolide in the combination, mixture or composition is from 1:1 to 30:1. In some embodiments, the weight ratio of the compound of Formula I to fluopicolide in the combination, mixture or composition is from 1:1 to 40:1. In some embodiments, the weight ratio of the compound of Formula I to fluopicolide in the combination, mixture or composition is from 1:1 to 50:1. In some embodiments, the weight ratio of the compound of Formula I to fluopicolide in the combination, mixture or composition is from 1:1 to 60:1. In some embodiments, the weight ratio of the compound of Formula I to fluopicolide in the combination, mixture or composition is from 1:1 to 70:1. In some embodiments, the weight ratio of the compound of Formula I to fluopicolide in the combination, mixture or composition is from 1:1 to 80:1. In some embodiments, the weight ratio of the compound of Formula I to fluopicolide in the combination, mixture or composition is from 1:1 to 90:1. In some embodiments, the weight ratio of the compound of Formula I to fluopicolide in the combination, mixture or composition is from 1:1 to 100:1. In some embodiments, the weight ratio of the compound of Formula I to fluopicolide in the combination, mixture or composition is 1:1. In some embodiments, the weight ratio of the compound of Formula I to fluopicolide in the combination, mixture or composition is 1:1.12. In some embodiments, the weight ratio of the compound of Formula I to fluopicolide in the combination, mixture or composition is 1:1.2. In some embodiments, the weight ratio of the compound of Formula I to fluopicolide in the combination, mixture or composition is 1:1.3. In some embodiments, the weight ratio of the compound of Formula I to fluopicolide in the combination, mixture or composition is 1:1.7. In some embodiments, the weight ratio of the compound of Formula I to fluopicolide in the combination, mixture or composition is 1:1.8. In some embodiments, the weight ratio of the compound of Formula I to fluopicolide in the combination, mixture or composition is 1:2. In some embodiments, the weight ratio of the compound of Formula I to fluopicolide in the combination, mixture or composition is 1:2.5. In some embodiments, the weight ratio of the compound of Formula I to fluopicolide in the combination, mixture or composition is 1:2.6. In some embodiments, the weight ratio of the compound of Formula I to fluopicolide in the combination, mixture or composition is 1:2.7. In some embodiments, the weight ratio of the compound of Formula I to fluopicolide in the combination, mixture or composition is 1:3. In some embodiments, the weight ratio of the compound of Formula I to fluopicolide in the combination, mixture or composition is 1:4. All the possible sub-ranges as well as individual numerical values within that range should be considered to have been specifically disclosed.

In some embodiments, the weight ratio the compound of Formula I to zoxamide in the combination, mixture or composition is from 400:1 to 1:400. In some embodiments, the weight ratio of the compound of Formula I to zoxamide in the combination, mixture or composition is from 200:1 to 1:200. In some embodiments, the weight ratio of the compound of Formula I to zoxamide in the combination, mixture or composition is from 100:1 to 1:100. In some embodiments, the weight ratio of the compound of Formula I to zoxamide in the combination, mixture or composition is from 50:1 to 1:50. In some embodiments, the weight ratio of the compound of Formula I to zoxamide in the combination, mixture or composition is from 40:1 to 1:40. In some embodiments, the weight ratio of the compound of Formula I to zoxamide in the combination, mixture or composition is from 30:1 to 1:30. In some embodiments, the weight ratio of the compound of Formula I to zoxamide in the combination, mixture or composition is from 20:1 to 1:20. In some embodiments, the weight ratio of the compound of Formula I to zoxamide in the combination, mixture or composition is from 10:1 to 1:10. In some embodiments, the weight ratio of the compound of Formula I to zoxamide in the combination, mixture or composition is from 5:1 to 1:5. In some embodiments, the weight ratio of the compound of Formula I to zoxamide in the combination, mixture or composition is from 2:1 to 1:2. In some embodiments, the weight ratio of the compound of Formula I to zoxamide in the combination, mixture or composition is from 1:1 to 1:2. In some embodiments, the weight ratio of the compound of Formula I to zoxamide in the combination, mixture or composition is from 1:1 to 1:3. In some embodiments, the weight ratio of the compound of Formula I to zoxamide in the combination, mixture or composition is from 1:1 to 1:4. In some embodiments, the weight ratio of the compound of Formula I to zoxamide in the combination, mixture or composition is from 1:1 to 1:5. In some embodiments, the weight ratio of the compound of Formula I to zoxamide in the combination, mixture or composition is from 1:1 to 1:6. In some embodiments, the weight ratio of the compound of Formula I to zoxamide in the combination, mixture or composition is from 1:1 to 1:7. In some embodiments, the weight ratio of the compound of Formula I to zoxamide in the combination, mixture or composition is from 1:1 to 1:8. In some embodiments, the weight ratio of the compound of Formula I to zoxamide in the combination, mixture or composition is from 1:1 to 1:9. In some embodiments, the weight ratio of the compound of Formula I to zoxamide in the combination, mixture or composition is from 1:1 to 1:10. In some embodiments, the weight ratio of the compound of Formula I to zoxamide in the combination, mixture or composition is from 1:1 to 1:15. In some embodiments, the weight ratio of the compound of Formula I to zoxamide in the combination, mixture or composition is from 1:1 to 1:20. In some embodiments, the weight ratio of the compound of Formula I to zoxamide in the combination, mixture or composition is from 1:1 to 1:25. In some embodiments, the weight ratio of the compound of Formula I to zoxamide in the combination, mixture or composition is from 1:1 to 1:30. In some embodiments, the weight ratio of the compound of Formula I to zoxamide in the combination, mixture or composition is from 1:1 to 1:40. In some embodiments, the weight ratio of the compound of Formula I to zoxamide in the combination, mixture or composition is from 1:1 to 1:50. In some embodiments, the weight ratio of the compound of Formula I to zoxamide in the combination, mixture or composition is from 1:1 to 1:60. In some embodiments, the weight ratio of the compound of Formula I to zoxamide in the combination, mixture or composition is from 1:1 to 1:70. In some embodiments, the weight ratio of the compound of Formula I to zoxamide in the combination, mixture or composition is from 1:1 to 1:80. In some embodiments, the weight ratio of the compound of Formula I to zoxamide in the combination, mixture or composition is from 1:1 to 1:90. In some embodiments, the weight ratio of the compound of Formula I to zoxamide in the combination, mixture or composition is from 1:1 to 1:100. In some embodiments, the weight ratio of the compound of Formula I to zoxamide in the combination, mixture or composition is from 1:1 to 2:1. In some embodiments, the weight ratio of the compound of Formula I to zoxamide in the combination, mixture or composition is from 1:1 to 3:1. In some embodiments, the weight ratio of the compound of Formula I to zoxamide in the combination, mixture or composition is from 1:1 to 4:1. In some embodiments, the weight ratio of the compound of Formula I to zoxamide in the combination, mixture or composition is from 1:1 to 5:1. In some embodiments, the weight ratio of the compound of Formula I to zoxamide in the combination, mixture or composition is from 1:1 to 6:1. In some embodiments, the weight ratio of the compound of Formula I to zoxamide in the combination, mixture or composition is from 1:1 to 7:1. In some embodiments, the weight ratio of the compound of Formula I to zoxamide in the combination, mixture or composition is from 1:1 to 8:1. In some embodiments, the weight ratio of the compound of Formula I to zoxamide in the combination, mixture or composition is from 1:1 to 9:1. In some embodiments, the weight ratio of the compound of Formula I to zoxamide in the combination, mixture or composition is from 1:1 to 10:1. In some embodiments, the weight ratio of the compound of Formula I to zoxamide in the combination, mixture or composition is from 1:1 to 15:1. In some embodiments, the weight ratio of the compound of Formula I to zoxamide in the combination, mixture or composition is from 1:1 to 20:1. In some embodiments, the weight ratio of the compound of Formula I to zoxamide in the combination, mixture or composition is from 1:1 to 25:1. In some embodiments, the weight ratio of the compound of Formula I to zoxamide in the combination, mixture or composition is from 1:1 to 30:1. In some embodiments, the weight ratio of the compound of Formula I to zoxamide in the combination, mixture or composition is from 1:1 to 40:1. In some embodiments, the weight ratio of the compound of Formula I to zoxamide in the combination, mixture or composition is from 1:1 to 50:1. In some embodiments, the weight ratio of the compound of Formula I to zoxamide in the combination, mixture or composition is from 1:1 to 60:1. In some embodiments, the weight ratio of the compound of Formula I to zoxamide in the combination, mixture or composition is from 1:1 to 70:1. In some embodiments, the weight ratio of the compound of Formula I to zoxamide in the combination, mixture or composition is from 1:1 to 80:1. In some embodiments, the weight ratio of the compound of Formula I to zoxamide in the combination, mixture or composition is from 1:1 to 90:1. In some embodiments, the weight ratio of the compound of Formula I to zoxamide in the combination, mixture or composition is from 1:1 to 100:1. In some embodiments, the weight ratio of the compound of Formula I to zoxamide in the combination, mixture or composition is 1:1. In some embodiments, the weight ratio of the compound of Formula I to zoxamide in the combination, mixture or composition is 1:1.12. In some embodiments, the weight ratio of the compound of Formula I to zoxamide in the combination, mixture or composition is 1:1.2. In some embodiments, the weight ratio of the compound of Formula I to zoxamide in the combination, mixture or composition is 1:1.3. In some embodiments, the weight ratio of the compound of Formula I to zoxamide in the combination, mixture or composition is 1:1.7. In some embodiments, the weight ratio of the compound of Formula I to zoxamide in the combination, mixture or composition is 1:1.8. In some embodiments, the weight ratio of the compound of Formula I to zoxamide in the combination, mixture or composition is 1:2. In some embodiments, the weight ratio of the compound of Formula I to zoxamide in the combination, mixture or composition is 1:2.5. In some embodiments, the weight ratio of the compound of Formula I to zoxamide in the combination, mixture or composition is 1:2.6. In some embodiments, the weight ratio of the compound of Formula I to zoxamide in the combination, mixture or composition is 1:2.7. In some embodiments, the weight ratio of the compound of Formula I to zoxamide in the combination, mixture or composition is 1:3. In some embodiments, the weight ratio of the compound of Formula I to zoxamide in the combination, mixture or composition is 1:4. All the possible sub-ranges as well as individual numerical values within that range should be considered to have been specifically disclosed.

In some embodiments, the weight ratio the compound of Formula I to fosetyl-Al in the combination, mixture or composition is from 400:1 to 1:400. In some embodiments, the weight ratio of the compound of Formula I to fosetyl-Al in the combination, mixture or composition is from 200:1 to 1:200. In some embodiments, the weight ratio of the compound of Formula I to fosetyl-Al in the combination, mixture or composition is from 100:1 to 1:100. In some embodiments, the weight ratio of the compound of Formula I to fosetyl-Al in the combination, mixture or composition is from 50:1 to 1:50. In some embodiments, the weight ratio of the compound of Formula I to fosetyl-Al in the combination, mixture or composition is from 40:1 to 1:40. In some embodiments, the weight ratio of the compound of Formula I to fosetyl-Al in the combination, mixture or composition is from 30:1 to 1:30. In some embodiments, the weight ratio of the compound of Formula I to fosetyl-Al in the combination, mixture or composition is from 20:1 to 1:20. In some embodiments, the weight ratio of the compound of Formula I to fosetyl-Al in the combination, mixture or composition is from 10:1 to 1:10. In some embodiments, the weight ratio of the compound of Formula I to fosetyl-Al in the combination, mixture or composition is from 5:1 to 1:5. In some embodiments, the weight ratio of the compound of Formula I to fosetyl-Al in the combination, mixture or composition is from 2:1 to 1:2. In some embodiments, the weight ratio of the compound of Formula I to fosetyl-Al in the combination, mixture or composition is from 1:1 to 1:2. In some embodiments, the weight ratio of the compound of Formula I to fosetyl-Al in the combination, mixture or composition is from 1:1 to 1:3. In some embodiments, the weight ratio of the compound of Formula I to fosetyl-Al in the combination, mixture or composition is from 1:1 to 1:4. In some embodiments, the weight ratio of the compound of Formula I to fosetyl-Al in the combination, mixture or composition is from 1:1 to 1:5. In some embodiments, the weight ratio of the compound of Formula I to fosetyl-Al in the combination, mixture or composition is from 1:1 to 1:6. In some embodiments, the weight ratio of the compound of Formula I to fosetyl-Al in the combination, mixture or composition is from 1:1 to 1:7. In some embodiments, the weight ratio of the compound of Formula I to fosetyl-Al in the combination, mixture or composition is from 1:1 to 1:8. In some embodiments, the weight ratio of the compound of Formula I to fosetyl-Al in the combination, mixture or composition is from 1:1 to 1:9. In some embodiments, the weight ratio of the compound of Formula I to fosetyl-Al in the combination, mixture or composition is from 1:1 to 1:10. In some embodiments, the weight ratio of the compound of Formula I to fosetyl-Al in the combination, mixture or composition is from 1:1 to 1:15. In some embodiments, the weight ratio of the compound of Formula I to fosetyl-Al in the combination, mixture or composition is from 1:1 to 1:20. In some embodiments, the weight ratio of the compound of Formula I to fosetyl-Al in the combination, mixture or composition is from 1:1 to 1:25. In some embodiments, the weight ratio of the compound of Formula I to fosetyl-Al in the combination, mixture or composition is from 1:1 to 1:30. In some embodiments, the weight ratio of the compound of Formula I to fosetyl-Al in the combination, mixture or composition is from 1:1 to 1:40. In some embodiments, the weight ratio of the compound of Formula I to fosetyl-Al in the combination, mixture or composition is from 1:1 to 1:50. In some embodiments, the weight ratio of the compound of Formula I to fosetyl-Al in the combination, mixture or composition is from 1:1 to 1:60. In some embodiments, the weight ratio of the compound of Formula I to fosetyl-Al in the combination, mixture or composition is from 1:1 to 1:70. In some embodiments, the weight ratio of the compound of Formula I to fosetyl-Al in the combination, mixture or composition is from 1:1 to 1:80. In some embodiments, the weight ratio of the compound of Formula I to fosetyl-Al in the combination, mixture or composition is from 1:1 to 1:90. In some embodiments, the weight ratio of the compound of Formula I to fosetyl-Al in the combination, mixture or composition is from 1:1 to 1:100. In some embodiments, the weight ratio of the compound of Formula I to fosetyl-Al in the combination, mixture or composition is from 1:1 to 2:1. In some embodiments, the weight ratio of the compound of Formula I to fosetyl-Al in the combination, mixture or composition is from 1:1 to 3:1. In some embodiments, the weight ratio of the compound of Formula I to fosetyl-Al in the combination, mixture or composition is from 1:1 to 4:1. In some embodiments, the weight ratio of the compound of Formula I to fosetyl-Al in the combination, mixture or composition is from 1:1 to 5:1. In some embodiments, the weight ratio of the compound of Formula I to fosetyl-Al in the combination, mixture or composition is from 1:1 to 6:1. In some embodiments, the weight ratio of the compound of Formula I to fosetyl-Al in the combination, mixture or composition is from 1:1 to 7:1. In some embodiments, the weight ratio of the compound of Formula I to fosetyl-Al in the combination, mixture or composition is from 1:1 to 8:1. In some embodiments, the weight ratio of the compound of Formula I to fosetyl-Al in the combination, mixture or composition is from 1:1 to 9:1. In some embodiments, the weight ratio of the compound of Formula I to fosetyl-Al in the combination, mixture or composition is from 1:1 to 10:1. In some embodiments, the weight ratio of the compound of Formula I to fosetyl-Al in the combination, mixture or composition is from 1:1 to 15:1. In some embodiments, the weight ratio of the compound of Formula I to fosetyl-Al in the combination, mixture or composition is from 1:1 to 20:1. In some embodiments, the weight ratio of the compound of Formula I to fosetyl-Al in the combination, mixture or composition is from 1:1 to 25:1. In some embodiments, the weight ratio of the compound of Formula I to fosetyl-Al in the combination, mixture or composition is from 1:1 to 30:1. In some embodiments, the weight ratio of the compound of Formula I to fosetyl-Al in the combination, mixture or composition is from 1:1 to 40:1. In some embodiments, the weight ratio of the compound of Formula I to fosetyl-Al in the combination, mixture or composition is from 1:1 to 50:1. In some embodiments, the weight ratio of the compound of Formula I to fosetyl-Al in the combination, mixture or composition is from 1:1 to 60:1. In some embodiments, the weight ratio of the compound of Formula I to fosetyl-Al in the combination, mixture or composition is from 1:1 to 70:1. In some embodiments, the weight ratio of the compound of Formula I to fosetyl-Al in the combination, mixture or composition is from 1:1 to 80:1. In some embodiments, the weight ratio of the compound of Formula I to fosetyl-Al in the combination, mixture or composition is from 1:1 to 90:1. In some embodiments, the weight ratio of the compound of Formula I to fosetyl-Al in the combination, mixture or composition is from 1:1 to 100:1. In some embodiments, the weight ratio of the compound of Formula I to fosetyl-Al in the combination, mixture or composition is 1:1. In some embodiments, the weight ratio of the compound of Formula I to fosetyl-Al in the combination, mixture or composition is 1:1.12. In some embodiments, the weight ratio of the compound of Formula I to fosetyl-Al in the combination, mixture or composition is 1:1.2. In some embodiments, the weight ratio of the compound of Formula I to fosetyl-Al in the combination, mixture or composition is 1:1.3. In some embodiments, the weight ratio of the compound of Formula I to fosetyl-Al in the combination, mixture or composition is 1:1.7. In some embodiments, the weight ratio of the compound of Formula I to fosetyl-Al in the combination, mixture or composition is 1:1.8. In some embodiments, the weight ratio of the compound of Formula I to fosetyl-Al in the combination, mixture or composition is 1:2. In some embodiments, the weight ratio of the compound of Formula I to fosetyl-Al in the combination, mixture or composition is 1:2.5. In some embodiments, the weight ratio of the compound of Formula I to fosetyl-Al in the combination, mixture or composition is 1:2.6. In some embodiments, the weight ratio of the compound of Formula I to fosetyl-Al in the combination, mixture or composition is 1:2.7. In some embodiments, the weight ratio of the compound of Formula I to fosetyl-Al in the combination, mixture or composition is 1:3. In some embodiments, the weight ratio of the compound of Formula I to fosetyl-Al in the combination, mixture or composition is 1:4. All the possible sub-ranges as well as individual numerical values within that range should be considered to have been specifically disclosed.

In some embodiments, the weight ratio the compound of Formula I to mandipropamid in the combination, mixture or composition is from 400:1 to 1:400. In some embodiments, the weight ratio of the compound of Formula I to mandipropamid in the combination, mixture or composition is from 200:1 to 1:200. In some embodiments, the weight ratio of the compound of Formula I to mandipropamid in the combination, mixture or composition is from 100:1 to 1:100. In some embodiments, the weight ratio of the compound of Formula I to mandipropamid in the combination, mixture or composition is from 50:1 to 1:50. In some embodiments, the weight ratio of the compound of Formula I to mandipropamid in the combination, mixture or composition is from 40:1 to 1:40. In some embodiments, the weight ratio of the compound of Formula I to mandipropamid in the combination, mixture or composition is from 30:1 to 1:30. In some embodiments, the weight ratio of the compound of Formula I to mandipropamid in the combination, mixture or composition is from 20:1 to 1:20. In some embodiments, the weight ratio of the compound of Formula I to mandipropamid in the combination, mixture or composition is from 10:1 to 1:10. In some embodiments, the weight ratio of the compound of Formula I to mandipropamid in the combination, mixture or composition is from 5:1 to 1:5. In some embodiments, the weight ratio of the compound of Formula I to mandipropamid in the combination, mixture or composition is from 2:1 to 1:2. In some embodiments, the weight ratio of the compound of Formula I to mandipropamid in the combination, mixture or composition is from 1:1 to 1:2. In some embodiments, the weight ratio of the compound of Formula I to mandipropamid in the combination, mixture or composition is from 1:1 to 1:3. In some embodiments, the weight ratio of the compound of Formula I to mandipropamid in the combination, mixture or composition is from 1:1 to 1:4. In some embodiments, the weight ratio of the compound of Formula I to mandipropamid in the combination, mixture or composition is from 1:1 to 1:5. In some embodiments, the weight ratio of the compound of Formula I to mandipropamid in the combination, mixture or composition is from 1:1 to 1:6. In some embodiments, the weight ratio of the compound of Formula I to mandipropamid in the combination, mixture or composition is from 1:1 to 1:7. In some embodiments, the weight ratio of the compound of Formula I to mandipropamid in the combination, mixture or composition is from 1:1 to 1:8. In some embodiments, the weight ratio of the compound of Formula I to mandipropamid in the combination, mixture or composition is from 1:1 to 1:9. In some embodiments, the weight ratio of the compound of Formula I to mandipropamid in the combination, mixture or composition is from 1:1 to 1:10. In some embodiments, the weight ratio of the compound of Formula I to mandipropamid in the combination, mixture or composition is from 1:1 to 1:15. In some embodiments, the weight ratio of the compound of Formula I to mandipropamid in the combination, mixture or composition is from 1:1 to 1:20. In some embodiments, the weight ratio of the compound of Formula I to mandipropamid in the combination, mixture or composition is from 1:1 to 1:25. In some embodiments, the weight ratio of the compound of Formula I to mandipropamid in the combination, mixture or composition is from 1:1 to 1:30. In some embodiments, the weight ratio of the compound of Formula I to mandipropamid in the combination, mixture or composition is from 1:1 to 1:40. In some embodiments, the weight ratio of the compound of Formula I to mandipropamid in the combination, mixture or composition is from 1:1 to 1:50. In some embodiments, the weight ratio of the compound of Formula I to mandipropamid in the combination, mixture or composition is from 1:1 to 1:60. In some embodiments, the weight ratio of the compound of Formula I to mandipropamid in the combination, mixture or composition is from 1:1 to 1:70. In some embodiments, the weight ratio of the compound of Formula I to mandipropamid in the combination, mixture or composition is from 1:1 to 1:80. In some embodiments, the weight ratio of the compound of Formula I to mandipropamid in the combination, mixture or composition is from 1:1 to 1:90. In some embodiments, the weight ratio of the compound of Formula I to mandipropamid in the combination, mixture or composition is from 1:1 to 1:100. In some embodiments, the weight ratio of the compound of Formula I to mandipropamid in the combination, mixture or composition is from 1:1 to 2:1. In some embodiments, the weight ratio of the compound of Formula I to mandipropamid in the combination, mixture or composition is from 1:1 to 3:1. In some embodiments, the weight ratio of the compound of Formula I to mandipropamid in the combination, mixture or composition is from 1:1 to 4:1. In some embodiments, the weight ratio of the compound of Formula I to mandipropamid in the combination, mixture or composition is from 1:1 to 5:1. In some embodiments, the weight ratio of the compound of Formula I to mandipropamid in the combination, mixture or composition is from 1:1 to 6:1. In some embodiments, the weight ratio of the compound of Formula I to mandipropamid in the combination, mixture or composition is from 1:1 to 7:1. In some embodiments, the weight ratio of the compound of Formula I to mandipropamid in the combination, mixture or composition is from 1:1 to 8:1. In some embodiments, the weight ratio of the compound of Formula I to mandipropamid in the combination, mixture or composition is from 1:1 to 9:1. In some embodiments, the weight ratio of the compound of Formula I to mandipropamid in the combination, mixture or composition is from 1:1 to 10:1. In some embodiments, the weight ratio of the compound of Formula I to mandipropamid in the combination, mixture or composition is from 1:1 to 15:1. In some embodiments, the weight ratio of the compound of Formula I to mandipropamid in the combination, mixture or composition is from 1:1 to 20:1. In some embodiments, the weight ratio of the compound of Formula I to mandipropamid in the combination, mixture or composition is from 1:1 to 25:1. In some embodiments, the weight ratio of the compound of Formula I to mandipropamid in the combination, mixture or composition is from 1:1 to 30:1. In some embodiments, the weight ratio of the compound of Formula I to mandipropamid in the combination, mixture or composition is from 1:1 to 40:1. In some embodiments, the weight ratio of the compound of Formula I to mandipropamid in the combination, mixture or composition is from 1:1 to 50:1. In some embodiments, the weight ratio of the compound of Formula I to mandipropamid in the combination, mixture or composition is from 1:1 to 60:1. In some embodiments, the weight ratio of the compound of Formula I to mandipropamid in the combination, mixture or composition is from 1:1 to 70:1. In some embodiments, the weight ratio of the compound of Formula I to mandipropamid in the combination, mixture or composition is from 1:1 to 80:1. In some embodiments, the weight ratio of the compound of Formula I to mandipropamid in the combination, mixture or composition is from 1:1 to 90:1. In some embodiments, the weight ratio of the compound of Formula I to mandipropamid in the combination, mixture or composition is from 1:1 to 100:1. In some embodiments, the weight ratio of the compound of Formula I to mandipropamid in the combination, mixture or composition is 1:1. In some embodiments, the weight ratio of the compound of Formula I to mandipropamid in the combination, mixture or composition is 1:1.12. In some embodiments, the weight ratio of the compound of Formula I to mandipropamid in the combination, mixture or composition is 1:1.2. In some embodiments, the weight ratio of the compound of Formula I to mandipropamid in the combination, mixture or composition is 1:1.3. In some embodiments, the weight ratio of the compound of Formula I to mandipropamid in the combination, mixture or composition is 1:1.7. In some embodiments, the weight ratio of the compound of Formula I to mandipropamid in the combination, mixture or composition is 1:1.8. In some embodiments, the weight ratio of the compound of Formula I to mandipropamid in the combination, mixture or composition is 1:2. In some embodiments, the weight ratio of the compound of Formula I to mandipropamid in the combination, mixture or composition is 1:2.5. In some embodiments, the weight ratio of the compound of Formula I to mandipropamid in the combination, mixture or composition is 1:2.6. In some embodiments, the weight ratio of the compound of Formula I to mandipropamid in the combination, mixture or composition is 1:2.7. In some embodiments, the weight ratio of the compound of Formula I to mandipropamid in the combination, mixture or composition is 1:3. In some embodiments, the weight ratio of the compound of Formula I to mandipropamid in the combination, mixture or composition is 1:4. All the possible sub-ranges as well as individual numerical values within that range should be considered to have been specifically disclosed.

In some embodiments, the weight ratio the compound of Formula I to cymoxanil in the combination, mixture or composition is from 400:1 to 1:400. In some embodiments, the weight ratio of the compound of Formula I to cymoxanil in the combination, mixture or composition is from 200:1 to 1:200. In some embodiments, the weight ratio of the compound of Formula I to cymoxanil in the combination, mixture or composition is from 100:1 to 1:100. In some embodiments, the weight ratio of the compound of Formula I to cymoxanil in the combination, mixture or composition is from 50:1 to 1:50. In some embodiments, the weight ratio of the compound of Formula I to cymoxanil in the combination, mixture or composition is from 40:1 to 1:40. In some embodiments, the weight ratio of the compound of Formula I to cymoxanil in the combination, mixture or composition is from 30:1 to 1:30. In some embodiments, the weight ratio of the compound of Formula I to cymoxanil in the combination, mixture or composition is from 20:1 to 1:20. In some embodiments, the weight ratio of the compound of Formula I to cymoxanil in the combination, mixture or composition is from 10:1 to 1:10. In some embodiments, the weight ratio of the compound of Formula I to cymoxanil in the combination, mixture or composition is from 5:1 to 1:5. In some embodiments, the weight ratio of the compound of Formula I to cymoxanil in the combination, mixture or composition is from 2:1 to 1:2. In some embodiments, the weight ratio of the compound of Formula I to cymoxanil in the combination, mixture or composition is from 1:1 to 1:2. In some embodiments, the weight ratio of the compound of Formula I to cymoxanil in the combination, mixture or composition is from 1:1 to 1:3. In some embodiments, the weight ratio of the compound of Formula I to cymoxanil in the combination, mixture or composition is from 1:1 to 1:4. In some embodiments, the weight ratio of the compound of Formula I to cymoxanil in the combination, mixture or composition is from 1:1 to 1:5. In some embodiments, the weight ratio of the compound of Formula I to cymoxanil in the combination, mixture or composition is from 1:1 to 1:6. In some embodiments, the weight ratio of the compound of Formula I to cymoxanil in the combination, mixture or composition is from 1:1 to 1:7. In some embodiments, the weight ratio of the compound of Formula I to cymoxanil in the combination, mixture or composition is from 1:1 to 1:8. In some embodiments, the weight ratio of the compound of Formula I to cymoxanil in the combination, mixture or composition is from 1:1 to 1:9. In some embodiments, the weight ratio of the compound of Formula I to cymoxanil in the combination, mixture or composition is from 1:1 to 1:10. In some embodiments, the weight ratio of the compound of Formula I to cymoxanil in the combination, mixture or composition is from 1:1 to 1:15. In some embodiments, the weight ratio of the compound of Formula I to cymoxanil in the combination, mixture or composition is from 1:1 to 1:20. In some embodiments, the weight ratio of the compound of Formula I to cymoxanil in the combination, mixture or composition is from 1:1 to 1:25. In some embodiments, the weight ratio of the compound of Formula I to cymoxanil in the combination, mixture or composition is from 1:1 to 1:30. In some embodiments, the weight ratio of the compound of Formula I to cymoxanil in the combination, mixture or composition is from 1:1 to 1:40. In some embodiments, the weight ratio of the compound of Formula I to cymoxanil in the combination, mixture or composition is from 1:1 to 1:50. In some embodiments, the weight ratio of the compound of Formula I to cymoxanil in the combination, mixture or composition is from 1:1 to 1:60. In some embodiments, the weight ratio of the compound of Formula I to cymoxanil in the combination, mixture or composition is from 1:1 to 1:70. In some embodiments, the weight ratio of the compound of Formula I to cymoxanil in the combination, mixture or composition is from 1:1 to 1:80. In some embodiments, the weight ratio of the compound of Formula I to cymoxanil in the combination, mixture or composition is from 1:1 to 1:90. In some embodiments, the weight ratio of the compound of Formula I to cymoxanil in the combination, mixture or composition is from 1:1 to 1:100. In some embodiments, the weight ratio of the compound of Formula I to cymoxanil in the combination, mixture or composition is from 1:1 to 2:1. In some embodiments, the weight ratio of the compound of Formula I to cymoxanil in the combination, mixture or composition is from 1:1 to 3:1. In some embodiments, the weight ratio of the compound of Formula I to cymoxanil in the combination, mixture or composition is from 1:1 to 4:1. In some embodiments, the weight ratio of the compound of Formula I to cymoxanil in the combination, mixture or composition is from 1:1 to 5:1. In some embodiments, the weight ratio of the compound of Formula I to cymoxanil in the combination, mixture or composition is from 1:1 to 6:1. In some embodiments, the weight ratio of the compound of Formula I to cymoxanil in the combination, mixture or composition is from 1:1 to 7:1. In some embodiments, the weight ratio of the compound of Formula I to cymoxanil in the combination, mixture or composition is from 1:1 to 8:1. In some embodiments, the weight ratio of the compound of Formula I to cymoxanil in the combination, mixture or composition is from 1:1 to 9:1. In some embodiments, the weight ratio of the compound of Formula I to cymoxanil in the combination, mixture or composition is from 1:1 to 10:1. In some embodiments, the weight ratio of the compound of Formula I to cymoxanil in the combination, mixture or composition is from 1:1 to 15:1. In some embodiments, the weight ratio of the compound of Formula I to cymoxanil in the combination, mixture or composition is from 1:1 to 20:1. In some embodiments, the weight ratio of the compound of Formula I to cymoxanil in the combination, mixture or composition is from 1:1 to 25:1. In some embodiments, the weight ratio of the compound of Formula I to cymoxanil in the combination, mixture or composition is from 1:1 to 30:1. In some embodiments, the weight ratio of the compound of Formula I to cymoxanil in the combination, mixture or composition is from 1:1 to 40:1. In some embodiments, the weight ratio of the compound of Formula I to cymoxanil in the combination, mixture or composition is from 1:1 to 50:1. In some embodiments, the weight ratio of the compound of Formula I to cymoxanil in the combination, mixture or composition is from 1:1 to 60:1. In some embodiments, the weight ratio of the compound of Formula I to cymoxanil in the combination, mixture or composition is from 1:1 to 70:1. In some embodiments, the weight ratio of the compound of Formula I to Cymoxanil in the combination, mixture or composition is from 1:1 to 80:1. In some embodiments, the weight ratio of the compound of Formula I to cymoxanil in the combination, mixture or composition is from 1:1 to 90:1. In some embodiments, the weight ratio of the compound of Formula I to cymoxanil in the combination, mixture or composition is from 1:1 to 100:1. In some embodiments, the weight ratio of the compound of Formula I to cymoxanil in the combination, mixture or composition is 1:1. In some embodiments, the weight ratio of the compound of Formula I to cymoxanil in the combination, mixture or composition is 1:1.12. In some embodiments, the weight ratio of the compound of Formula I to cymoxanil in the combination, mixture or composition is 1:1.2. In some embodiments, the weight ratio of the compound of Formula I to cymoxanil in the combination, mixture or composition is 1:1.3. In some embodiments, the weight ratio of the compound of Formula I to cymoxanil in the combination, mixture or composition is 1:1.7. In some embodiments, the weight ratio of the compound of Formula I to cymoxanil in the combination, mixture or composition is 1:1.8. In some embodiments, the weight ratio of the compound of Formula I to cymoxanil in the combination, mixture or composition is 1:2. In some embodiments, the weight ratio of the compound of Formula I to cymoxanil in the combination, mixture or composition is 1:2.5. In some embodiments, the weight ratio of the compound of Formula I to cymoxanil in the combination, mixture or composition is 1:2.6. In some embodiments, the weight ratio of the compound of Formula I to cymoxanil in the combination, mixture or composition is 1:2.7. In some embodiments, the weight ratio of the compound of Formula I to cymoxanil in the combination, mixture or composition is 1:3. In some embodiments, the weight ratio of the compound of Formula I to cymoxanil in the combination, mixture or composition is 1:4. All the possible sub-ranges as well as individual numerical values within that range should be considered to have been specifically disclosed.

In some embodiments, the weight ratio the compound of Formula I to Potassium-phosphonate in the combination, mixture or composition is from 400:1 to 1:400. In some embodiments, the weight ratio of the compound of Formula I to Potassium-phosphonate in the combination, mixture or composition is from 200:1 to 1:200. In some embodiments, the weight ratio of the compound of Formula I to Potassium-phosphonate in the combination, mixture or composition is from 100:1 to 1:100. In some embodiments, the weight ratio of the compound of Formula I to Potassium-phosphonate in the combination, mixture or composition is from 50:1 to 1:50. In some embodiments, the weight ratio of the compound of Formula I to Potassium-phosphonate in the combination, mixture or composition is from 40:1 to 1:40. In some embodiments, the weight ratio of the compound of Formula I to Potassium-phosphonate in the combination, mixture or composition is from 30:1 to 1:30. In some embodiments, the weight ratio of the compound of Formula I to Potassium-phosphonate in the combination, mixture or composition is from 20:1 to 1:20. In some embodiments, the weight ratio of the compound of Formula I to Potassium-phosphonate in the combination, mixture or composition is from 10:1 to 1:10. In some embodiments, the weight ratio of the compound of Formula I to Potassium-phosphonate in the combination, mixture or composition is from 5:1 to 1:5. In some embodiments, the weight ratio of the compound of Formula I to Potassium-phosphonate in the combination, mixture or composition is from 2:1 to 1:2. In some embodiments, the weight ratio of the compound of Formula I to Potassium-phosphonate in the combination, mixture or composition is from 1:1 to 1:2. In some embodiments, the weight ratio of the compound of Formula I to Potassium-phosphonate in the combination, mixture or composition is from 1:1 to 1:3. In some embodiments, the weight ratio of the compound of Formula I to Potassium-phosphonate in the combination, mixture or composition is from 1:1 to 1:4. In some embodiments, the weight ratio of the compound of Formula I to Potassium-phosphonate in the combination, mixture or composition is from 1:1 to 1:5. In some embodiments, the weight ratio of the compound of Formula I to Potassium-phosphonate in the combination, mixture or composition is from 1:1 to 1:6. In some embodiments, the weight ratio of the compound of Formula I to Potassium-phosphonate in the combination, mixture or composition is from 1:1 to 1:7. In some embodiments, the weight ratio of the compound of Formula I to Potassium-phosphonate in the combination, mixture or composition is from 1:1 to 1:8. In some embodiments, the weight ratio of the compound of Formula I to Potassium-phosphonate in the combination, mixture or composition is from 1:1 to 1:9. In some embodiments, the weight ratio of the compound of Formula I to Potassium-phosphonate in the combination, mixture or composition is from 1:1 to 1:10. In some embodiments, the weight ratio of the compound of Formula I to Potassium-phosphonate in the combination, mixture or composition is from 1:1 to 1:15. In some embodiments, the weight ratio of the compound of Formula I to Potassium-phosphonate in the combination, mixture or composition is from 1:1 to 1:20. In some embodiments, the weight ratio of the compound of Formula I to Potassium-phosphonate in the combination, mixture or composition is from 1:1 to 1:25. In some embodiments, the weight ratio of the compound of Formula I to Potassium-phosphonate in the combination, mixture or composition is from 1:1 to 1:30. In some embodiments, the weight ratio of the compound of Formula I to Potassium-phosphonate in the combination, mixture or composition is from 1:1 to 1:40. In some embodiments, the weight ratio of the compound of Formula I to Potassium-phosphonate in the combination, mixture or composition is from 1:1 to 1:50. In some embodiments, the weight ratio of the compound of Formula I to Potassium-phosphonate in the combination, mixture or composition is from 1:1 to 1:60. In some embodiments, the weight ratio of the compound of Formula I to Potassium-phosphonate in the combination, mixture or composition is from 1:1 to 1:70. In some embodiments, the weight ratio of the compound of Formula I to Potassium-phosphonate in the combination, mixture or composition is from 1:1 to 1:80. In some embodiments, the weight ratio of the compound of Formula I to Potassium-phosphonate in the combination, mixture or composition is from 1:1 to 1:90. In some embodiments, the weight ratio of the compound of Formula I to Potassium-phosphonate in the combination, mixture or composition is from 1:1 to 1:100. In some embodiments, the weight ratio of the compound of Formula I to Potassium-phosphonate in the combination, mixture or composition is from 1:1 to 2:1. In some embodiments, the weight ratio of the compound of Formula I to Potassium-phosphonate in the combination, mixture or composition is from 1:1 to 3:1. In some embodiments, the weight ratio of the compound of Formula I to Potassium-phosphonate in the combination, mixture or composition is from 1:1 to 4:1. In some embodiments, the weight ratio of the compound of Formula I to Potassium-phosphonate in the combination, mixture or composition is from 1:1 to 5:1. In some embodiments, the weight ratio of the compound of Formula I to Potassium-phosphonate in the combination, mixture or composition is from 1:1 to 6:1. In some embodiments, the weight ratio of the compound of Formula I to Potassium-phosphonate in the combination, mixture or composition is from 1:1 to 7:1. In some embodiments, the weight ratio of the compound of Formula I to Potassium-phosphonate in the combination, mixture or composition is from 1:1 to 8:1. In some embodiments, the weight ratio of the compound of Formula I to Potassium-phosphonate in the combination, mixture or composition is from 1:1 to 9:1. In some embodiments, the weight ratio of the compound of Formula I to Potassium-phosphonate in the combination, mixture or composition is from 1:1 to 10:1. In some embodiments, the weight ratio of the compound of Formula I to Potassium-phosphonate in the combination, mixture or composition is from 1:1 to 15:1. In some embodiments, the weight ratio of the compound of Formula I to Potassium-phosphonate in the combination, mixture or composition is from 1:1 to 20:1. In some embodiments, the weight ratio of the compound of Formula I to Potassium-phosphonate in the combination, mixture or composition is from 1:1 to 25:1. In some embodiments, the weight ratio of the compound of Formula I to Potassium-phosphonate in the combination, mixture or composition is from 1:1 to 30:1. In some embodiments, the weight ratio of the compound of Formula I to Potassium-phosphonate in the combination, mixture or composition is from 1:1 to 40:1. In some embodiments, the weight ratio of the compound of Formula I to Potassium-phosphonate in the combination, mixture or composition is from 1:1 to 50:1. In some embodiments, the weight ratio of the compound of Formula I to Potassium-phosphonate in the combination, mixture or composition is from 1:1 to 60:1. In some embodiments, the weight ratio of the compound of Formula I to Potassium-phosphonate in the combination, mixture or composition is from 1:1 to 70:1. In some embodiments, the weight ratio of the compound of Formula I to Potassium-phosphonate in the combination, mixture or composition is from 1:1 to 80:1. In some embodiments, the weight ratio of the compound of Formula I to Potassium-phosphonate in the combination, mixture or composition is from 1:1 to 90:1. In some embodiments, the weight ratio of the compound of Formula I to Potassium-phosphonate in the combination, mixture or composition is from 1:1 to 100:1. In some embodiments, the weight ratio of the compound of Formula I to Potassium-phosphonate in the combination, mixture or composition is 1:1. In some embodiments, the weight ratio of the compound of Formula I to Potassium-phosphonate in the combination, mixture or composition is 1:1.12. In some embodiments, the weight ratio of the compound of Formula I to Potassium-phosphonate in the combination, mixture or composition is 1:1.2. In some embodiments, the weight ratio of the compound of Formula I to Potassium-phosphonate in the combination, mixture or composition is 1:1.3. In some embodiments, the weight ratio of the compound of Formula I to Potassium-phosphonate in the combination, mixture or composition is 1:1.7. In some embodiments, the weight ratio of the compound of Formula I to Potassium-phosphonate in the combination, mixture or composition is 1:1.8. In some embodiments, the weight ratio of the compound of Formula I to Potassium-phosphonate in the combination, mixture or composition is 1:2. In some embodiments, the weight ratio of the compound of Formula I to Potassium-phosphonate in the combination, mixture or composition is 1:2.5. In some embodiments, the weight ratio of the compound of Formula I to Potassium-phosphonate in the combination, mixture or composition is 1:2.6. In some embodiments, the weight ratio of the compound of Formula I to Potassium-phosphonate in the combination, mixture or composition is 1:2.7. In some embodiments, the weight ratio of the compound of Formula I to Potassium-phosphonate in the combination, mixture or composition is 1:3. In some embodiments, the weight ratio of the compound of Formula I to Potassium-phosphonate in the combination, mixture or composition is 1:4. All the possible sub-ranges as well as individual numerical values within that range should be considered to have been specifically disclosed.

In some embodiments, the combination, mixture or composition comprises at least one stabilizing surfactant. In some embodiments, the combination, mixture or composition comprises at least two stabilizing surfactants. In some embodiments, the combination, mixture or composition comprises two stabilizing surfactants. In some embodiments, the combination, mixture or composition comprises a stabilizing system.

In some embodiments, one of the stabilizing surfactants is a non-ionic stabilizing surfactant. In some embodiments, the non-ionic stabilizing surfactant is selected from the group consisting of polymers, ester of alkoxylated diethylethanolamine, poly alkylene oxide alcohol ether, and alcohols.

In some embodiments, the polymer is a block polymer of random polymer. In some embodiments, the polymer is a tri-block polymer. In some embodiments, the tri-block polymer is an ABA block polymer. In some embodiments, the polymer has a low HLB (hydrophile-lpophile balance) value, preferably an HLB value of 5. In some embodiments, the polymer is Atlox^{™} 4912 (manufactured and sold by Croda).

In some embodiments, the ester alkoxylated amine is Atlox^{™} 4915 alkoxylated diethylethanolamine, di-ethyl ethanol amine mono-trimerate, or Atlox^{™} 4915 (manufactured and sold by Croda).

In some embodiments, the alkoxylated fatty alcohol is Genapol X080 (manufactured and sold by Clariant), Genapol X 050 (manufactured and sold by Clariant), tridecyl alcohol polyglycol ether, Rhodasurf LA 30 (manufactured and sold by Solvay), Aerosol OT-SE or Aerosol OT-100 (manufactured and sold by Solvay), Rhodacal 70/B (manufactured and sold by Solvay), Arlatone TV (manufactured and sold by Croda), Alkamuls A (manufactured and sold by Solvay), or Alkamuls BR (manufactured and sold by Solvay).

In some embodiments, the alcohol has a short carbon chain of C1-C6. In some embodiments, the alcohol has a long carbon chain of C7-C20.

In some embodiments, the non-ionic stabilizing surfactant is a non-ionic derivative of polyalkylene oxide polyaryl ether.

In some embodiments, one of the stabilizing surfactants is an ionic surfactant. In some embodiments, the ionic stabilizing surfactant is an anionic stabilizing surfactant. Anionic stabilizing surfactant refers to compounds which have an anionic group such as phosphonic salt and sulfonic salt. An example of an ionic surfactant that may be used is sodium dioctyl sulfosuccinate which is manufactured and sold by Solvay as Aerosol^{®} OT-SE.

In some embodiments, the anionic stabilizing surfactant is anionic derivative of polyalkylene oxide polyaryl ether.

In some embodiments, the combination, mixture or composition comprises at least one non-ionic stabilizing surfactant and at least one anionic stabilizing surfactant. In some embodiments, the stabilizing system comprises at least one non-ionic stabilizing surfactant and at least one anionic stabilizing surfactant.

In some embodiments, the combination, mixture or composition comprising a non-ionic stabilizing surfactant and an anionic stabilizing surfactant is a SC composition. In some embodiments, the combination, mixture or composition comprising a non-ionic stabilizing surfactant and an anionic stabilizing surfactant is a SE composition.

In some embodiments, one of the stabilizing surfactants is a derivative of polyalkylene oxide polyaryl ether. In some embodiments, the derivative of polyalkylene oxide polyaryl ether is a nonionic derivative of polyalkylene oxide polyaryl ether. In some embodiments, the derivative of polyalkylene oxide polyaryl ether surfactant is an anionic derivative of polyalkylene oxide polyaryl ether.

In some embodiments, the combination, mixture or composition comprises at least two stabilizing surfactants. In some embodiments, the two stabilizing surfactants comprise two derivatives of polyalkylene oxide polyaryl ether. In some embodiments, the two stabilizing surfactants comprise a non-ionic derivative of polyalkylene oxide polyaryl ether and an anionic derivative of polyalkylene oxide polyaryl ether.

In some embodiments, the non-ionic derivative of polyalkylene oxide polyaryl ether is a compound having an aryl group substituted with at least two aromatic groups.

In some embodiments, the non-ionic derivative of polyalkylene oxide polyaryl ether has the following structure:

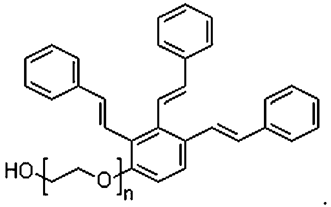

In some embodiments, the non-ionic derivative of polyalkylene oxide polyaryl ether has the following structure:

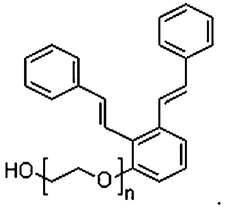

In some embodiments, the anionic derivative of polyalkylene oxide polyaryl ether is a compound having an aryl group substituted with at least two aromatic groups.

In some embodiment, the anionic group of the anionic derivative of polyalkylene oxide polyaryl ether has an anionic group selected from phosphate (PO₄), phosphonate (PO₃), sulfonate (SO₃), and sulfate (SO₄).

Polyalkylene oxides may include but are not limited to polyethylene oxide group, polypropylene oxide, polybutylene oxide and any combination thereof. In some embodiments, the polyalkylene oxide group is a polyethylene oxide. In some embodiments, the polyalkylene oxide group is a polypropylene oxide.

Polyalkylene oxides may include but are not limited to copolymers and homogenous polymers. Copolymers may include but are not limited to random polymer and block polymer. In some embodiments, the polyalkylene oxide group is a di block copolymer. In some embodiments, the polyalkylene oxide group is a tri block copolymer.

In some embodiments, the polyalkylene oxide polyaryl ether is a polyalkylene oxide styryl phenyl ether. In some embodiments, the polyalkylene oxide polyaryl ether is a polyalkylene oxide benzyl phenyl ether. In some embodiments, the polyalkylene oxide polyaryl ether is a polyalkylene oxide bisphenyl ether. In some embodiments, the polyalkylene oxide polyaryl ether is a polyalkylene oxide tristyryl phenyl ether. In some embodiments, the polyalkylene oxide polyaryl ether is a polyalkylene oxide distyryl phenyl ether. In some embodiments, the polyalkylene oxide distyryl phenyl ether is polyoxyethylene distyryl phenyl ether.

In some embodiments, the polyalkylene oxide polyaryl ether is an anionic stabilizing surfactant. Anionic stabilizing surfactant refers to compounds which have an anionic group such as phosphonic salt and sulfonic salt.

In some embodiments, the salt comprises a cation. In some embodiments, the cation is selected from a group consisting of sodium, potassium, ammonium, calcium, magnesium and combinations thereof.

In some embodiments, the anionic derivative of polyalkylene oxide polyaryl ether has the following structure:

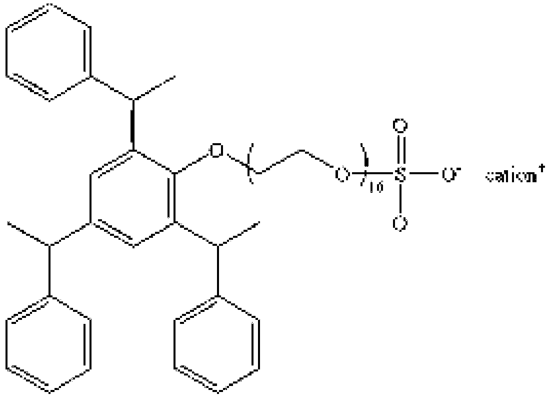

In some embodiments, the anionic derivative of polyalkylene oxide polyaryl ether is tristyrylphenol ethoxylate phosphate ester.

In some embodiments, the polyalkylene oxide polyaryl ether is tristyrylphenol ethoxylate phosphate ester. Preferably, the tristyrylphenol ethoxylate phosphate ester is Soprophor^{®} 3D33 manufactured and sold by Solvay.

In some embodiments, the polyalkylene oxide polyaryl ether is 2,4,6-Tri-(1-phenylethyl)-phenol polyglycol ether with 54 EO. Preferably, the 2,4,6-Tri-(1-phenylethyl)-phenol polyglycol ether with 54 EO is Emulsogen^{®} TS 540 manufactured and sold by Clariant.

In some embodiments, the polyalkylene oxide polyaryl ether is ethoxylated tristyrylphenol. Preferably, the ethoxylated tristyrylphenol is Soprophor^{®} TS/54 manufactured and sold by Solvay.

In some embodiments, the salt comprising cation selected from group consisting of sodium, potassium, ammonium, calcium, magnesium and combination thereof.

Polyalkylene oxide polyaryl ether surfactants may include but is not limited to poly phenyl ethyl phenol and tristyrylphenol.

Polyalkylene oxide polyaryl ethers surfactant may include but is not limited to non-capped surfactants, end-capped surfactants or combination thereof.

In some embodiments, the combination, mixture or composition comprises a two or more stabilizing surfactants and the two stabilizing surfactants are a nonionic polyalkylene oxide polyaryl ether surfactant and an anionic polyalkylene oxide polyaryl ether surfactant. In some embodiments, the nonionic surfactant is tristyrylphenol ethoxylate. In some embodiments, the anionic surfactant is tristyrylphenol ethoxylate phosphate ether.

In some embodiments, the combination, mixture or composition comprises tristyrylphenol ethoxylate and tristyrylphenol ethoxylate phosphate ether.

In some embodiments, the nonionic polyalkylene oxide polyaryl ether is a compound having an ether group substituted with at least two groups comprising aromatic rings.

In some embodiments, the polyalkylene oxide group is a polyoxyethylene. In some embodiments, the polyalkylene oxide group is a polyoxypropylene. In some embodiments, the polyalkylene oxide group is a block copolymer of polyoxyethylene. In some embodiments, the polyalkylene oxide group is a block copolymer of polyoxypropylene.

Polyalkylene oxides may include but are not limited to poly ethoxylated group, poly propoxylated group, poly butoxylated group and any combination thereof.

Polyalkylene oxides may include but are not limited to copolymers and homogenous polymers.

Copolymers may include but are not limited to random polymer and block polymer.

In some embodiments, the polyalkylene oxide polyaryl ether is a polyalkylene oxide tristyryl phenyl ether. In some embodiments the polyalkylene oxide tristyryl phenyl ether is polyoxyethylene tristyryl phenyl ether. In some embodiments, the polyalkylene oxide tristyryl phenyl ether is polyoxyethylene polyoxypropylene tristyryl phenyl ether.

In some embodiments, the polyalkylene oxide polyaryl ether is a polyalkylene oxide distyryl phenyl ether. In some embodiments, the polyalkylene oxide distyryl phenyl ether is polyoxyethylene distyryl phenyl ether.

In some embodiments, non-ionic derivative of a polyalkylene oxide polyaryl ether is tristyrylphenol ethoxylate phosphate ester.

In some embodiments, the stabilizing surfactant is a derivative of tristyryl phenol-polyethylene glycol ether.

In some embodiments, the stabilizing surfactant is an anionic derivative of tristyryl phenol-polyethylene glycol ether.

In some embodiments, the stabilizing surfactant is a non-ionic derivative of tristyryl phenol-polyethylene glycol ether.

In some embodiments, the combination, mixture or composition comprises two stabilizing surfactants and the two stabilizing surfactants are Soprophor 3D33 and Soprophor TS/54 (TSP 54).

In some embodiments, the combination, mixture or composition comprises two stabilizing surfactants and both stabilizing surfactants are derivatives of polyalkylene oxide polyaryl ether. In some embodiments, the combination, mixture or composition comprises two stabilizing surfactants wherein one stabilizing surfactant is a non-ionic derivative of polyalkylene oxide polyaryl ether and one stabilizing surfactant is an anionic derivative of polyalkylene oxide polyaryl ether.

In some embodiments, the combination, mixture or composition comprises at least two stabilizing surfactants wherein at least one stabilizing surfactant is a non-ionic derivative of polyalkylene oxide polyaryl ether and at least one stabilizing surfactant is an anionic derivative of polyalkylene oxide polyaryl ether.

In some embodiments, the combination, mixture or composition comprises two stabilizing surfactants wherein one stabilizing surfactant is a non-ionic derivative of polyalkylene oxide polyaryl ether and one stabilizing surfactant is an anionic derivative of polyalkylene oxide polyaryl ether.

In some embodiments, stabilizing surfactant is Soprophor 3D33.

In some embodiments, stabilizing surfactant is tristyrylphenol ethoxylate phosphate ester.

In some embodiments, the polyalkylene oxide polyaryl ether is Soprophor 3D 33 from Solvay.

In some embodiments, the polyalkylene oxide polyaryl ether is Emulsogen TS 540 from Clariant.

In some embodiments, the polyalkylene oxide polyaryl ether is SOPROPHOR TS/54 from Solvay.

In some embodiments, the salt comprising cation is selected from group consisting of sodium, potassium ammonium, calcium, magnesium and combination thereof.

Polyaryl may refer to but is not limited to poly phenyl ethyl phenol and tristyrylphenol.

Polyalkylene oxide polyaryl ethers surfactant refer to non-capped surfactants, end-capped surfactants or combination thereof.

In some embodiments, the combination of surfactants comprises a mixture of a nonionic polyalkylene oxide polyaryl ether surfactant and an anionic polyalkylene oxide polyaryl ether surfactant. In some embodiments, the nonionic surfactant is tristyrylphenol ethoxylate. In some embodiments, the anionic surfactant is tristyrylphenol ethoxylate phosphate ether.

In some embodiments, the combination of surfactants comprises tristyrylphenol ethoxylate and tristyrylphenol ethoxylate phosphate ether.

In some embodiments, the nonionic polyalkylene oxide polyaryl ether is a compound having an ether group substituted with at least two groups comprising aromatic rings.

In some embodiments, the polyalkylene oxide group is a polyoxyethylene. In some embodiments, the polyalkylene oxide group is a polyoxypropylene. In some embodiments, the polyalkylene oxide group is a block copolymer of polyoxyethylene.

In some embodiments, the polyalkylene oxide group is a block copolymer of polyoxypropylene.

Polyalkylene oxides may include but are not limited to poly ethoxylated group, poly propoxylated group, poly butoxylated group and any combination thereof.

Polyalkylene oxides may include but ae not limited to copolymers and homogenous polymers.

Copolymers may include but are not limited to random polymer and block polymer.

In some embodiments, the polyalkylene oxide polyaryl ether is a polyalkylene oxide tristyryl phenyl ether. In some embodiments the polyalkylene oxide tristyryl phenyl ether is polyoxyethylene tristyryl phenyl ether. In some embodiments, the polyalkylene oxide tristyryl phenyl ether is polyoxyethylene polyoxypropylene tristyryl phenyl ether.

In some embodiments, the polyalkylene oxide polyaryl ether is a polyalkylene oxide distyryl phenyl ether. In some embodiments, the polyalkylene oxide distyryl phenyl ether is polyoxyethylene distyryl phenyl ether.

In some embodiments, nonionic derivative of a polyalkylene oxide polyaryl ether is tristyrylphenol ethoxylate phosphate ester

In some embodiments, stabilizing surfactant is Emulsogen TS 540.

In some embodiments, nonionic derivative of surfactant is Emulsogen TS 540

In some embodiments, stabilizing surfactant is Soprophor TS/54.

In some embodiments, nonionic derivative of a polyalkylene oxide polyaryl ether is Soprophor TS/54

In some embodiments, stabilizing surfactant is anionic derivative of tristyryl phenol-polyethylene glycol ether.

In some embodiments, stabilizing surfactant is nonionic derivative of tristyryl phenol-polyethylene glycol ether.

In some embodiments, the combination, mixture or composition comprises a stabilizing system.

In some embodiments, the weight ratio of the compound of Formula I to the non-ionic derivative of polyalkylene oxide polyaryl ether is from 25:1 to 10:1. In some embodiments, the weight ratio of the compound of Formula I to the anionic derivative of polyalkylene oxide polyaryl ether is from 25:1 to 10:1.

In some embodiments, the combination, mixture or composition further comprises a phytologically acceptable adjuvant.

In some embodiments, the phytologically acceptable adjuvant is selected from the group consisting of:
(i) polyalkylene oxide alkyl ether;
(ii) siloxane polyalkyleneoxide copolymer;
(iii) esters of fatty acid;
(iv) vinylpyrrolidones and derivatives thereof; and
(v) sugar-based surfactants.

In some embodiments, the polyalkylene oxide alkyl ether is poly alkoxylated alcohol.

In some embodiments, the alkyl of the polyalkylene oxide alkyl ether comprises, but is not limited to, carbohydrate chain comprising C1-C26.

In some embodiments, the alcohol of the poly alkoxylated alcohol comprises, but is not limited to, carbohydrate chain of C1-C26.

In some embodiments, the alkyl of the polyalkylene oxide alkyl ethers comprises, but is not limited to, short carbohydrate chain and long carbohydrate chain.

Carbohydrate chains may refer, but are not limited, to saturated, unsaturated, branched and unbranched chains.

In some embodiments, short chain refers to C1-C8. In some embodiments, long chain refers to C9-C26.

In some embodiments, the polyalkylene oxide refers but is not limited to polyethylene oxide, polypropylene oxide, polybutylene oxide or combinations thereof.

In some embodiments, the polyalkylene oxide includes but is not limited to copolymers. Copolymer refers to block co-polymers, such as polyethylene oxide-polypropylene oxide, and/or random co-polymers, such as ethylene oxide-propylene oxide. In some embodiments, the polyalkylene oxide block copolymer is di block copolymer. In some embodiments, the polyalkylene oxide block copolymer is tri block copolymer.

In some embodiments, the tri block copolymer is polyethylene oxide/polypropylene oxide/polyethylene oxide.

In some embodiments, the polyalkylene oxide alkyl ether is alkyl end capped. In some embodiments, the alkyl includes but is not limited to short carbohydrate chain and long carbohydrate chain. Carbohydrate chains may refer but are not limited to saturated, unsaturated, branched and unbranched chains. In some embodiments, short chain refers to C1-C8.

In some embodiments, polyalkylene oxide alkyl ether is isotridecyl alcohol polyglycol ether.

In some embodiments, the polyalkylene oxide alkyl ether is C16-C18 alcohol ethoxylate propoxylate ether.

In some embodiments, the C16-C18 alcohol ethoxylate propoxylate ether is Ethylan 995 manufactured and sold by Akzo Nobel Agrochemicals. In some embodiments, the C16-C18 alcohol ethoxylate propoxylate ether is Agnique^{®} BP420 manufactured and sold by BASF.

In some embodiments, the polyalkylene oxide alkyl ether is ethoxylate propoxylate alcohol.

In some embodiments, the ethoxylate propoxylate alcohol is Synperonic 13/9 manufactured and sold by Croda. In some embodiments, the ethoxylate propoxylate alcohol is Atplus PFA manufactured and sold by Croda.

In some embodiments, the polyalkylene oxide alkyl ether is iso-tridecyl alcohol polyglycol ether.

In some embodiments, the iso-tridecyl alcohol polyglycol ether is Genapol X80 manufactured and sold by Clariant. In some embodiments, the iso-tridecyl alcohol polyglycol ether is Trycol^{®} manufactured and sold by BASF.

In some embodiments, the polyalkylene oxide alkyl ether is effective for reducing surface tension of the composition and improving spreading of the compound of Formula I on plant leaf. Reducing the surface tension leads to reduced drifting from the leaf.

In some embodiments, the siloxane polyalkylene oxide copolymer refers to organo modified trisiloxane.

In some embodiments, the siloxane polyalkylene oxide copolymer is Break Thru S233 from Evonik. In some embodiments, Siloxane polyalkylene oxide copolymer is Silwett 077 from Momentive.

In some embodiments, the siloxane polyalkylene oxide copolymer is effective for reducing surface tension of the combination, mixture or composition. Silicone surfactant was found efficient agent for reducing surface tension and rapidly spread on of the combination, mixture or composition over lipophilic surfaces.

In some embodiments, the ester of fatty acid may include but is not limited to alkyl ester of fatty acid and plant oil.

In some embodiments, the alky ester comprising carbohydrate chain comprising C10 - C20.

In some embodiments, the alkyl includes but is not limited to short carbohydrate chain Carbohydrate chains may refer but are not limited to saturated, unsaturated, branched and unbranched chains.

In some embodiments, short chain refers to C1-C8. In some embodiments, fatty acid alkyl ester is Rhodaphac PA/23 from Solvay (phosphate ester of ethoxylated fatty alcohol) or Alkamuls VO/2003 (ethoxylated (18EO) fatty acid) from Solvay.

In some embodiments, the adjuvant is tridecyl alcohol ethoxylated or polyoxyethylene (9) isotridecanol.

In some embodiments, plant oil includes but is not limited to vegetable oil and derivatives thereof.

In some embodiments, vegetable oil includes but is not limited to seed oil, coconut oil, rape seed oil, castor oil, soybean oil, palm oil and corn oil.

In some embodiments, derivative of vegetable oil refers to alkyl ester, poly alkylene oxide.

Polyalkylene oxide refers to polyethylene oxide, polypropylene oxide, polybutylene oxide and combination thereof.

In some embodiments, vegetable oil and derivatives thereof include but is not limited to rapeseed oil methylated ester and coconut fatty acid ester of polyglycerol ether.

In some embodiments, the adjuvant is a mixture of methylated seed oil and polyglycerol ester.

In some embodiments, the rapeseed oil methylated ester is Agnique ME 18 RDF manufactured and sold by BASF.

In some embodiments, the polyalkylene oxide derivative of vegetable oil is coconut fatty acid ester of polyglycerol ether.

In some embodiments, the coconut fatty acid ester of polyglycerol ether is Synergen GL5 manufactured and sold by Clariant.

In some embodiments, the ester of fatty acid softens the leaf's surface properties for better and efficient penetration of the compound of Formula I.

In some embodiments, the derivative of vinylpyrrolidones is a block copolymer of vinylpyrrolidone and vinyl acetate (VP/VA).

In some embodiments, the block copolymer of vinylpyrrolidone and vinyl acetate is Sokalan VA 64 P manufactured and sold by Ashland.

In some embodiments, the block copolymer of vinylpyrrolidone and vinyl acetate is Agrimer VA 6 manufactured and sold by Ashland.

In some embodiments, the vinylpyrrolidones (PVP) and derivatives thereof are effective for increasing adherence of the compound of Formula I to plant leaves, for improvement of adhesive and retention properties (e.g. for rain fastness).

Sugar-based surfactants may include but are not limited to sorbitan esters, sucrose esters, alkyl polyglycosides, and fatty acid glucamides.

In some embodiments, the sugar-based surfactant is alkyl or fatty acid derivative of lglucamides.

In some embodiments, the sugar-based surfactant is alkylglucamides.

In some embodiments, the fatty acid glucamide is C8/C10 fatty acid glucose amide.

In some embodiments, the C8/C10 fatty acid glucose amide is synergen GA from Clariant.

In some embodiments, the sugar-based surfactant is sorbitan and derivatives thereof.

In some embodiments, the derivative of sorbitan is poly ethylene oxide derivative and fatty acid ester.

In some embodiments, the sorbitan is di or tri fatty acid ester. In some embodiments, the derivative of sorbitan is poly ethylene oxide derivative comprising 20 to 80 groups of ethylene oxide.

In some embodiments, the derivative of sorbitan is Tween 80.

In some embodiments, the sugar-based surfactant affects the leaf surface for improving the penetration of the compound of Formula I through the leaf surface.

In some embodiments, the combination, mixture or composition comprises a multi adjuvants system. Multi adjuvants system refers to blend or any combination of adjuvants.

In some embodiments, the combination, mixture or composition comprises at least two adjuvants. In some embodiments, the combination, mixture or composition comprises at least three adjuvants.

In some embodiments, blend of adjuvant includes but is not limited to combination of alkyl fatty acid ester and fatty alcohol alkoxyklate.

In some embodiments, to the combination of alkyl fatty acid ester and fatty alcohol alkoxylate is Synergen SOC manufactured and sold by Clariant.

In some embodiments, to the combination of alkyl fatty acid ester and fatty alcohol alkoxylate is FOP manufactured and sold by Clariant.

In some embodiments, a blend of adjuvant includes but is not limited to combination of plant oil and /or derivative thereof and sugar-based surfactant.

In some embodiments, the combination, mixture or composition comprises a pH adjuster.

In some embodiments, the pH adjusters may include but are not limited to buffers, bases and/or acidifiers.

In some embodiments the pH adjuster is an acid. In some embodiments the pH adjuster is a base.

In some embodiments the pH adjuster is a mixture of at least one base and at least one acid.

In some embodiments, the pH adjuster is a buffer.

Buffers refer to combinations of acids and bases. Acids include but are not limited to organic and inorganic acids. Bases include but are not limited to organic and inorganic bases.

Organic acids may include but are not limited to citric acid, formic acid, acetic acid, propionic acid, butyric acid, oxalic acid, lactic acid, malic acid, and benzoic acid.

Inorganic acids may include but are not limited to hydrochloric acid, nitric acid, phosphoric acid, sulfuric acid and boric acid.

Organic bases may include but are not limited to primary and secondary amines, pyridines, imidazole and any combination thereof.

In some embodiments, the pH adjuster is potassium hydrogen phosphate.

In some embodiments, the pH adjuster is combination of disodium mono hydrogen phosphate and potassium hydrogen phosphate.

The present invention provides a composition comprising any one of the combinations or mixtures described herein.

The present invention provides a fungicidal composition, comprising: (i) an amount of a compound of Formula I 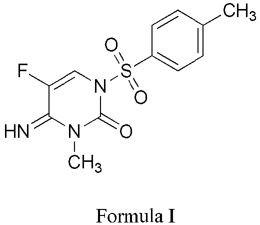 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.

The present invention provides a synergistic fungicidal composition, comprising: (i) an amount of a compound of Formula I 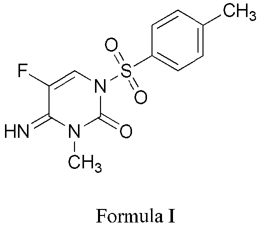 and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.

The present invention provides a fungicidal composition, comprising: (i) an amount of a compound of Formula I 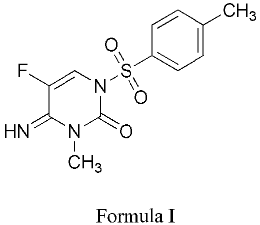
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin,
wherein the composition is more effective in treating a plant or locus against fungal infection than when each fungicide at the same amount is applied alone.

The present invention provides a fungicidal composition, comprising: (i) an amount of a compound of Formula I 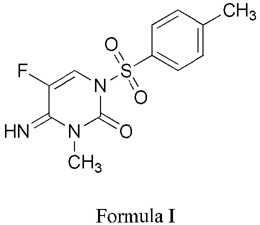
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin,
wherein the amount of the compound of Formula I and the amount of the fungicide (A) when applied together is more effective in treating a plant or locus against fungal infection than when each fungicide at the same amount is applied alone.

The present invention provides a fungicidal composition, comprising: (i) an amount of a compound of Formula I 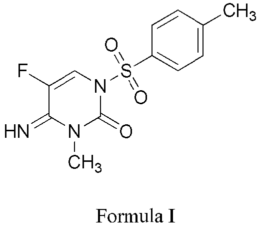
and (ii) an amount of an at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin,
wherein the amount of the compound of Formula I applied is less than the fungicidally effective amount of the compound of Formula I when the compound of Formula I is used alone, and/or
wherein the amount of the fungicide (A) applied is less than the fungicidally effective amount of the fungicide (A) when the fungicide (A) is used alone.

In some embodiments, the composition comprises the compound of Formula I in an amount ranging from about 0.1% to 90% by weight based on the total weight of the composition, preferably from about 0.1% to 20% by weight based on the total weight of the composition.

In some embodiments, the composition comprises fungicide (A) in an amount ranging from about 0.1% to 90% by weight based on the total weight of the composition, preferably from about 0.1% to 20% by weight based on the total weight of the composition.

In some embodiments, the amount of the compound of Formula I in the composition is from about 0.1%, 0.5%, 1%, 1.5%, 2%, 2.5%, 3%, 3.5%, 4%, 4.5%, or 5% to about 90%, 93%, 95%, 98%, or 99% by weight based on the total weight of the composition.

In some embodiments, the amount of the fungicide (A) in the composition is from about 0.1%, 0.5%, 1%, 1.5%, 2%, 2.5%, 3%, 3.5%, 4%, 4.5%, or 5% to about 90%, 93%, 95%, 98%, or 99% by weight based on the total weight of the composition.

In some embodiments, the amount of the compound of Formula I in the composition is about 0.1%, 0.5%, 1%, 1.5%, 2%, 2.5%, 3%, 3.5%, 4%, 4.5%, 5%, 10%, 15%, 20%, 25%, 30%, 35%, 40%, 45%, 50%, 55%, 60%, 65%, 70%, 75%, 80%, 85%, 90% or 95% by weight based on the total weight of the composition.

In some embodiments, the amount of the fungicide (A) in the composition is about 0.1%, 0.5%, 1%, 1.5%, 2%, 2.5%, 3%, 3.5%, 4%, 4.5%, 5%, 10%, 15%, 20%, 25%, 30%, 35%, 40%, 45%, 50%, 55%, 60%, 65%, 70%, 75%, 80%, 85%, 90% or 95% by weight based on the total weight of the composition.

In some embodiments, the weight ratio of the compound of Formula I to fungicide (A) in the composition lies within the range of about 400:1 to 1:400. In some embodiments, the weight ratio of the compound of Formula I to fungicide (A) in the composition lies within the range of about 200:1 to 1:200. In some embodiments, the weight ratio of the compound of Formula I to fungicide (A) in the composition lies within the range of about 100:1 to 1:100. In some embodiments, the weight ratio of the compound of Formula I to fungicide (A) in the composition lies within the range of about 50:1 to 1:50. In some embodiments, the weight ratio of the compound of Formula I to fungicide (A) in the composition lies within the range of about 40:1 to 1:40. In some embodiments, the weight ratio of the compound of Formula I to fungicide (A) in the composition lies within the range of about 30:1 to 1:30. In some embodiments, the weight ratio of the compound of Formula I to fungicide (A) in the composition lies within the range of about 20:1 to 1:20.In some embodiments, the weight ratio of the compound of Formula I to fungicide (A) in the composition lies within the range of about 10:1 to 1:10. In some embodiments, the weight ratio of the compound of Formula I to fungicide (A) in the composition lies within the range of about 5:1 to 1:5. In some embodiments, the weight ratio of the compound of Formula I to fungicide (A) in the composition lies within the range of about 2:1 to 1:2. In some embodiments, the weight ratio of the compound of Formula I to fungicide (A) in the composition lies within the range of about 1:1 to 1:2. In some embodiments, the weight ratio of the compound of Formula I to fungicide (A) in the composition lies within the range of about 1:1 to 1:3. In some embodiments, the weight ratio of the compound of Formula I to fungicide (A) in the composition lies within the range of about 1:1 to 1:4. In some embodiments, the weight ratio of the compound of Formula I to fungicide (A) in the composition lies within the range of about 1:1 to 1:5. In some embodiments, the weight ratio of the compound of Formula I to fungicide (A) in the composition lies within the range of about 1:1 to 1:6. In some embodiments, the weight ratio of the compound of Formula I to fungicide (A) in the composition lies within the range of about 1:1 to 1:7. In some embodiments, the weight ratio of the compound of Formula I to fungicide (A) in the composition lies within the range of about 1:1 to 1:8. In some embodiments, the weight ratio of the compound of Formula I to fungicide (A) in the composition lies within the range of about 1:1 to 1:9. In some embodiments, the weight ratio of the compound of Formula I to fungicide (A) in the composition lies within the range of about 1:1 to 1:10. In some embodiments, the weight ratio of the compound of Formula I to fungicide (A) in the composition lies within the range of about 1:1 to 1:15. In some embodiments, the weight ratio of the compound of Formula I to fungicide (A) in the composition lies within the range of about 1:1 to 1:20. In some embodiments, the weight ratio of the compound of Formula I to fungicide (A) in the composition lies within the range of about 1:1 to 1:25. In some embodiments, the weight ratio of the compound of Formula I to fungicide (A) in the composition lies within the range of about 1:1 to 1:30. In some embodiments, the weight ratio of the compound of Formula I to fungicide (A) in the composition lies within the range of about1:1 to 1:40. In some embodiments, the weight ratio of the compound of Formula I to fungicide (A) in the composition lies within the range of about 1:1 to 1:50. In some embodiments, the weight ratio of the compound of Formula I to fungicide (A) in the composition lies within the range of about 1:1 to 1:60. In some embodiments, the weight ratio of the compound of Formula I to fungicide (A) in the composition lies within the range of about 1:1 to 1:70. In some embodiments, the weight ratio of the compound of Formula I to fungicide (A) in the composition lies within the range of about 1:1 to 1:80. In some embodiments, the weight ratio of the compound of Formula I to fungicide (A) in the composition lies within the range of about 1:1 to 1:90. In some embodiments, the weight ratio of the compound of Formula I to fungicide (A) in the composition lies within the range of about 1:1 to 1:100. In some embodiments, the weight ratio of the compound of Formula I to fungicide (A) in the composition lies within the range of about 1:1 to 2:1. In some embodiments, the weight ratio of the compound of Formula I to fungicide (A) in the composition lies within the range of about 1:1 to 3:1. In some embodiments, the weight ratio of the compound of Formula I to fungicide (A) i in the composition lies within the range of about 1:1 to 4:1. In some embodiments, the weight ratio of the compound of Formula I to fungicide (A) in the composition lies within the range of about 1:1 to 5:1. In some embodiments, the weight ratio of the compound of Formula I to fungicide (A) in the composition lies within the range of about 1:1 to 6:1. In some embodiments, the weight ratio of the compound of Formula I to fungicide (A) in the composition lies within the range of about 1:1 to 7:1. In some embodiments, the weight ratio of the compound of Formula I to fungicide (A) in the composition lies within the range of about 1:1 to 8:1. In some embodiments, the weight ratio of the compound of Formula I to fungicide (A) in the composition lies within the range of about 1:1 to 9:1. In some embodiments, the weight ratio of the compound of Formula I to fungicide (A) in the composition lies within the range of about 1:1 to 10:1. In some embodiments, the weight ratio of the compound of Formula I to fungicide (A) in the composition lies within the range of about 1:1 to 15:1. In some embodiments, the weight ratio of the compound of Formula I to fungicide (A) in the composition lies within the range of about 1:1 to 20:1. In some embodiments, the weight ratio of the compound of Formula I to fungicide (A) in the composition lies within the range of about 1:1 to 25:1. In some embodiments, the weight ratio of the compound of Formula I to fungicide (A) in the composition lies within the range of about 1:1 to 30:1. In some embodiments, the weight ratio of the compound of Formula I to fungicide (A) in the composition lies within the range of about 1:1 to 40:1. In some embodiments, the weight ratio of the compound of Formula I to fungicide (A) in the composition lies within the range of about 1:1 to 50:1. In some embodiments, the weight ratio of the compound of Formula I to fungicide (A) in the composition lies within the range of about 1:1 to 60:1. In some embodiments, the weight ratio of the compound of Formula I to fungicide (A) in the composition lies within the range of about 1:1 to 70:1. In some embodiments, the weight ratio of the compound of Formula I to fungicide (A) in the composition lies within the range of about 1:1 to 80:1. In some embodiments, the weight ratio of the compound of Formula I to fungicide (A) in the composition lies within the range of about 1:1 to 90:1. In some embodiments, the weight ratio of the compound of Formula I to fungicide (A) in the composition lies within the range of about 1:1 to 100:1.

In some embodiments, the weight ratio of the compound of Formula I to fungicide (A) in the composition is 1:1. In some embodiments, the weight ratio of the compound of Formula I to fungicide (A) in the composition is 1:1.2. In some embodiments, the weight ratio of the compound of Formula I to fungicide (A) in the composition is 1:1.3. In some embodiments the weight ratio of the compound of Formula I to fungicide (A) in the composition is 1:1.7. In some embodiments, the weight ratio of the compound of Formula I to fungicide (A) in the composition is 1:1.8. In some embodiments the weight ratio of the compound of Formula I to fungicide (A) in the composition is 1:2. In some embodiments the weight ratio of the compound of Formula I to fungicide (A) in the composition is 1:2.5. In some embodiments, the weight ratio of the compound of Formula I to fungicide (A) in the composition is 1:2.6. In some embodiments, the weight ratio of the compound of Formula I to fungicide (A) in the composition is 1:2.7. In some embodiments the weight ratio of the compound of Formula I to fungicide (A) in the composition is 1:3. In some embodiments the weight ratio of the compound of Formula I to fungicide (A) in the composition is 1:4.

In some embodiments, the composition further comprises a phytologically acceptable carrier.

In some embodiments, the composition further comprises a phytologically acceptable adjuvant.

In some embodiments, the composition further comprising at least one pesticide.

In some embodiments, the composition is formulated for dilution in water before application.

In some embodiments, the composition is a concentrated formulation which can be dispersed in water, or another liquid, for application. In some embodiments, the composition is dust-like or granular, which can then be applied without further treatment. The compositions disclosed herein can be prepared according to procedures which are conventional in the agricultural chemical art, but which are novel and important because of the synergistic effect they have.

The compositions that are applied most often are aqueous suspensions or emulsions. Either such water-soluble, water-suspendable, or emulsifiable formulations are solids, usually known as wettable powders, or liquids, usually known as emulsifiable concentrates, aqueous suspensions, or suspension concentrates. The present disclosure contemplates all vehicles by which the synergistic compositions can be formulated for delivery and used as fungicide.

Wettable powders, which may be compacted to form water-dispersible granules, comprise an intimate mixture of the synergistic composition, a carrier and agriculturally acceptable surfactants. The concentration of the disclosed composition in the wettable powder is usually from about 10% to about 90% by weight, more preferably about 25% to about 75% by weight, based on the total weight of the formulation. In the preparation of wettable powder formulations, the synergistic composition can be compounded with any of the finely divided solids,

As will be readily appreciated, any material to which the disclosed compositions can be added may be used, provided they yield the desired utility without significant interference with the activity of these synergistic mixtures or compositions as antifungal agents.

### Methods of Use

The present invention provides a method for treating a plant or locus against fungal infection comprising applying (i) an amount of a compound of Formula I 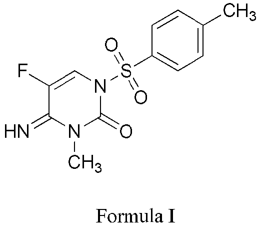 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin to the plant or locus, so as to thereby treat the plant or locus against fungal infection.

The present invention provides a method for treating a plant or locus against fungal infection comprising applying (i) an amount of a compound of Formula I 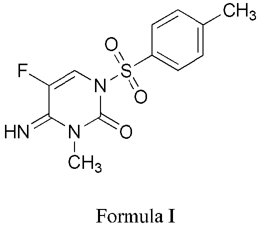
and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin to the plant or locus, so as to thereby treat the plant or locus against fungal infection,
wherein the method is more effective in treating a plant or locus against fungal infection than when each fungicide at the same amount is applied alone.

The present invention provides a method for treating a plant or locus against fungal infection comprising applying (i) an amount of a compound of Formula I 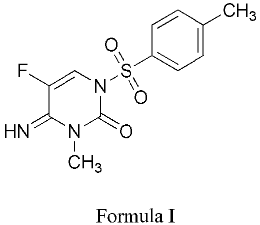
and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin to the plant or locus, so as to thereby treat the plant or locus against fungal infection,
wherein the amount of the compound of Formula I and the amount of the fungicide (A) when applied together is more effective in treating a plant or locus against fungal infection than when each fungicide at the same amount is applied alone.

The present invention provides a method for treating a plant or locus against fungal infection comprising applying (i) an amount of a compound of Formula I 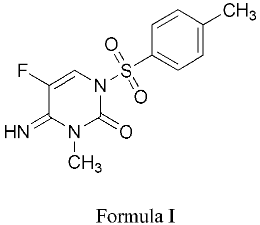
and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin to the plant or locus, so as to thereby treat the plant or locus against fungal infection,
wherein the amount of the compound of Formula I applied is less than the fungicidally effective amount of the compound of Formula I when the compound of Formula I is used alone, and/or
wherein the amount of the fungicide (A) applied is less than the fungicidally effective amount of the fungicide (A) when the fungicide (A) is used alone.

The present invention also provides a method of treating a plant or locus against fungal infection comprising applying an effective amount of any one of the combinations, mixtures, or compositions disclosed herein to the plant or locus so as to thereby treat the plant or locus against fungal infection.

In some embodiments, the method is more effective in treating a plant or locus against fungal infection than when each fungicide at the same amount is applied alone.

In some embodiments, the amount of the compound of Formula I and the amount of the fungicide (A) when applied together is more effective in treating a plant or locus against fungal infection than when each fungicide at the same amount is applied alone.

In some embodiments, the amount of the compound of Formula I applied is less than the fungicidally effective amount of the compound of Formula I when the compound of Formula I is used alone. In some embodiments, the amount of the fungicide (A) applied is less than the fungicidally effective amount of the fungicide (A) when the fungicide (A) is used alone.

In some embodiments, the method is effective for controlling fungal infection of the plant or locus.

In some embodiments, controlling fungal infection comprises controlling fungal disease infecting the plant or locus. In some embodiments, controlling fungal infection comprises controlling a plant or soil disease caused by phytopathologic fungi. In some embodiments, controlling fungal infection comprises controlling fungal attack on the plant or locus. In some embodiments, controlling fungal infection comprises reducing fungal infection of the plant or locus. In some embodiments, controlling fungal infection comprises curing a plant or soil disease caused by phytopathologic fungi.

In some embodiments, the method is effective for protecting the plant or locus against fungal infection.

In some embodiments, protecting the plant or locus against fungal infection comprises protecting the plant or locus against fungal attack. In some embodiments, protecting the plant or locus against fungal infection comprises protecting the plant or locus from fungal disease. In some embodiments, protecting the plant or locus against fungal infection comprises preventing fungal infection of the plant or locus.

In some embodiments, the method comprises applying an effective amount of any one of the combinations, mixtures, or compositions disclosed herein to propagation material of the plant. In some embodiment, the method comprises applying an effective amount of any one of the combinations, mixtures, or compositions disclosed herein to seed and/or seedling of the plant.

In some embodiments, the method comprises a protectant application of any one of the combinations, mixtures or compositions disclosed herein. In some embodiments, the method comprises a curative application of any one of the combinations, mixtures or compositions disclosed herein.

In some embodiments, the method comprises a protectant application of the compound of Formula I and fungicide (A). In some embodiments, the method comprises a curative application of the compound of Formula I and fungicide (A).

In some embodiments, the fungal attack is controlled by preventing fungal attack on the plant, seed or seedling. In some embodiments, the fungal attack is controlled by treating the fungal attack on the plant, seed or seedling.

The present invention also provides a method for controlling a plant disease caused by phytopathologic fungi comprising contacting a plant, propagation material of the plant, or a locus of the plant with an effective amount of any one of the combinations disclosed herein so as to thereby control the plant disease.

The present invention also provides a method for controlling fungal attack on a plant, seed or seedling comprising applying any one of the combinations disclosed herein to the plant, seed, seedling and/or a locus of the plant so as to thereby treat or prevent fungal attack on the plant, seed or seedling.

The present invention also provides a method for controlling fungal attack on a plant, seed or seedling comprising applying any one of the compositions or mixtures disclosed herein to the plant, seed, seedling and/or locus of the plant so as to thereby control fungal attack on the plant, seed or seedling.

The present invention also provides a method of treating a plant, seed or seedling to produce a plant resistant to fungal attack, the method comprising applying any one of the compositions or mixtures disclosed herein to the plant, seed adapted to produce the plant, seeding adapted to produce the plant, or a locus of the plant so as to thereby produce a plant resistant to fungal attack.

The present invention also provides a method of protecting a plant from fungal attack, the method comprising applying any one of the compositions or mixtures disclosed herein to the to the plant, a locus of the plant, or a seed or seedling adapted to produce the plant so as to thereby protect the plant from fungal attack.

The present invention also provides a plant resistant to fungal attack, wherein the seed adapted to produce the plant, the seedling adapted to produce the plant, or a locus of plant is treated with any one of the compositions or mixtures disclosed herein.

The present invention also provides a plant seed or seedling adapted to produce a plant resistant to fungal attack, wherein the plant seed or seedling is treated with any one of the compositions or mixtures disclosed herein.

The present invention also provides a method for the controlling fungal attack on a plant comprising applying any one of the compositions or mixtures described herein to soil, plant, root, foliage, seed, locus of the fungus, and/or a locus in which the infestation is to be prevented so as to thereby control fungal attack on the plant.

The present invention also provides a method for the controlling plant and/or soil fungal diseases comprising applying any one of the compositions or mixtures described herein to soil, plant, root, foliage, seed, locus of the fungus, and/or a locus in which the infestation is to be prevented so as to thereby control plant and/or soil fungal diseases.

The present invention also provides a method for controlling plant disease caused by phytopathologic fungi comprising contacting the plant, propagation material of the plant, or a locus of the plant with (i) an amount of a compound of Formula I 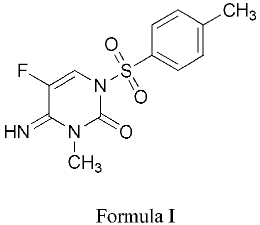 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby control the plant disease.

In some embodiments, the plant disease is controlled by protecting the plant from the plant disease. In some embodiments, the plant disease is controlled by curing the plant disease.

The present invention also provides a method for controlling fungal attack on a plant, seed or seedling comprising applying to the plant, seed, seedling and/or a locus of the plant (i) an amount of a compound of Formula I 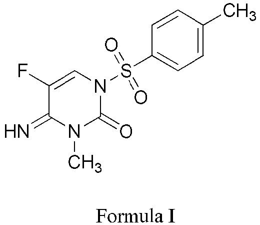 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby control fungal attack on the plant, seed or seedling.

In some embodiments, the fungal attack is controlled by preventing fungal attack on the plant, seed or seedling. In some embodiments, the fungal attack is controlled by treating the fungal attack on the plant, seed or seedling.

The present invention also provides a method for protecting a plant, seed or seedling from fungal attack comprising applying to the plant, seed, seedling and/or locus of the plant (i) an amount of a compound of Formula I 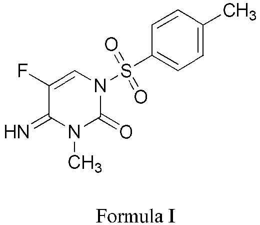 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby protect the plant, seed or seedling from fungal attack.

In some embodiments, the method comprises a protectant application of the compound of Formula I and fungicide (A). In some embodiments, the method comprises a curative application of the compound of Formula I and fungicide (A).

In some embodiments, the method comprises applying the compound of Formula I and fungicide (A) before existence of a fungal pathogen infection. In some embodiments, the method comprises applying the compound of Formula I and fungicide (A) before fungal disease symptoms are shown. In some embodiments, the method comprises applying the compound of Formula I and fungicide (A) when disease pressure is low.

In some embodiments, the method comprises applying the compound of Formula I and fungicide (A) after existence of a fungal pathogen infection. In some embodiments, the method comprises applying the compound of Formula I and fungicide (A) after fungal disease symptoms are shown.

In some embodiments, the method is effective for reducing leaf necrosis. In some embodiments, leaf necrosis is reduced by at least 10%. In some embodiments, leaf necrosis is reduced by at least 25%. In some embodiments, leaf necrosis is reduced by at least 50%. In some embodiments, leaf necrosis is reduced by at least 75%.

In some embodiments, effectiveness of the method is evaluated at least one week after application of the compound of Formula I and the fungicide (A). In some embodiments, effectiveness of the method is evaluated at least two weeks after application of the compound of Formula I and the fungicide (A). In some embodiments, effectiveness of the method is evaluated at least three weeks after application of the compound of Formula I and the fungicide (A). In some embodiments, effectiveness of the method is evaluated at least four weeks after application of the compound of Formula I and the fungicide (A).

In some embodiments, the compound of Formula I and the fungicide (A) are applied simultaneously.

In some embodiments, the compound of Formula I and the fungicide (A) are applied contemporaneously.

In some embodiments, the compound of Formula I and fungicide (A) are applied sequentially.

In some embodiments, the compound of Formula I and the fungicide (A) are applied separately.

In some embodiments, the compound of Formula I and the fungicide (A) are applied together.

In some embodiments, the compound of formula I and the fungicide (A) are applied together as a tank mix. In some embodiments, the compound of formula I and the fungicide (A) are formulated as a single composition. In some embodiments, the compound of formula I and the fungicide (A) are formulated as two separated compositions.

In some embodiments, the compound of Formula I and the fungicide (A) are applied in the form of any one of the combinations, mixtures or compositions disclosed herein.

In some embodiments, the compound of Formula I and the fungicide (A) are applied to a portion of a plant, an area adjacent to a plant, soil in contact with a plant, soil adjacent to a plant, any surface adjacent to a plant, any surface in contact with a plant, a seed, and/or equipment used in agriculture. In some embodiments, the compound of Formula I and the fungicide (A) are applied to a locus of the plant, a locus in proximity to the plant, a locus of the fungi, or a locus in proximity to the fungi. In some embodiments, the compound of Formula I and the fungicide (A) are applied to soil in which the plant is grown. In some embodiments, the compound of Formula I and the fungicide (A) are applied to soil in which the plant is to be grown.

In some embodiments, the compound of Formula I and the fungicide (A) are applied at the time of planting.

In some embodiments, the compound of Formula I and the fungicide (A) are applied 1 to 60 day(s) after planting.

In some embodiments, the compound of Formula I and the fungicide (A) are applied 1 to 9 month(s) after planting.

In some embodiments, the compound of Formula I and the fungicide (A) are applied once during a growth season.

In some embodiments, the compound of Formula I and the fungicide (A) are applied at least one time during a growth season.

In some embodiments, the compound of Formula I and the fungicide (A) are applied two or more times during a growth season.

In some embodiments, the compound of Formula I and the fungicide (A) are applied as a soil application. In some embodiments, the compound of Formula I and the fungicide (A) are applied as a foliar application.

In some embodiments, the compound of Formula I is applied at an amount from 1 g/ha to 500 g/ha. In some embodiments, the compound of Formula I is applied at an amount from 5 g/ha to 400 g/ha. In some embodiments, the compound of Formula I is applied at an amount from 10 g/ha to 300 g/ha. In some embodiments, the compound of Formula I is applied at an amount from 30 g/ha to 200 g/ha. In some embodiments, the compound of Formula I is applied at an amount from 50 g/ha to 200 g/ha. In some embodiments, the compound of Formula I is applied at an amount from 50 g/ha to 100 g/ha. In some embodiments, the compound of Formula I is applied at an amount from 75 g/ha to 100 g/ha. In some embodiments, the compound of Formula I is applied at an amount from 100 g/ha to 200 g/ha.

In some embodiments, the compound of Formula I is applied at an amount of about 1 g/ha. In some embodiments, the compound of Formula I is applied at an amount of about 5 g/ha. In some embodiments, the compound of Formula I is applied at an amount of about 6.25 g/ha. In some embodiments, the compound of Formula I is applied at an amount of about 10 g/ha. In some embodiments, the compound of Formula I is applied at an amount of about 12.5 g/ha. In some embodiments, the compound of Formula I is applied at an amount of about 50 g/ha. In some embodiments, the compound of Formula I is applied at an amount of about 75 g/ha. In some embodiments, the compound of Formula I is applied at an amount of about 100 g/ha. In some embodiments, the compound of Formula I is applied at an amount of about 125 g/ha. In some embodiments, the compound of Formula I is applied at an amount of about 150g/ha. In some embodiments, the compound of Formula I is applied at an amount of about 200 g/ha. In some embodiments, the compound of Formula I is applied at an amount of about 300 g/ha. In some embodiments, the compound of Formula I is applied at an amount of about 500 g/ha.

In some embodiments, the fungicide (A) is applied at an amount from 0.1 g/ha to 4000 g/ha. In some embodiments, the fungicide (A) is applied at an amount from 0. 1 g/ha to 3500 g/ha. In some embodiments, the fungicide (A) is applied at an amount from 0.1 g/ha to 3000 g/ha. In some embodiments, the fungicide (A) is applied at an amount from 0.1 g/ha to 2500 g/ha. In some embodiments, the fungicide (A) is applied at an amount from 0.1 g/ha to 2000 g/ha. In some embodiments, the fungicide (A) is applied at an amount from 0.1 g/ha to 1500 g/ha. In some embodiments, the fungicide (A) is applied at an amount from 0. 1 g/ha to 1000 g/ha. In some embodiments, the fungicide (A) is applied at an amount from 1 g/ha to 850 g/ha. In some embodiments, the fungicide (A) is applied at an amount from 1 g/ha to 750 g/ha. In some embodiments, the fungicide (A) is applied at an amount from 1 g/ha to 550 g/ha. In some embodiments, the fungicide (A) is applied at an amount from 1 g/ha to 500 g/ha. In some embodiments, the fungicide (A) is applied at an amount from 1 g/ha to 400 g/ha. In some embodiments, the fungicide (A) is applied at an amount from 1 g/ha to 300 g/ha. In some embodiments, the fungicide (A) is applied at an amount from 1 g/ha to 250 g/ha. In some embodiments, the fungicide (A) is applied at an amount from 1 g/ha to 200 g/ha. In some embodiments, the fungicide (A) is applied at an amount from 1 g/ha to 100 g/ha. In some embodiments, the fungicide (A) is applied at an amount from 1 g/ha to 50 g/ha. In some embodiments, the fungicide (A) is applied at an amount from 1 g/ha to 40 g/ha. In some embodiments, the fungicide (A) is applied at an amount from 1 g/ha to 30 g/ha. All the possible sub-ranges as well as individual numerical values within that range should be considered to have been specifically disclosed.

In some embodiments, the fungicide (A) is applied at an amount of about 90 g/ha. In some embodiments, the fungicide (A) is applied at an amount of about 100 g/ha. In some embodiments, the fungicide (A) is applied at an amount of about 125 g/ha. In some embodiments, the fungicide (A) is applied at an amount of about 130 g/ha. In some embodiments, the fungicide (A) is applied at an amount of about 150 g/ha. In some embodiments, the fungicide (A) is applied at an amount of about 200 g/ha.

In some embodiments, the ametoctradin is applied at an amount from 50 g/ha to 500 g/ha. In some embodiments, the ametoctradin is applied at an amount from 100 g/ha to 450 g/ha. In some embodiments, the ametoctradin is applied at an amount from 120 g/ha to 400 g/ha. In some embodiments, the ametoctradin is applied at an amount of about 100 g/ha. In some embodiments, the ametoctradin is applied at an amount of about 150 g/ha. In some embodiments, the ametoctradin is applied at an amount of about 200 g/ha. In some embodiments, the ametoctradin is applied at an amount of about 250 g/ha. In some embodiments, the ametoctradin is applied at an amount of about 300 g/ha. In some embodiments, the ametoctradin is applied at an amount of about 350 g/ha. In some embodiments, the ametoctradin is applied at an amount of about 400 g/ha. All the possible sub-ranges as well as individual numerical values within that range should be considered to have been specifically disclosed.

In some embodiments, the carbendazim is applied at an amount from 200 g/ha to 550 g/ha. In some embodiments, the carbendazim is applied at an amount from 250 g/ha to 500 g/ha. In some embodiments, the carbendazim is applied at an amount from 300 g/ha to 400 g/ha. In some embodiments, the carbendazim is applied at an amount of about 200 g/ha. In some embodiments, the carbendazim is applied at an amount of about 250 g/ha. In some embodiments, the carbendazim is applied at an amount of about 300 g/ha. In some embodiments, the carbendazim is applied at an amount of about 350 g/ha. In some embodiments, the carbendazim is applied at an amount of about 400 g/ha. In some embodiments, the carbendazim is applied at an amount of about 450 g/ha. In some embodiments, the carbendazim is applied at an amount of about 500 g/ha. All the possible sub-ranges as well as individual numerical values within that range should be considered to have been specifically disclosed.

In some embodiments, the cymoxanil is applied at an amount from 50 g/ha to 200 g/ha. In some embodiments, the cymoxanil is applied at an amount from 50 g/ha to 150 g/ha. In some embodiments, the cymoxanil is applied at an amount from 75 g/ha to 175 g/ha. In some embodiments, the cymoxanil is applied at an amount from 100 g/ha to 150 g/ha. In some embodiments, the cymoxanil is applied at an amount from 100 g/ha to 120 g/ha. In some embodiments, the cymoxanil is applied at an amount of about 50 g/ha. In some embodiments, the cymoxanil is applied at an amount of about 75 g/ha. In some embodiments, the cymoxanil is applied at an amount of about 100 g/ha. In some embodiments, the cymoxanil is applied at an amount of about 120 g/ha. In some embodiments, the cymoxanil is applied at an amount of about 150 g/ha. In some embodiments, the cymoxanil is applied at an amount of about 175 g/ha. In some embodiments, the cymoxanil is applied at an amount of about 200 g/ha. All the possible sub-ranges as well as individual numerical values within that range should be considered to have been specifically disclosed.

In some embodiments, the cyprodinil is applied at an amount from 50 g/ha to 500 g/ha. In some embodiments, the cyprodinil is applied at an amount from 75 g/ha to 450 g/ha. In some embodiments, the cyprodinil is applied at an amount from 75 g/ha to 400 g/ha. In some embodiments, the cyprodinil is applied at an amount from 100 g/ha to 400 g/ha.

In some embodiments, the cyprodinil is applied at an amount from 150 g/ha to 350 g/ha. In some embodiments, the cyprodinil is applied at an amount from 200 g/ha to 300 g/ha. In some embodiments, the cyprodinil is applied at an amount of about 50 g/ha. In some embodiments, the cyprodinil is applied at an amount of about 75 g/ha. In some embodiments, the cyprodinil is applied at an amount of about 100 g/ha. In some embodiments, the cyprodinil is applied at an amount of about 150 g/ha. In some embodiments, the cyprodinil is applied at an amount of about 200 g/ha. In some embodiments, the cyprodinil is applied at an amount of about 250 g/ha. In some embodiments, the cyprodinil is applied at an amount of about 300 g/ha. In some embodiments, the cyprodinil is applied at an amount of about 350 g/ha. In some embodiments, the cyprodinil is applied at an amount of about 400 g/ha. All the possible sub-ranges as well as individual numerical values within that range should be considered to have been specifically disclosed.

In some embodiments, the dimethomorph is applied at an amount from 50 g/ha to 250 g/ha. In some embodiments, the dimethomorph is applied at an amount from 75 g/ha to 250 g/ha. In some embodiments, the dimethomorph is applied at an amount from 100 g/ha to 200 g/ha. In some embodiments, the dimethomorph is applied at an amount of about 100 g/ha. In some embodiments, the dimethomorph is applied at an amount of about 150 g/ha. In some embodiments, the dimethomorph is applied at an amount of about 200 g/ha. All the possible sub-ranges as well as individual numerical values within that range should be considered to have been specifically disclosed.

In some embodiments, the dithianon is applied at an amount from 50 g/ha to 200 g/ha. In some embodiments, the dithianon is applied at an amount from 75 g/ha to 175 g/ha. In some embodiments, the dithianon is applied at an amount from 100 g/ha to 175 g/ha. In some embodiments, the dithianon is applied at an amount of about 100 g/ha. In some embodiments, the dithianon is applied at an amount of about 150 g/ha. In some embodiments, the dithianon is applied at an amount of about 175 g/ha. All the possible sub-ranges as well as individual numerical values within that range should be considered to have been specifically disclosed.

In some embodiments, the dodine is applied at an amount from 25 g/ha to 250 g/ha. In some embodiments, the dodine is applied at an amount from 50 g/ha to 200 g/ha. In some embodiments, the dodine is applied at an amount from 75 g/ha to 150 g/ha. In some embodiments, the dodine is applied at an amount from 100 g/ha to 150 g/ha. In some embodiments, the dodine is applied at an amount of about 50 g/ha. In some embodiments, the dodine is applied at an amount of about 75 g/ha. In some embodiments, the dodine is applied at an amount of about 100 g/ha. In some embodiments, the dodine is applied at an amount of about 150 g/ha. In some embodiments, the dodine is applied at an amount of about 200 g/ha. All the possible sub-ranges as well as individual numerical values within that range should be considered to have been specifically disclosed.

In some embodiments, the fluazinam is applied at an amount from 50 g/ha to 250 g/ha. In some embodiments, the fluazinam is applied at an amount from 100 g/ha to 200 g/ha. In some embodiments, the fluazinam is applied at an amount of about 50 g/ha. In some embodiments, the fluazinam is applied at an amount of about 75 g/ha. In some embodiments, the fluazinam is applied at an amount of about 100 g/ha. In some embodiments, the fluazinam is applied at an amount of about 150 g/ha. In some embodiments, the fluazinam is applied at an amount of about 200 g/ha. All the possible sub-ranges as well as individual numerical values within that range should be considered to have been specifically disclosed.

In some embodiments, the fluopicolide is applied at an amount from 25 g/ha to 150 g/ha. In some embodiments, the fluopicolide is applied at an amount from 40 g/ha to 130 g/ha. In some embodiments, the fluopicolide is applied at an amount from 75 g/ha to 100 g/ha. In some embodiments, the fluopicolide is applied at an amount of about 40 g/ha. In some embodiments, the fluopicolide is applied at an amount of about 50 g/ha. In some embodiments, the fluopicolide is applied at an amount of about 75 g/ha. In some embodiments, the fluopicolide is applied at an amount of about 100 g/ha. In some embodiments, the fluopicolide is applied at an amount of about 130 g/ha. All the possible sub-ranges as well as individual numerical values within that range should be considered to have been specifically disclosed.

In some embodiments, the fosetyl-Al is applied at an amount from 500 g/ha to 2000 g/ha. In some embodiments, the fosetyl-Al is applied at an amount from 600 g/ha to 1750 g/ha. In some embodiments, the fosetyl-Al is applied at an amount from 600 g/ha to 1500 g/ha. In some embodiments, the fosetyl-Al is applied at an amount from 750 g/ha to 1250 g/ha. In some embodiments, the fosetyl-Al is applied at an amount of about 500 g/ha. In some embodiments, the fosetyl-Al is applied at an amount of about 750 g/ha. In some embodiments, the fosetyl-Al is applied at an amount of about 1000 g/ha. In some embodiments, the fosetyl-Al is applied at an amount of about 1250 g/ha. In some embodiments, the fosetyl-Al is applied at an amount of about 1500 g/ha. All the possible sub-ranges as well as individual numerical values within that range should be considered to have been specifically disclosed.

In some embodiments, the hexaconazole is applied at an amount from 25 g/ha to 150 g/ha. In some embodiments, the hexaconazole is applied at an amount from 50 g/ha to 100 g/ha. In some embodiments, the hexaconazole is applied at an amount of about 50 g/ha. In some embodiments, the hexaconazole is applied at an amount of about 75 g/ha. In some embodiments, the hexaconazole is applied at an amount of about 100 g/ha. All the possible sub-ranges as well as individual numerical values within that range should be considered to have been specifically disclosed.

In some embodiments, the mandipropamid is applied at an amount from 25 g/ha to 750 g/ha. In some embodiments, the mandipropamid is applied at an amount from 40 g/ha to 500 g/ha. In some embodiments, the mandipropamid is applied at an amount from 75 g/ha to 400 g/ha. In some embodiments, the mandipropamid is applied at an amount from 75 g/ha to 300 g/ha. In some embodiments, the mandipropamid is applied at an amount from 75 g/ha to 200 g/ha. In some embodiments, the mandipropamid is applied at an amount from 75 g/ha to 150 g/ha. In some embodiments, the mandipropamid is applied at an amount of about 40 g/ha. In some embodiments, the mandipropamid is applied at an amount of about 75 g/ha. In some embodiments, the mandipropamid is applied at an amount of about 100 g/ha. In some embodiments, the mandipropamid is applied at an amount of about 150 g/ha. In some embodiments, the mandipropamid is applied at an amount of about 200 g/ha. In some embodiments, the mandipropamid is applied at an amount of about 300 g/ha. In some embodiments, the mandipropamid is applied at an amount of about 400 g/ha. In some embodiments, the mandipropamid is applied at an amount of about 500 g/ha. All the possible sub-ranges as well as individual numerical values within that range should be considered to have been specifically disclosed.

In some embodiments, the metalaxyl-m is applied at an amount from 3 to 5 g ai/100 seeds. All the possible sub-ranges as well as individual numerical values within that range should be considered to have been specifically disclosed.

In some embodiments, the oxathiapiprolin is applied at an amount from 5 g/ha to 100 g/ha. In some embodiments, the oxathiapiprolin is applied at an amount from 10 g/ha to 75 g/ha. In some embodiments, the oxathiapiprolin is applied at an amount from 10 g/ha to 50 g/ha. In some embodiments, the oxathiapiprolin is applied at an amount from 10 g/ha to 20 g/ha. In some embodiments, the oxathiapiprolin is applied at an amount of about 10 g/ha. In some embodiments, the oxathiapiprolin is applied at an amount of about 20 g/ha. In some embodiments, the oxathiapiprolin is applied at an amount of about 30 g/ha. In some embodiments, the oxathiapiprolin is applied at an amount of about 40 g/ha. In some embodiments, the oxathiapiprolin is applied at an amount of about 50 g/ha. All the possible sub-ranges as well as individual numerical values within that range should be considered to have been specifically disclosed.

In some embodiments, the potassium-phosphonate is applied at an amount from about 400 g/ha to about 2100 g/ha. In some embodiments, the potassium-phosphonate is applied at an amount from about 500 g/ha to about 2000 g/ha. In some embodiments, the potassium-phosphonate is applied at an amount from about 504 g/ha to about 2016 g/ha. In some embodiments, the potassium-phosphonate is applied at an amount from about 750 g/ha to about 1500 g/ha. In some embodiments, the potassium-phosphonate is applied at an amount from about 1000 g/ha to about 1250 g/ha. In some embodiments, the potassium-phosphonate is applied at an amount of about 500 g/ha. In some embodiments, the potassium-phosphonate is applied at an amount of about 750 g/ha. In some embodiments, the potassium-phosphonate is applied at an amount of about 1000 g/ha. In some embodiments, the potassium-phosphonate is applied at an amount of about 1500 g/ha. In some embodiments, the potassium-phosphonate is applied at an amount of about 2000 g/ha. All the possible sub-ranges as well as individual numerical values within that range should be considered to have been specifically disclosed.

In some embodiments, the propamocarb is applied at an amount from 500 g/ha to 1000 g/ha. In some embodiments, the propamocarb is applied at an amount from 600 g/ha to 850 g/ha. In some embodiments, the propamocarb is applied at an amount of about 600 g/ha. In some embodiments, the propamocarb is applied at an amount of about 700 g/ha.

In some embodiments, the propamocarb is applied at an amount of about 850 g/ha. All the possible sub-ranges as well as individual numerical values within that range should be considered to have been specifically disclosed.

In some embodiments, the pyrimethanil is applied at an amount from 50 g/ha to 300 g/ha. In some embodiments, the pyrimethanil is applied at an amount from 75 g/ha to 250 g/ha. In some embodiments, the pyrimethanil is applied at an amount from 100 g/ha to 200 g/ha. In some embodiments, the pyrimethanil is applied at an amount of about 100 g/ha. In some embodiments, the pyrimethanil is applied at an amount of about 200 g/ha. All the possible sub-ranges as well as individual numerical values within that range should be considered to have been specifically disclosed.

In some embodiments, the sulphur is applied at an amount from 400 g/ha to 4000 g/ha. In some embodiments, the sulphur is applied at an amount from 500 g/ha to 3000 g/ha. In some embodiments, the sulphur is applied at an amount from 800 g/ha to 2600 g/ha. In some embodiments, the sulphur is applied at an amount from 1000 g/ha to 2000 g/ha. In some embodiments, the sulphur is applied at an amount of about 800 g/ha. In some embodiments, the sulphur is applied at an amount of about 1000 g/ha. In some embodiments, the sulphur is applied at an amount of about 1250 g/ha. In some embodiments, the sulphur is applied at an amount of about 1500 g/ha. In some embodiments, the sulphur is applied at an amount of about 1750 g/ha. In some embodiments, the sulphur is applied at an amount of about 2000 g/ha. In some embodiments, the sulphur is applied at an amount of about 2250 g/ha. In some embodiments, the sulphur is applied at an amount of about 2500 g/ha. In some embodiments, the sulphur is applied at an amount of about 2600 g/ha. All the possible sub-ranges as well as individual numerical values within that range should be considered to have been specifically disclosed.

In some embodiments, the thiophanate-m is applied at an amount from 300 g/ha to 1500 g/ha. In some embodiments, the thiophanate-m is applied at an amount from 500 g/ha to 1100 g/ha. In some embodiments, the thiophanate-m is applied at an amount from 750 g/ha to 850 g/ha. In some embodiments, the thiophanate-m is applied at an amount of about 500 g/ha. In some embodiments, the thiophanate-m is applied at an amount of about 750 g/ha. In some embodiments, the thiophanate-m is applied at an amount of about 1000 g/ha. In some embodiments, the thiophanate-m is applied at an amount of about 1100 g/ha. All the possible sub-ranges as well as individual numerical values within that range should be considered to have been specifically disclosed.

In some embodiments, the tricyclazole is applied at an amount from 100 g/ha to 500 g/ha. In some embodiments, the tricyclazole is applied at an amount from 200 g/ha to 400 g/ha. In some embodiments, the tricyclazole is applied at an amount of about 200 g/ha. In some embodiments, the tricyclazole is applied at an amount of about 300 g/ha. In some embodiments, the tricyclazole is applied at an amount of about 400 g/ha. All the possible sub-ranges as well as individual numerical values within that range should be considered to have been specifically disclosed.

In some embodiments, the valifenalate is applied at an amount from 50 g/ha to 250 g/ha. In some embodiments, the valifenalate is applied at an amount from 100 g/ha to 200 g/ha. In some embodiments, the valifenalate is applied at an amount of about 150 g/ha. All the possible sub-ranges as well as individual numerical values within that range should be considered to have been specifically disclosed.

In some embodiments, the zoxamide is applied at an amount from 25 g/ha to 200 g/ha. In some embodiments, the zoxamide is applied at an amount from 35 g/ha to 180 g/ha. In some embodiments, the zoxamide is applied at an amount from 50 g/ha to 100 g/ha. In some embodiments, the zoxamide is applied at an amount of about 35 g/ha. In some embodiments, the zoxamide is applied at an amount of about 50 g/ha. In some embodiments, the zoxamide is applied at an amount of about 75 g/ha. In some embodiments, the zoxamide is applied at an amount of about 90 g/ha. In some embodiments, the zoxamide is applied at an amount of about 100 g/ha. In some embodiments, the zoxamide is applied at an amount of about 125 g/ha. In some embodiments, the zoxamide is applied at an amount of about 150 g/ha. In some embodiments, the zoxamide is applied at an amount of about 180 g/ha. All the possible sub-ranges as well as individual numerical values within that range should be considered to have been specifically disclosed.

In some embodiments, the cyflufenamid is applied at an amount from 5 g/ha to 50 g/ha. In some embodiments, the cyflufenamid is applied at an amount from 5 g/ha to 30 g/ha. In some embodiments, the cyflufenamid is applied at an amount of about 5 g/ha. In some embodiments, the cyflufenamid is applied at an amount of about 10 g/ha. In some embodiments, the cyflufenamid is applied at an amount of about 15 g/ha. In some embodiments, the cyflufenamid is applied at an amount of about 20 g/ha. In some embodiments, the cyflufenamid is applied at an amount of about 25 g/ha. In some embodiments, the cyflufenamid is applied at an amount of about 30 g/ha. All the possible sub-ranges as well as individual numerical values within that range should be considered to have been specifically disclosed.

In some embodiments, the metrafenone is applied at an amount from 50 g/ha to 500 g/ha. In some embodiments, the metrafenone is applied at an amount from 75 g/ha to 400 g/ha. In some embodiments, the metrafenone is applied at an amount from 100 g/ha to 200 g/ha. In some embodiments, the metrafenone is applied at an amount of about 75 g/ha. In some embodiments, the metrafenone is applied at an amount of about 100 g/ha. In some embodiments, the metrafenone is applied at an amount of about 150 g/ha. In some embodiments, the metrafenone is applied at an amount of about 200 g/ha. In some embodiments, the metrafenone is applied at an amount of about 300 g/ha. In some embodiments, the metrafenone is applied at an amount of about 400 g/ha. All the possible sub-ranges as well as individual numerical values within that range should be considered to have been specifically disclosed.

In some embodiments, the pyriofenone is applied at an amount from 10 g/ha to 100 g/ha. In some embodiments, the pyriofenone is applied at an amount from 15 g/ha to 90 g/ha. In some embodiments, the pyriofenone is applied at an amount from 18 g/ha to 90 g/ha. In some embodiments, the pyriofenone is applied at an amount from 25 g/ha to 75 g/ha. In some embodiments, the pyriofenone is applied at an amount of about 20 g/ha. In some embodiments, the pyriofenone is applied at an amount of about 30 g/ha. In some embodiments, the pyriofenone is applied at an amount of about 40 g/ha. In some embodiments, the pyriofenone is applied at an amount of about 50 g/ha. In some embodiments, the pyriofenone is applied at an amount of about 60 g/ha. In some embodiments, the pyriofenone is applied at an amount of about 70 g/ha. In some embodiments, the pyriofenone is applied at an amount of about 80 g/ha. In some embodiments, the pyriofenone is applied at an amount of about 90 g/ha. All the possible sub-ranges as well as individual numerical values within that range should be considered to have been specifically disclosed.

In some embodiments, the bupirimate is applied at an amount from 50 g/ha to 400 g/ha. In some embodiments, the bupirimate is applied at an amount from 75 g/ha to 375 g/ha. In some embodiments, the bupirimate is applied at an amount from 85 g/ha to 300 g/ha. In some embodiments, the bupirimate is applied at an amount from 100 g/ha to 200 g/ha. In some embodiments, the bupirimate is applied at an amount of about 85 g/ha. g/ha. In some embodiments, the bupirimate is applied at an amount of about 100 g/ha. g/ha. In some embodiments, the bupirimate is applied at an amount of about 150 g/ha. g/ha. In some embodiments, the bupirimate is applied at an amount of about 200 g/ha. g/ha. In some embodiments, the bupirimate is applied at an amount of about 250 g/ha. g/ha. In some embodiments, the bupirimate is applied at an amount of about 300 g/ha. g/ha. In some embodiments, the bupirimate is applied at an amount of about 350 g/ha. g/ha. In some embodiments, the bupirimate is applied at an amount of about 375 g/ha. All the possible sub-ranges as well as individual numerical values within that range should be considered to have been specifically disclosed.

In some embodiments, the acibenzolar-S-M is applied at an amount from 0.1 g/ha to 1000 g/ha. In some embodiments, the acibenzolar-S-M is applied at an amount from 10 g/ha to 800 g/ha. In some embodiments, the acibenzolar-S-M is applied at an amount from 50 g/ha to 500 g/ha. In some embodiments, the acibenzolar-S-M is applied at an amount from 100 g/ha to 300 g/ha. All the possible sub-ranges as well as individual numerical values within that range should be considered to have been specifically disclosed.

In some embodiments, the benalaxyl is applied at an amount from 0.1 g/ha to 1000 g/ha. In some embodiments, the benalaxyl is applied at an amount from 10 g/ha to 800 g/ha. In some embodiments, the benalaxyl is applied at an amount from 50 g/ha to 500 g/ha. In some embodiments, the benalaxyl is applied at an amount from 100 g/ha to 300 g/ha. All the possible sub-ranges as well as individual numerical values within that range should be considered to have been specifically disclosed.

In some embodiments, the benomyl is applied at an amount from 0.1 g/ha to 1000 g/ha. In some embodiments, the benomyl is applied at an amount from 10 g/ha to 800 g/ha. In some embodiments, the benomyl is applied at an amount from 50 g/ha to 500 g/ha. In some embodiments, the benomyl is applied at an amount from 100 g/ha to 300 g/ha.

All the possible sub-ranges as well as individual numerical values within that range should be considered to have been specifically disclosed.

In some embodiments, the benthiavalicarb-isopropyl is applied at an amount from 0.1 g/ha to 1000 g/ha. In some embodiments, the benthiavalicarb-isopropyl is applied at an amount from 10 g/ha to 800 g/ha. In some embodiments, the benthiavalicarb-isopropyl is applied at an amount from 50 g/ha to 500 g/ha. In some embodiments, the benthiavalicarb-isopropyl is applied at an amount from 100 g/ha to 300 g/ha. All the possible sub-ranges as well as individual numerical values within that range should be considered to have been specifically disclosed.

In some embodiments, the bordeaux-mixture is applied at an amount from 0.1 g/ha to 1000 g/ha. In some embodiments, the bordeaux-mixture is applied at an amount from 10 g/ha to 800 g/ha. In some embodiments, the bordeaux-mixture is applied at an amount from 50 g/ha to 500 g/ha. In some embodiments, the bordeaux-mixture is applied at an amount from 100 g/ha to 300 g/ha. All the possible sub-ranges as well as individual numerical values within that range should be considered to have been specifically disclosed.

In some embodiments, the bromuconazole is applied at an amount from 0.1 g/ha to 1000 g/ha. In some embodiments, the bromuconazole is applied at an amount from 10 g/ha to 800 g/ha. In some embodiments, the bromuconazole is applied at an amount from 50 g/ha to 500 g/ha. In some embodiments, the bromuconazole is applied at an amount from 100 g/ha to 300 g/ha. All the possible sub-ranges as well as individual numerical values within that range should be considered to have been specifically disclosed.

In some embodiments, the diethofencarb is applied at an amount from 0.1 g/ha to 1000 g/ha. In some embodiments, the diethofencarb is applied at an amount from 10 g/ha to 800 g/ha. In some embodiments, the diethofencarb is applied at an amount from 50 g/ha to 500 g/ha. In some embodiments, the diethofencarb is applied at an amount from 100 g/ha to 300 g/ha. All the possible sub-ranges as well as individual numerical values within that range should be considered to have been specifically disclosed.

In some embodiments, the diniconazole is applied at an amount from 0.1 g/ha to 1000 g/ha. In some embodiments, the diniconazole is applied at an amount from 10 g/ha to 800 g/ha. In some embodiments, the diniconazole is applied at an amount from 50 g/ha to 500 g/ha. In some embodiments, the diniconazole is applied at an amount from 100 g/ha to 300 g/ha. All the possible sub-ranges as well as individual numerical values within that range should be considered to have been specifically disclosed.

In some embodiments, the dinocap is applied at an amount from 0.1 g/ha to 1000 g/ha. In some embodiments, the dinocap is applied at an amount from 10 g/ha to 800 g/ha. In some embodiments, the dinocap is applied at an amount from 50 g/ha to 500 g/ha. In some embodiments, the dinocap is applied at an amount from 100 g/ha to 300 g/ha. All the possible sub-ranges as well as individual numerical values within that range should be considered to have been specifically disclosed.

In some embodiments, the disodium-phosphonate is applied at an amount from 0.1 g/ha to 1000 g/ha. In some embodiments, the disodium-phosphonate is applied at an amount from 10 g/ha to 800 g/ha. In some embodiments, the disodium-phosphonate is applied at an amount from 50 g/ha to 500 g/ha. In some embodiments, the disodium-phosphonate is applied at an amount from 100 g/ha to 300 g/ha. All the possible sub-ranges as well as individual numerical values within that range should be considered to have been specifically disclosed.

In some embodiments, the ethephon is applied at an amount from 0.1 g/ha to 1000 g/ha. In some embodiments, the ethephon is applied at an amount from 10 g/ha to 800 g/ha. In some embodiments, the ethephon is applied at an amount from 50 g/ha to 500 g/ha. In some embodiments, the ethephon is applied at an amount from 100 g/ha to 300 g/ha. All the possible sub-ranges as well as individual numerical values within that range should be considered to have been specifically disclosed.

In some embodiments, the etridiazole is applied at an amount from 0.1 g/ha to 1000 g/ha. In some embodiments, the etridiazole is applied at an amount from 10 g/ha to 800 g/ha. In some embodiments, the etridiazole is applied at an amount from 50 g/ha to 500 g/ha. In some embodiments, the etridiazole is applied at an amount from 100 g/ha to 300 g/ha. All the possible sub-ranges as well as individual numerical values within that range should be considered to have been specifically disclosed.

In some embodiments, the famoxadone is applied at an amount from 0.1 g/ha to 1000 g/ha. In some embodiments, the famoxadone is applied at an amount from 10 g/ha to 800 g/ha. In some embodiments, the famoxadone is applied at an amount from 50 g/ha to 500 g/ha. In some embodiments, the famoxadone is applied at an amount from 100 g/ha to 300 g/ha. All the possible sub-ranges as well as individual numerical values within that range should be considered to have been specifically disclosed.

In some embodiments, the fenamidone is applied at an amount from 0.1 g/ha to 1000 g/ha. In some embodiments, the fenamidone is applied at an amount from 10 g/ha to 800 g/ha. In some embodiments, the fenamidone is applied at an amount from 50 g/ha to 500 g/ha. In some embodiments, the fenamidone is applied at an amount from 100 g/ha to 300 g/ha. All the possible sub-ranges as well as individual numerical values within that range should be considered to have been specifically disclosed.

In some embodiments, the fentin-hydroxide is applied at an amount from 0.1 g/ha to 1000 g/ha. In some embodiments, the fentin-hydroxide is applied at an amount from 10 g/ha to 800 g/ha. In some embodiments, the fentin-hydroxide is applied at an amount from 50 g/ha to 500 g/ha. In some embodiments, the fentin-hydroxide is applied at an amount from 100 g/ha to 300 g/ha. All the possible sub-ranges as well as individual numerical values within that range should be considered to have been specifically disclosed.

In some embodiments, the fludioxonil is applied at an amount from 0.1 g/ha to 1000 g/ha. In some embodiments, the fludioxonil is applied at an amount from 10 g/ha to 800 g/ha. In some embodiments, the fludioxonil is applied at an amount from 50 g/ha to 500 g/ha. In some embodiments, the fludioxonil is applied at an amount from 100 g/ha to 300 g/ha. All the possible sub-ranges as well as individual numerical values within that range should be considered to have been specifically disclosed.

In some embodiments, the flusulfamide is applied at an amount from 0.1 g/ha to 1000 g/ha. In some embodiments, the flusulfamide is applied at an amount from 10 g/ha to 800 g/ha. In some embodiments, the flusulfamide is applied at an amount from 50 g/ha to 500 g/ha. In some embodiments, the flusulfamide is applied at an amount from 100 g/ha to 300 g/ha. All the possible sub-ranges as well as individual numerical values within that range should be considered to have been specifically disclosed.

In some embodiments, the flutolanil is applied at an amount from 0.1 g/ha to 1000 g/ha. In some embodiments, the flutolanil is applied at an amount from 10 g/ha to 800 g/ha.

In some embodiments, the flutolanil is applied at an amount from 50 g/ha to 500 g/ha. In some embodiments, the flutolanil is applied at an amount from 100 g/ha to 300 g/ha. All the possible sub-ranges as well as individual numerical values within that range should be considered to have been specifically disclosed.

In some embodiments, the imazalil is applied at an amount from 0.1 g/ha to 1000 g/ha. In some embodiments, the imazalil is applied at an amount from 10 g/ha to 800 g/ha. In some embodiments, the imazalil is applied at an amount from 50 g/ha to 500 g/ha. In some embodiments, the imazalil is applied at an amount from 100 g/ha to 300 g/ha. All the possible sub-ranges as well as individual numerical values within that range should be considered to have been specifically disclosed.

In some embodiments, the iminoctadine-triacetate is applied at an amount from 0.1 g/ha to 1000 g/ha. In some embodiments, the iminoctadine-triacetate is applied at an amount from 10 g/ha to 800 g/ha. In some embodiments, the iminoctadine-triacetate is applied at an amount from 50 g/ha to 500 g/ha. In some embodiments, the iminoctadine-triacetate is applied at an amount from 100 g/ha to 300 g/ha. All the possible sub-ranges as well as individual numerical values within that range should be considered to have been specifically disclosed.

In some embodiments, the iprodione is applied at an amount from 0.1 g/ha to 1000 g/ha. In some embodiments, the iprodione is applied at an amount from 10 g/ha to 800 g/ha. In some embodiments, the iprodione is applied at an amount from 50 g/ha to 500 g/ha. In some embodiments, the iprodione is applied at an amount from 100 g/ha to 300 g/ha. All the possible sub-ranges as well as individual numerical values within that range should be considered to have been specifically disclosed.

In some embodiments, the iprovalicarb is applied at an amount from 0.1 g/ha to 1000 g/ha. In some embodiments, the iprovalicarb is applied at an amount from 10 g/ha to 800 g/ha. In some embodiments, the iprovalicarb is applied at an amount from 50 g/ha to 500 g/ha. In some embodiments, the iprovalicarb is applied at an amount from 100 g/ha to 300 g/ha. All the possible sub-ranges as well as individual numerical values within that range should be considered to have been specifically disclosed.

In some embodiments, the isoprothiolane is applied at an amount from 0.1 g/ha to 1000 g/ha. In some embodiments, the isoprothiolane is applied at an amount from 10 g/ha to 800 g/ha. In some embodiments, the isoprothiolane is applied at an amount from 50 g/ha to 500 g/ha. In some embodiments, the isoprothiolane is applied at an amount from 100 g/ha to 300 g/ha. All the possible sub-ranges as well as individual numerical values within that range should be considered to have been specifically disclosed.

In some embodiments, the kasugamycin is applied at an amount from 0.1 g/ha to 1000 g/ha. In some embodiments, the kasugamycin is applied at an amount from 10 g/ha to 800 g/ha. In some embodiments, the kasugamycin is applied at an amount from 50 g/ha to 500 g/ha. In some embodiments, the kasugamycin is applied at an amount from 100 g/ha to 300 g/ha. All the possible sub-ranges as well as individual numerical values within that range should be considered to have been specifically disclosed.

In some embodiments, the meptyldinocap is applied at an amount from 0.1 g/ha to 1000 g/ha. In some embodiments, the meptyldinocap is applied at an amount from 10 g/ha to 800 g/ha. In some embodiments, the meptyldinocap is applied at an amount from 50 g/ha to 500 g/ha. In some embodiments, the meptyldinocap is applied at an amount from 100 g/ha to 300 g/ha. All the possible sub-ranges as well as individual numerical values within that range should be considered to have been specifically disclosed.

In some embodiments, the metalaxyl is applied at an amount from 0.1 g/ha to 1000 g/ha. In some embodiments, the metalaxyl is applied at an amount from 10 g/ha to 800 g/ha. In some embodiments, the metalaxyl is applied at an amount from 50 g/ha to 500 g/ha. In some embodiments, the metalaxyl is applied at an amount from 100 g/ha to 300 g/ha. All the possible sub-ranges as well as individual numerical values within that range should be considered to have been specifically disclosed.

In some embodiments, the metominostrobin is applied at an amount from 0.1 g/ha to 1000 g/ha. In some embodiments, the metominostrobin is applied at an amount from 10 g/ha to 800 g/ha. In some embodiments, the metominostrobin is applied at an amount from 50 g/ha to 500 g/ha. In some embodiments, the metominostrobin is applied at an amount from 100 g/ha to 300 g/ha. All the possible sub-ranges as well as individual numerical values within that range should be considered to have been specifically disclosed.

In some embodiments, the oxadixyl is applied at an amount from 0.1 g/ha to 1000 g/ha. In some embodiments, the oxadixyl is applied at an amount from 10 g/ha to 800 g/ha.

In some embodiments, the oxadixyl is applied at an amount from 50 g/ha to 500 g/ha. In some embodiments, the oxadixyl is applied at an amount from 100 g/ha to 300 g/ha. All the possible sub-ranges as well as individual numerical values within that range should be considered to have been specifically disclosed.

In some embodiments, the oxytetracycline is applied at an amount from 0.1 g/ha to 1000 g/ha. In some embodiments, the oxytetracycline is applied at an amount from 10 g/ha to 800 g/ha. In some embodiments, the oxytetracycline is applied at an amount from 50 g/ha to 500 g/ha. In some embodiments, the oxytetracycline is applied at an amount from 100 g/ha to 300 g/ha. All the possible sub-ranges as well as individual numerical values within that range should be considered to have been specifically disclosed.

In some embodiments, the paclobutrazol is applied at an amount from 0.1 g/ha to 1000 g/ha. In some embodiments, the paclobutrazol is applied at an amount from 10 g/ha to 800 g/ha. In some embodiments, the paclobutrazol is applied at an amount from 50 g/ha to 500 g/ha. In some embodiments, the paclobutrazol is applied at an amount from 100 g/ha to 300 g/ha. All the possible sub-ranges as well as individual numerical values within that range should be considered to have been specifically disclosed.

In some embodiments, the penconazole is applied at an amount from 0.1 g/ha to 1000 g/ha. In some embodiments, the penconazole is applied at an amount from 10 g/ha to 800 g/ha. In some embodiments, the penconazole is applied at an amount from 50 g/ha to 500 g/ha. In some embodiments, the penconazole is applied at an amount from 100 g/ha to 300 g/ha. All the possible sub-ranges as well as individual numerical values within that range should be considered to have been specifically disclosed.

In some embodiments, the pencycuron is applied at an amount from 0.1 g/ha to 1000 g/ha. In some embodiments, the pencycuron is applied at an amount from 10 g/ha to 800 g/ha. In some embodiments, the pencycuron is applied at an amount from 50 g/ha to 500 g/ha. In some embodiments, the pencycuron is applied at an amount from 100 g/ha to 300 g/ha. All the possible sub-ranges as well as individual numerical values within that range should be considered to have been specifically disclosed.

In some embodiments, the polyoxins is applied at an amount from 0.1 g/ha to 1000 g/ha. In some embodiments, the polyoxins is applied at an amount from 10 g/ha to 800 g/ha. In some embodiments, the polyoxins is applied at an amount from 50 g/ha to 500 g/ha. In some embodiments, the polyoxins is applied at an amount from 100 g/ha to 300 g/ha. All the possible sub-ranges as well as individual numerical values within that range should be considered to have been specifically disclosed.

In some embodiments, the potassium-bicarbonate is applied at an amount from 0.1 g/ha to 1000 g/ha. In some embodiments, the potassium-bicarbonate is applied at an amount from 10 g/ha to 800 g/ha. In some embodiments, the potassium-bicarbonate is applied at an amount from 50 g/ha to 500 g/ha. In some embodiments, the potassium-bicarbonate is applied at an amount from 100 g/ha to 300 g/ha. All the possible sub-ranges as well as individual numerical values within that range should be considered to have been specifically disclosed.

In some embodiments, the potassium-carbonate is applied at an amount from 0.1 g/ha to 1000 g/ha. In some embodiments, the potassium-carbonate is applied at an amount from 10 g/ha to 800 g/ha. In some embodiments, the potassium-carbonate is applied at an amount from 50 g/ha to 500 g/ha. In some embodiments, the potassium-carbonate is applied at an amount from 100 g/ha to 300 g/ha. All the possible sub-ranges as well as individual numerical values within that range should be considered to have been specifically disclosed.

In some embodiments, the potassium-phosphite-monobasic is applied at an amount from 0.1 g/ha to 1000 g/ha. In some embodiments, the potassium-phosphite-monobasic is applied at an amount from 10 g/ha to 800 g/ha. In some embodiments, the potassium-phosphite-monobasic is applied at an amount from 50 g/ha to 500 g/ha. In some embodiments, the potassium-phosphite-monobasic is applied at an amount from 100 g/ha to 300 g/ha. All the possible sub-ranges as well as individual numerical values within that range should be considered to have been specifically disclosed.

In some embodiments, the probenazole is applied at an amount from 0.1 g/ha to 1000 g/ha. In some embodiments, the probenazole is applied at an amount from 10 g/ha to 800 g/ha. In some embodiments, the probenazole is applied at an amount from 50 g/ha to 500 g/ha. In some embodiments, the probenazole is applied at an amount from 100 g/ha to 300 g/ha. All the possible sub-ranges as well as individual numerical values within that range should be considered to have been specifically disclosed.

In some embodiments, the procymidone is applied at an amount from 0.1 g/ha to 1000 g/ha. In some embodiments, the procymidone is applied at an amount from 10 g/ha to 800 g/ha. In some embodiments, the procymidone is applied at an amount from 50 g/ha to 500 g/ha. In some embodiments, the procymidone is applied at an amount from 100 g/ha to 300 g/ha. All the possible sub-ranges as well as individual numerical values within that range should be considered to have been specifically disclosed.

In some embodiments, the proquinazid is applied at an amount from 0.1 g/ha to 1000 g/ha. In some embodiments, the proquinazid is applied at an amount from 10 g/ha to 800 g/ha. In some embodiments, the proquinazid is applied at an amount from 50 g/ha to 500 g/ha. In some embodiments, the proquinazid is applied at an amount from 100 g/ha to 300 g/ha. All the possible sub-ranges as well as individual numerical values within that range should be considered to have been specifically disclosed.

In some embodiments, the pyribencarb is applied at an amount from 0.1 g/ha to 1000 g/ha. In some embodiments, the pyribencarb is applied at an amount from 10 g/ha to 800 g/ha. In some embodiments, the pyribencarb is applied at an amount from 50 g/ha to 500 g/ha. In some embodiments, the pyribencarb is applied at an amount from 100 g/ha to 300 g/ha. All the possible sub-ranges as well as individual numerical values within that range should be considered to have been specifically disclosed.

In some embodiments, the quinoxyfen is applied at an amount from 0.1 g/ha to 1000 g/ha. In some embodiments, the quinoxyfen is applied at an amount from 10 g/ha to 800 g/ha. In some embodiments, the quinoxyfen is applied at an amount from 50 g/ha to 500 g/ha. In some embodiments, the quinoxyfen is applied at an amount from 100 g/ha to 300 g/ha. All the possible sub-ranges as well as individual numerical values within that range should be considered to have been specifically disclosed.

In some embodiments, the streptomycin is applied at an amount from 0.1 g/ha to 1000 g/ha. In some embodiments, the streptomycin is applied at an amount from 10 g/ha to 800 g/ha. In some embodiments, the streptomycin is applied at an amount from 50 g/ha to 500 g/ha. In some embodiments, the streptomycin is applied at an amount from 100 g/ha to 300 g/ha. All the possible sub-ranges as well as individual numerical values within that range should be considered to have been specifically disclosed.

In some embodiments, the thiabendazole is applied at an amount from 0.1 g/ha to 1000 g/ha. In some embodiments, the thiabendazole is applied at an amount from 10 g/ha to 800 g/ha. In some embodiments, the thiabendazole is applied at an amount from 50 g/ha to 500 g/ha. In some embodiments, the thiabendazole is applied at an amount from 100 g/ha to 300 g/ha. All the possible sub-ranges as well as individual numerical values within that range should be considered to have been specifically disclosed.

In some embodiments, the thifluzamide is applied at an amount from 0.1 g/ha to 1000 g/ha. In some embodiments, the thifluzamide is applied at an amount from 10 g/ha to 800 g/ha. In some embodiments, the thifluzamide is applied at an amount from 50 g/ha to 500 g/ha. In some embodiments, the thifluzamide is applied at an amount from 100 g/ha to 300 g/ha. All the possible sub-ranges as well as individual numerical values within that range should be considered to have been specifically disclosed.

In some embodiments, the thiram is applied at an amount from 0.1 g/ha to 1000 g/ha. In some embodiments, the thiram is applied at an amount from 10 g/ha to 800 g/ha. In some embodiments, the thiram is applied at an amount from 50 g/ha to 500 g/ha. In some embodiments, the thiram is applied at an amount from 100 g/ha to 300 g/ha. All the possible sub-ranges as well as individual numerical values within that range should be considered to have been specifically disclosed.

In some embodiments, the tolclofos-M is applied at an amount from 0.1 g/ha to 1000 g/ha. In some embodiments, the tolclofos-M is applied at an amount from 10 g/ha to 800 g/ha. In some embodiments, the tolclofos-M is applied at an amount from 50 g/ha to 500 g/ha. In some embodiments, the tolclofos-M is applied at an amount from 100 g/ha to 300 g/ha. All the possible sub-ranges as well as individual numerical values within that range should be considered to have been specifically disclosed.

In some embodiments, the triadimefon is applied at an amount from 0.1 g/ha to 1000 g/ha. In some embodiments, the triadimefon is applied at an amount from 10 g/ha to 800 g/ha. In some embodiments, the triadimefon applied at an amount from 50 g/ha to 500 g/ha. In some embodiments, the triadimefon is applied at an amount from 100 g/ha to 300 g/ha. All the possible sub-ranges as well as individual numerical values within that range should be considered to have been specifically disclosed.

In some embodiments, the triadimenol is applied at an amount from 0.1 g/ha to 1000 g/ha. In some embodiments, the triadimenol is applied at an amount from 10 g/ha to 800 g/ha. In some embodiments, the triadimenol applied at an amount from 50 g/ha to 500 g/ha. In some embodiments, the triadimenol is applied at an amount from 100 g/ha to 300 g/ha. All the possible sub-ranges as well as individual numerical values within that range should be considered to have been specifically disclosed.

In some embodiments, the tridemorph is applied at an amount from 0.1 g/ha to 1000 g/ha. In some embodiments, the tridemorph is applied at an amount from 10 g/ha to 800 g/ha. In some embodiments, the tridemorph applied at an amount from 50 g/ha to 500 g/ha. In some embodiments, the tridemorph is applied at an amount from 100 g/ha to 300 g/ha. All the possible sub-ranges as well as individual numerical values within that range should be considered to have been specifically disclosed.

In some embodiments, the triflumizole is applied at an amount from 0.1 g/ha to 1000 g/ha. In some embodiments, the triflumizole is applied at an amount from 10 g/ha to 800 g/ha. In some embodiments, the triflumizole applied at an amount from 50 g/ha to 500 g/ha. In some embodiments, the triflumizole is applied at an amount from 100 g/ha to 300 g/ha. All the possible sub-ranges as well as individual numerical values within that range should be considered to have been specifically disclosed.

In some embodiments, the validamycin is applied at an amount from 0.1 g/ha to 1000 g/ha. In some embodiments, the validamycin is applied at an amount from 10 g/ha to 800 g/ha. In some embodiments, the validamycin applied at an amount from 50 g/ha to 500 g/ha. In some embodiments, the validamycin is applied at an amount from 100 g/ha to 300 g/ha. All the possible sub-ranges as well as individual numerical values within that range should be considered to have been specifically disclosed.

In some embodiments, the zineb is applied at an amount from 0.1 g/ha to 1000 g/ha. In some embodiments, the zineb is applied at an amount from 10 g/ha to 800 g/ha. In some embodiments, the zineb applied at an amount from 50 g/ha to 500 g/ha. In some embodiments, the zineb is applied at an amount from 100 g/ha to 300 g/ha. All the possible sub-ranges as well as individual numerical values within that range should be considered to have been specifically disclosed.

In some embodiments, the ziram is applied at an amount from 0.1 g/ha to 1000 g/ha. In some embodiments, the ziram is applied at an amount from 10 g/ha to 800 g/ha. In some embodiments, the ziram applied at an amount from 50 g/ha to 500 g/ha. In some embodiments, the ziram is applied at an amount from 100 g/ha to 300 g/ha. All the possible sub-ranges as well as individual numerical values within that range should be considered to have been specifically disclosed.

When the compound of Formula I and the fungicide (A) are applied in the form of the combinations, mixtures or compositions disclosed herein, the rate at which the combinations, mixture and/or composition is applied will depend upon the particular type of fungus to be controlled, the degree of control required and the timing and method of application. In general, the combinations, mixtures or compositions described herein can be applied at an application rate of between about 1 gram per hectare (g/ha) and about 4500 g/ha.

The combinations, mixtures or compositions disclosed herein can be applied at an application rate of between about 1 g/ha and about 4500 g/ha based on the total amount of active ingredients.

In some embodiments, the combination, mixture or composition is applied where the amount of compound of Formula I is in the range of 1 g/ha to 500 g/ha. In some embodiments, the combination, mixture or composition is applied where the amount of compound of Formula I is in the range of 5 g/ha to 400 g/ha. In some embodiments, the combination, mixture or composition is applied where the amount of compound of Formula I is in the range of 10 g/ha to 300 g/ha. In some embodiments, the combination, mixture or composition is applied where the amount of compound of Formula I is in the range of 30 g/ha to 200 g/ha. In some embodiments, the combination, mixture or composition is applied where the amount of compound of Formula I is in the range of 50 g/ha to 200 g/ha. In some embodiments, the combination, mixture or composition is applied where the amount of compound of Formula I is in the range of 50 g/ha to 100 g/ha. In some embodiments, the combination, mixture or composition is applied where the amount of compound of Formula I is in the range of 75 g/ha to 100 g/ha. In some embodiments, the combination, mixture or composition is applied where the amount of compound of Formula I is in the range of 100 g/ha to 200 g/ha. All the possible sub-ranges as well as individual numerical values within that range should be considered to have been specifically disclosed.

In some embodiments, the combination, mixture or composition is applied where the amount of fungicide (A) is in the range of 0.1 g/ha to 4000 g/ha.

In some embodiments, the combination, mixture or composition is applied where the amount of fungicide (A) is in the range of 0.1 g/ha to 4000 g/ha. In some embodiments, the combination, mixture or composition is applied where the amount of fungicide (A) is in the range of 0.1 g/ha to 3500 g/ha. In some embodiments, the combination, mixture or composition is applied where the amount of fungicide (A) is in the range of 0.1 g/ha to 3000 g/ha. In some embodiments, the combination, mixture or composition is applied where the amount of fungicide (A) is in the range of 0.1 g/ha to 2500 g/ha. In some embodiments, the combination, mixture or composition is applied where the amount of fungicide (A) is in the range of 0.1 g/ha to 2000 g/ha. In some embodiments, the combination, mixture or composition is applied where the amount of fungicide (A) is in the range of 0.1 g/ha to 1500 g/ha. In some embodiments, the combination, mixture or composition is applied where the amount of fungicide (A) is in the range of 0.1 g/ha to 1000 g/ha. In some embodiments, the fungicide (A) is applied at an amount from 1 g/ha to 850 g/ha. In some embodiments, the fungicide (A) is applied at an amount from 1 g/ha to 750 g/ha. In some embodiments, the fungicide (A) is applied at an amount from 1 g/ha to 550 g/ha. In some embodiments, the fungicide (A) is applied at an amount from 1 g/ha to 500 g/ha. In some embodiments, the fungicide (A) is applied at an amount from 1 g/ha to 400 g/ha. In some embodiments, the fungicide (A) is applied at an amount from 1 g/ha to 300 g/ha. In some embodiments, the fungicide (A) is applied at an amount from 1 g/ha to 250 g/ha. In some embodiments, the fungicide (A) is applied at an amount from 1 g/ha to 200 g/ha. In some embodiments, the fungicide (A) is applied at an amount from 1 g/ha to 100 g/ha. In some embodiments, the fungicide (A) is applied at an amount from 1 g/ha to 50 g/ha. In some embodiments, the fungicide (A) is applied at an amount from 1 g/ha to 40 g/ha. In some embodiments, the fungicide (A) is applied at an amount from 1 g/ha to 30 g/ha. All the possible sub-ranges as well as individual numerical values within that range should be considered to have been specifically disclosed.

The combinations, mixtures and compositions disclosed herein may be applied to control and/or prevent a variety of fungal pathogen and diseases associated therewith.

In some embodiments, the disease is but not limited to cercospora leaf spot (Cercospora beticola), leaf blight (Thanatephorus cucumeris), root rot (Thanatephorus cucumeris), and aphanomyces root rot (Aphanomyces cochlioides); powdery mildew (Erysiphe graminis), fusarium Head blight (Fusarium graminearum, F. avenaceum, culmorum, Microdochium nivale), rust (for example, yellow rust (Puccinia striiformis), black rust (P. graminis), Brown rust (P. recondita), snow mold (Micrdochium nivale), typhula snow blight (Typhula sp.), loose smut (Ustilago tritici), stinking smut (Tilletia caries), eyespot (Pseudocercosporella herpotrichoides), Septoria leaf blotch (Mycosphaerella graminicola), glume blotch (Stagonospora nodorum), and tan spot (Pyrenophora tritici-repentis); powdery mildew (Erysiphe graminis), loose smut (Fusarium graminearum, F. avenaceum, F. culmorum, Microdochium nivale), rust (Puccinia striiformis, P. graminis, P. hordei), loose smut (Ustilago nuda), scald (Rhynchosporium secalis), net blotch (Pyrenophora teres), spot blotch (Cochliobolus sativus), leaf stripe (Pyrenophora graminea), and damping-off caused by rhizoctonia fungus (Rhizoctonia solani); smut (Ustilago maydis), southern leaf blight (Cochliobolus heterostrophus), zonate leaf spot (Gloeocercospora sorghi), southern rust (Puccinia polysora), gray leaf spot (Cercospora zeae-maydis), and damping-off caused by rhizoctonia fungus (Rhizoctonia solani); cotton damping-off caused by Rhizoctonia solani (Rhizoctonia solani); dollar spot (Sclerotinia homeocarpa), brown patch, and large patch (Rhizoctonia solani); melanose (Diaporthe citri), scab (Elsinoe fawcetti), fruit rot (Penicillium digitatum, P. italicum), and Phytophthora disease (Phytophthora parasitica, Phytophthora citrophthora); blossom blight (Monilinia mali), canker (Valsa ceratosperma), powdery mildew (Podosphaera leucotricha), Alternaria leaf spot (Alternaria alternata apple pathotype), scab (Venturia inaequalis), bitter rot (Colletotrichum acutatum), and crown rot (Phytophthora cactorum); scab (Venturia nashicola, V. pirina), black spot (Alternaria alternata Japanese pear pathotype), rust (Gymnosporangium haraeanum), phytophthora fruit rot, phytophthora crown and root rot (Phytophthora cactorum) and brown spot (Stemphilium Vesicarium); brown rot (Monilinia fructicola), scab (Cladosporium carpophilum), and Phomopsis rot (Phomopsis sp.); anthracnose (Gloeosporium kaki), and leaf spot (Cercospora kaki, Mycosphaerella nawae); powdery mildew (Sphaerotheca humuli), and anthracnose (Glomerella cingulata); Sigatoka disease (Mycosphaerella fijiensis, Mycosphaerella musicola); anthracnose (Elsinoe ampelina), ripe rot (Glomerella cingulata), powdery mildew (Uncinula necator), rust (Phakopsora ampelopsidis), black rot (Guignardia bidwellii), and downy mildew (Plasmopara viticola); sclerotinia rot (Sclerotinia sclerotiorum), and rape seed damping-off caused by Rhizoctonia solani (Rhizoctonia solani); leaf spot (Cercospora personata), brown leaf spot (Cercospora arachidicola), and southern blight (Sclerotium rolfsii); caused by bacteria of Aspergillus spp., Penicillium spp., Fusarium spp., Gibberella spp., Tricoderma spp., Thielaviopsis spp., Rhizopus spp., Mucor spp., Corticium spp., Phoma spp., Rhizoctonia spp., Diplodia spp.; and Viral diseases of various plants mediated by Polymixa spp. or Olpidium spp; net blister blight (Exobasidium reticulatum), white scab (Elsinoe leucospila), gray blight (Pestalotiopsis sp.), and anthracnose (Colletotrichum theae-sinensis); brown spot (Alternaria longipes), powdery mildew (Erysiphe cichoracearum), anthracnose (Colletotrichum tabacum), downy mildew (Peronospora tabacina), and black shank (Phytophthora nicotianae); early blight (Alternaria solani), late blight (Phytophthora infestans), pink rot (Phytophthora erythroseptica), and powdery scab (Spongospora subterranean f. sp. subterranea); blast (Magnaporthe grisea), brown spot (Cochliobolus miyabeanus), sheath blight (Rhizoctonia solani), and bakanae disease (Gibberella fujikuroi); purple stain (Cercospora kikuchii), Sphaceloma scad (Elsinoe glycines), pod and stem blight (Diaporthe phaseolorum var. sojae), septoria brown spot (Septoria glycines), Cercospora leaf spot (Cercospora sojina), rust (Phakopsora pachyrhizi), phytophthora root and stem rot (Phytophthora sojae), damping-off caused by rhizoctonia fungus (Rhizoctonia solani), target spot (Corynespora casiicola), and sclerotinia rot (Sclerotinia sclerotiorum); downy mildew (Plasmopara halstedii); anthracnose (Colletotrichum lagenarium), powdery mildew (Sphaerotheca fuliginea), gummy stem blight (Mycosphaerella melonis), Fusarium wilt (Fusarium oxysporum), downy mildew (Pseudoperonospora cubensis), Phytophthora rot (Phytophthora sp.), and damping-off (Pythium sp.); early blight (Alternaria solani), leaf mold (Cladosporium fulvum), and late blight (Phytophthora infestans);
brown spot (Phomopsis vexans), and powdery mildew (Erysiphe cichoracearum); Alternaria leaf spot (Alternaria japonica), white spot (Cercosporella brassicae), clubroot (Plasmodiophora brassicae), and downy mildew (Peronospora parasitica); rust (Puccinia allii), and downy mildew (Peronospora destructor); anthracnose (Colletotrichum lindemthianum); powdery mildew (Erysiphe pisi); blackspot (Diplocarpon rosae), powdery mildew (Sphaerotheca pannosa), and downy mildew (Peronospora sparsa); downy mildew (Bremia lactucae), leaf blight (Septoria chrysanthemi-indici), and white rust (Puccinia horiana);

In some embodiments, the plant is a crop plant. The methods of the present invention may be used on any crop plants, including but not limited to beet, cereals, corn, cotton, environmental crops, fruits & nuts, grapes/vines, oilseed-rape/canola, plantation, potatoes, rice, soybeans, vegetables & flowers and other crops.

In some embodiments the methods of the present invention may be used on any crop plants, including but not limited to monocotyledons such as sugar cane, cereals, rice, maize (corn), and/or; or dicotyledon crop such as beets (such as sugar beet or fodder beet); fruits (such as pomes, stone fruits, or soft fruits, for example apples, pears, plums, peaches, almonds, cherries, strawberries, raspberries, or blackberries); leguminous plants (such as beans, lentils, peas, or soybeans); oil plants (such as rape, mustard, poppy, olives, sunflowers, coconut, castor oil plants, cocoa beans, or groundnuts); cucumber plants (such as marrows, cucumbers or melons); fiber plants (such as cotton, flax, hemp, or jute); citrus fruits (such as oranges, lemons, grapefruit, or mandarins); vegetables (such as spinach, lettuce, cabbages, carrots, tomatoes, potatoes, cucurbits, or paprika); lauraceae (such as avocados, cinnamon, or camphor); tobacco; nuts; coffee; tea; vines; hops; durian; bananas; natural rubber plants; and ornamentals (such as flowers, shrubs, broad-leaved trees, or evergreens, for example conifers).

In some embodiments, the plants are monocotyledonous plants, more preferably, cereals. In a specific embodiment, the cereal crop is wheat. In another specific embodiment, the cereal crop is triticale. In another specific embodiment, the cereal crop is rye. In another specific embodiment, the cereal crop is oat. In a further embodiment, the cereal crop is barley. In another embodiment, the crop plants are rice plants. In still another embodiment, the crop plants are sugar cane plants. In yet another embodiment, the crop plants are corn plants.

In another embodiment, the crop plants are dicotyledonous plants.

The combination, mixture or composition disclosed herein may also be used as seed treatment to prevent or control phytopathogenic fungi as described in U.S. Patent Application Publication No. 2018-0000082 (published January 4, 2018), the entire content of which is hereby incorporated by reference into this application.

In some embodiments, the combination, mixture or composition of the present invention further comprises at least one additional pesticide. In some embodiments, the pesticide is a fungicide, herbicide, insecticide, acaricides, or nematicide.

In some embodiments, the combination, mixture or composition of the present invention further comprises at least one fungicide.

In some embodiments, the fungicide is a fungicidal sterol biosynthesis inhibitor.

In some embodiments, the sterol biosynthesis inhibitor is selected from the group consisting of prothioconazole, epoxiconazole, cyproconazole, myclobutanil, prochloraz, metconazole, difenoconazole, tebuconazole, tetraconazole, fenbuconazole, propiconazole, fluquinconazole, flusilazole, flutriafol, and fenpropimorph.

In some embodiments, the sterol biosynthesis inhibitor is selected from the group consisting of prothioconazole, epoxiconazole, metconazole, difenoconazole, propiconazole, prochloraz, tetraconazole, tebuconazole, fenpropimorph, fenpropidin, ipconazole, triticonazole, spiroxamine, fenhexamid, and fenpyrazamine.

In some embodiments, the sterol biosynthesis inhibitor is prothioconazole. In some embodiments, the sterol biosynthesis inhibitor is epoxiconazole. In some embodiments, the sterol biosynthesis inhibitor is cyproconazole. In some embodiments, the sterol biosynthesis inhibitor is myclobutanil. In some embodiments, the sterol biosynthesis inhibitor is metconazole. In some embodiments, the sterol biosynthesis inhibitor is difenoconazole. In some embodiments, the sterol biosynthesis inhibitor is propiconazole. In some embodiments, the sterol biosynthesis inhibitor is prochloraz. In some embodiments, the sterol biosynthesis inhibitor is tetraconazole. In some embodiments, the sterol biosynthesis inhibitor is tebuconazole. In some embodiments, the sterol biosynthesis inhibitor is fluquinconazole. In some embodiments, the sterol biosynthesis inhibitor is flusilazole. In some embodiments, the sterol biosynthesis inhibitor is flutriafol. In some embodiments, the sterol biosynthesis inhibitor is fenpropimorph. In some embodiments, the sterol biosynthesis inhibitor is fenpropidin.

In some embodiments, the sterol biosynthesis inhibitor is ipconazole. In some embodiments, the sterol biosynthesis inhibitor is triticonazole. In some embodiments, the sterol biosynthesis inhibitor is spiroxamin. In some embodiments, the sterol biosynthesis inhibitor is fenhexamid. In some embodiments, the sterol biosynthesis inhibitor is fenpyrazamine. In some embodiments, the sterol biosynthesis inhibitor is fenbuconazole.

In some embodiments, the fungicide is a succinate dehydrogenase inhibitor.

In some embodiments, the succinate dehydrogenase inhibitor is selected from the group consisting of benzovindiflupyr, penthiopyrad, isopyrazam, fluxapyroxad, boscalid, fluopyram, bixafen, and penflufen.

In some embodiments, the succinate dehydrogenase inhibitor is benzovindiflupyr. In some embodiments, the succinate dehydrogenase inhibitor is penthiopyrad. In some embodiments, the succinate dehydrogenase inhibitor is isopyrazam. In some embodiments, the succinate dehydrogenase inhibitor is fluxapyroxad. In some embodiments, the succinate dehydrogenase inhibitor is boscalid. In some embodiments, the succinate dehydrogenase inhibitor is fluopyram. In some embodiments, the succinate dehydrogenase inhibitor is bixafen. In some embodiments, the succinate dehydrogenase inhibitor is penflufen.

In some embodiments, the fungicide is a strobilurin fungicide.

In some embodiments, the strobilurin fungicide is selected from the group consisting of azoxystrobin, pyraclostrobin, picoxystrobin, fluoxastrobin, trifloxystrobin, kresoxim-methyl, dimoxystrobin, and orysastrobin.

In some embodiments, the strobilurin fungicide is azoxystrobin. In some embodiments, the strobilurin fungicide is pyraclostrobin. In some embodiments, the strobilurin fungicide is picoxystrobin. In some embodiments, the strobilurin fungicide is fluoxastrobin. In some embodiments, the strobilurin fungicide is trifloxystrobin. In some embodiments, the strobilurin fungicide is kresoxim-methyl. In some embodiments, the strobilurin fungicide is dimoxystrobin. In some embodiments, the strobilurin fungicide is orysastrobin.

In some embodiments, the fungicide is a fungicidal multisite inhibitor.

In some embodiments, the fungicidal multisite inhibitor is selected from a group consisting of mancozeb, chlorothalonil, folpet, captan, metiram, maneb, propineb, copper hydroxide, copper octanoate, copper oxychloride, copper sulfate, copper sulfate (tribasic), mancopper, oxine-copper, copper bis(3-phenlsalicylate), copper zinc chromate, cuprous oxide, cupric hydrazinium sulfate, and cuprobam.

In some embodiments, the fungicidal multisite inhibitor is mancozeb. In some embodiments, the fungicidal multisite inhibitor is chlorothalonil. In some embodiments, the fungicidal multisite inhibitor is folpet. In some embodiments, the fungicidal multisite inhibitor is captan. In some embodiments, the fungicidal multisite inhibitor is metiram. In some embodiments, the fungicidal multisite inhibitor is maneb. In some embodiments, the fungicidal multisite inhibitor is propineb. In some embodiments, the fungicidal multisite inhibitor is copper hydroxide, copper octanoate, copper oxychloride, copper sulfate, copper sulfate (tribasic), mancopper, oxine-copper, copper bis(3-phenlsalicylate), copper zinc chromate, cuprous oxide, cupric hydrazinium sulfate, or cuprobam.

In some embodiments, the combination, mixture or composition further comprises a pesticide.

In some embodiments, the pesticide is selected from the group consisting of 2-(thiocyanatomethylthio)-benzothiazole, 2-phenylphenol, 8-hydroxyquinoline sulfate, amisulbrom, antimycin, Ampelomyces quisqualis, azaconazole, azoxystrobin, Bacillus subtilis, Bacillus subtilis strain QST713, benzylaminobenzene-sulfonate (BABS) salt, bicarbonates, biphenyl, bismerthiazol, bixafen, blasticidin-S, borax, Bordeaux mixture, boscalid, calcium polysulfide, captafol, captan, , carboxin, carpropamid, carvone, chlazafenone, chloroneb, chlorothalonil, chlozolinate, Coniothyrium minitans, copper hydroxide, copper octanoate, copper oxychloride, copper sulfate, copper sulfate (tribasic), cuprous oxide, cyazofamid, cyflufenamid, cyproconazole, , dazomet, debacarb, diammonium ethylenebis-(dithiocarbamate), dichlofluanid, dichlorophen, diclocymet, diclomezine, dichloran, difenoconazole, difenzoquat ion, diflumetorim, , dimoxystrobin, dinobuton, diphenylamine, dodemorph acetate, edifenphos, enestrobin, enestroburin, epoxiconazole, ethaboxam, ethoxyquin, fenarimol, fenbuconazole, fenfuram, fenhexamid, fenoxanil, fenpiclonil, fenpropidin, fenpropimorph, fenpyrazamine, fentin, fentin acetate, ferimzone, flumorph, fluopyram, fluoroimide, fluoxastrobin, fluquinconazole, flusilazole, flutianil, flutriafol, fluxapyroxad, folpet, formaldehyde, fosetyl, fuberidazole, furalaxyl, guazatine, guazatine acetates, GY-81, hexachlorobenzene, hymexazol, iminoctadine tris(albesilate), iodocarb, ipconazole, ipfenpyrazolone, iprobenfos, isopyrazam, isotianil, kresoxium-methyl, laminarin, mancopper, mancozeb, maneb, mefenoxam, mepanipyrim, mepronil, meptyl-dinocap, mercuric chloride, mercuric oxide, mercurous chloride, metam, metam-ammonium, metam-potassium, metam-sodium, metconazole, methasulfocarb, methyl iodide, methyl isothiocyanate, metiram, mildiomycin, myclobutanil, nabam, nitrothal-isopropyl, nuarimol, octhilinone, ofurace, oleic acid (fatty acids), orysastrobin, oxine-copper, oxpoconazole fumarate, oxycarboxin, pefurazoate, penflufen, pentachlorophenol, pentachlorophenyl laurate, penthiopyrad, phenylmercury acetate, phosphonic acid, phthalide, picoxystrobin, polyoxin B, potassium hydroxyquinoline sulfate, prochloraz, propiconazole, propineb, prothioconazole, pyraclostrobin, pyrametostrobin, pyraoxystrobin, pyrazophos, pyributicarb, pyrifenox, pyroquilon, quinoclamine, quintozene, Reynoutria sachalinensis extract, sedaxane, silthiofam, sodium 2-phenylphenoxide, sodium bicarbonate, sodium pentachlorophenoxide, spiroxamine, SYP-Z048, tar oils, tebuconazole, tebufloquin, tecnazene, tetraconazole, tiadinil, tolylfluanid, triazoxide, trifloxystrobin, triforine, triticonazole, valiphenal, vinclozolin, Candida oleophila, Fusarium oxysporum, Gliocladium spp., Phlebiopsis gigantea, Streptomyces griseoviridis, Trichoderma spp., (RS)-N-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme, ampropylfos, anilazine, azithiram, barium polysulfide, Bayer 32394, benodanil, benquinox, bentaluron, benzamacril, benzamacril-isobutyl, benzamorf, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, furconazole-cis, furmecyclox, furophanate, glyodine, griseofulvin, halacrinate, Hercules 3944, hexylthiofos, ICIA0858, isopamphos, isovaledione, mebenil, mecarbinzid, metazoxolon, methfuroxam, methylmercury dicyandiamide, metsulfovax, milneb, mucochloric anhydride, myclozolin, N-3,5-dichlorophenyl-succinimide, N-3-nitrophenylitaconimide, natamycin, N-ethylmercurio-4-toluenesulfonanilide, nickel bis(dimethyldithiocarbamate), OCH, phenylmercury dimethyldithiocarbamate, phenylmercury nitrate, phosdiphen, prothiocarb, prothiocarb hydrochloride, pyracarbolid, pyridinitril, pyroxychlor, pyroxyfur, quinacetol, quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, zarilamid, and any combinations thereof.

In some embodiments, the pesticide is an insecticide. In some embodiments, the pesticide is an acaricides. In some embodiments, the pesticide is a nematicide. In some embodiments, the pesticide is an herbicide.

Examples of insecticides and acaricides may include, but are not limited to, abamectin, pyriproxyfen, acetamiprid, bifenthrin, cyfluthrin, pymetrozine, novaluron, ethiprole, fipronil, and lambda-cyhalothrin.

Examples of nematicide may include, but not limited to fluensulfone.

The present combination, mixture or composition can be applied to fungi or their locus. Application may be made by the use of conventional ground sprayers, granule applicators, and by other conventional means known to those skilled in the art.

Each embodiment disclosed herein is contemplated as being applicable to each of the other disclosed embodiments. Thus, all combinations of the various elements described herein are within the scope of the invention. In addition, the elements recited in the combination embodiments can be used in the mixture, composition, method and use embodiments described herein and vice versa.

### Synergism Calculation

A synergistic effect exists whenever the action of an active ingredient combination is greater than the sum of the actions of the individual components.

In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22. The action expected for a given combination of two active components can be calculated as follows: $E = X + Y - \frac{XY}{100}$ in which E represents the expected percentage of insecticidal control for the combination of the two active components at defined doses (for example equal to x and y respectively), X is the percentage of pesticidal control observed by the compound (I) at a defined dose (equal to x), Y is the percentage of pesticidal control observed by the compound (II) at a defined dose (equal to y). When the percentage of pesticidal control observed for the combination is greater than the expected percentage, there is a synergistic effect.

While the present subject matter has been shown and described with reference to preferred embodiments thereof, it will be understood by those skilled in the art that many alternatives, modifications and variations may be made thereto without departing from the spirit and scope thereof. Accordingly, it is intended to embrace all such alternatives, modifications, and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference.

The following examples illustrate the practice of the present subject matter in some of its embodiments, should not be construed as limiting the scope of the present subject matter. Other embodiments will be apparent to one skilled in the art from consideration of the specification and examples. It is intended that the specification, including the examples, is considered exemplary only, without limiting the scope and spirit of the present subject matter.

### EXPERIMENTAL SECTION

### Materials and Methods

Compound of Formula I can be prepared as described in WO2015/103144, WO2015/103142, WO 2021/059160 and WO2021/181274.

500 SC composition of the compound of formula I is provided in Table 1 below.

**Table 1. 500 SC composition of the compound of formula I**

| **Ingredient** | **CAS No.** | **Chemical Name** | **% w/w** |
|---|---|---|---|
| compound of Formula I | N/A | 5-fluoro-4-imino-3-methyl-1-tosyl-3,4-dihydropyrimidin-2(1*H*)-one | 41.67 |
| AG-RH 23 | 11138-66-2 | Xanthan Gum | 0.19 |
| Disodium Phosphate Anhydrous | 7558-79-4 | Disodium Phosphate Anhydrous | 0.57 |
| Emulsogen TS 540 | 104376-75-2 | Tristyryl phenol-polyethylene glycol ether | 1.6 |
| Potassium dihydrogene phosphate | 7778-77-0 | Potassium dihydrogene phosphate | 0.14 |
| Propylene glycol | 57-55-6 | 1,2 propanediol | 1.96 |
| Proxel GXL | (A)2634-33-5, (B)1310-73-2 | (A)1,2-Benzisothiazol-3(2H)-one, (B)Sodium hydroxide | 0.02 |
| SAG 1572 | N/A | Polydimethylsiloxane emulsion | 1.0 |
| Silwet L-77 | (A)27306-78-1, (B)67674-67-3 | (A)Polyalkyleneoxide modified Heptamethyltrisiloxane, (B)Polyalkyleneoxide Modified Heptamethyltrisiloxane | 0.25 |
| Soprophor 3 D 33 | (A) 90093-37-1, (B)99734-09-5, (C)7664-38-2 | (A) 2,4,6-Tris(1-phenylethyl)polyoxyethylenated phosphates, | 4.0 |
| | | (B)Poly(oxy-1,2-ethanediyl),.alpha.-[tris(1-phenylethyl)phenyl]-.omega.-hydroxy-, (C)orthophosphoric acid (POLYARYLPHENYL ETHER PHOSPHATE)" | |
| Supragil WP | N/A | Reaction product of naphthalene, propan-2-ol, sulfonated and neutralized by caustic soda | 0.5 |
| water soft | 7732-18-5 | water | 48.1 |

### Trial Description

The trial was carried out in the glasshouse sited in the SAGEA's facility in Castagnito (Cuneo) - Piemonte region (Northern Italy) in order to evaluate and compare the efficacy against Downy mildew (*Plasmopara viticola*) on grapevine (Barbera variety) of test product of Formula I 500 SC, which was applied at doses 0.15 L/ha and 0.1 L/ha, and ENERVIN SC (ametoctradin 200 g/L, SC) at rate 0.75 and 1 L/ha, PRESIDIO (fluopicolide 480 g/L, SC) at 0.207 and 0.208 L/ha, and ZOXIUM (zoxamide 240 g/L, SC) at dose 0.375 and 0.520 L/ha. On the following treatments test product of Formula I 500 SC was applied at dose of 0.1 L/ha and 0.15 L/ha in combination with mentioned products which were always applied at the same rate.

The inoculation of *P. viticola* was carried out, one day after the treatment, by spraying the inoculum solution on the leaf.

### Example 1. Synergistic test for the mixture of the compound of Formula I and zoxamide

| **Description** | **Observed Fungicide Efficacy** | **Calculated Fungicide Efficacy** | **Evaluation of Colby's Equation** |
|---|---|---|---|
| UNTREATED CHECK | 0 | | |
| Formula I 500 SC 50 g AI/ha | 55.3 | | |
| Formula I 500 SC 75 g AI/ha | 56 | | |
| Zoxium 240 SC 90 g AI/ha | 18.6 | | |
| Zoxium 240 SC 125 g AI/ha | 32.1 | | |
| Formula I 500 SC 50 g AI/ha Zoxium 240 SC 90 g AI/ha (1: 1.8 ratio) | 76.1 | 63.6 | 1.20 |
| Formula I 500 SC 50 g AI/ha Zoxium 240 SC 125 g AI/ha (1:2.5 ratio) | 83.7 | 69.6 | 1.20 |
| Formula I 500 SC 75 g AI/ha Zoxium 240 SC 90 g AI/ha (1:1.2 ratio) | 96.5 | 64.2 | 1.50 |
| Formula I 500 SC 75 g AI/ha Zoxium 240 SC 125 g AI/ha (1: 1.7 ratio) | 98 | 70.1 | 1.40 |

### Example 2. Synergistic test for the mixture of the compound of Formula I and Ametoctradin

| **Description** | **Observed Fungicide Efficacy** | **Calculated Fungicide Efficacy** | **Evaluation of Colby's Equation** |
|---|---|---|---|
| UNTREATED CHECK | 0 | | |
| Formula I 500 SC 50 g AI/ha | 55.3 | | |
| Formula I 500 SC 75 g AI/ha | 56 | | |
| Enervin SC 150 g AI/ha | 32.7 | | |
| Enervin SC 200 g AI/ha | 43.2 | | |
| Formula I 500 SC 50 g AI/ha Enervin SC 150 g AI/ha (1:3 ratio) | 71.6 | 69.9 | 1.02 |
| Formula I 500 SC 50 g AI/ha Enervin SC 200 g AI/ha (1:4 ratio) | 86.4 | 74.6 | 1.16 |
| Formula I 500 SC 75 g AI/ha Enervin SC 150 g AI/ha (1:2 ratio) | 96.7 | 70.4 | 1.37 |
| Formula I 500 SC 75 g AI/ha Enervin SC 200 g AI/ha (1:2.7 ratio) | 96.2 | 75.0 | 1.28 |

### Example 3. Synergistic test for the mixture of the compound of Formula I and Fluopicolide

| **Description** | **Observed Fungicide Efficacy** | **Calculated Fungicide Efficacy** | **Evaluation of Colby's Equation** |
|---|---|---|---|
| UNTREATED CHECK | 0 | | |
| Formula I 500 SC 50 g AI/ha | 55.3 | | |
| Formula I 500 SC 75 g AI/ha | 56 | | |
| PRESIDIO 100 g AI/ha | 21.6 | | |
| PRESIDIO 130 g AI/ha | 47.4 | | |
| Formula I 500 SC 50 g AI/ha PRESIDIO 100 g AI/ha (1:2 ratio) | 68.1 | 65.0 | 1.05 |
| Formula I 500 SC 50 g AI/ha PRESIDIO 130 g AI/ha (1:2.6 ratio) | 77.7 | 76.5 | 1.02 |
| Formula I 500 SC 75 g AI/ha PRESIDIO 100 g AI/ha (1:1.3 ratio) | 92 | 65.5 | 1.40 |
| Formula I 500 SC 75 g AI/ha PRESIDIO 130 g AI/ha (1:1.7 ratio) | 96.5 | 76.9 | 1.26 |

### Example 4

A series of experiments are conducted to evaluate the fungicidal control of plasmopara viticola (downy mildew) in grape with a compound of Formula I and fungicide (A): fosetyl-Al, mandipropamid, cymoxanil, or potassium-phosphonate. The experiment is conducted by applying a compound of Formula I and fungicide (A) alone or together. The compositions are diluted in water.

**Table 2. treatment list**

| **Treatment** | **AI Rate (gAI/ha)** |
|---|---|
| Untreated check | |
| Formula I | From 50 to 200 g AI/ha |
| Fosetyl-Al | From 600 to1500 g AI/ha |
| Mandipropamid | From 40 to 500 g AI/ha |
| Cymoxanil | From 50 to150 g AI/ha |
| Potassium-phosphonate | From 504-2016 (phosphonic/phoosphorus acid equivalent) g AI/ha |
| Formula I + Fosetyl-Al | From 50 to 200 g AI/ha |
| | From 600 to1500 g AI/ha |
| Formula I + Mandipropamid | From 50 to 200 g AI/ha |
| | From 40 to 500 g AI/ha |
| Formula I + Cymoxanil | From 50 to200 g AI/ha |
| | From 50 to150 g AI/ha |
| Formula I + Potassium-phosphonate | From 50 to 200 g AI/ha |
| | From 504-2016 (phosphonic/phoosphorus acid equivalent) g AI/ha |

To test for fungicidal control of plasmopara viticola (downy mildew) in grape, the grapevine plants are sprayed with each of the above treatments. Each of the above treatments are applied from 1 to 10 times according to the disease development, applications occurring 7-14 days after the previous one. The treatments are composed of 4 replicates.

Evaluations are performed for the whole duration of the experiment.

The present invention is further defined by the following items:
1. A fungicidal combination comprising:
   (i) an amount of a compound of Formula I 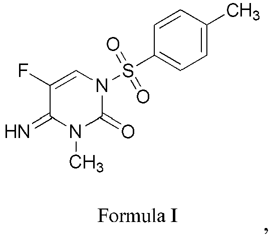 and
   (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.
2. The combination of item 1, wherein:
   a) the combination is more effective in treating a plant or locus against fungal infection than when each fungicide at the same amount is applied alone,
   b) the amount of the compound of Formula I and the amount of the fungicide (A) when applied together is more effective in treating a plant or locus against fungal infection than when each fungicide at the same amount is applied alone, and/or
   c) the amount of the compound of Formula I applied is less than the fungicidally effective amount of the compound of Formula I when the compound of Formula I is used alone, and/or wherein the amount of the fungicide (A) applied is less than the fungicidally effective amount of the fungicide (A) when the fungicide (A) is used alone.
3. The combination of item 1 or 2, wherein the pyrimidine is a bupirimate.
4. The combination of item 1 or 2, wherein the antibiotic is kasugamycin, oxytetracycline, streptomycin and/or validamycin.
5. The combination of item 1 or 2, wherein the AP is cyprodinil and/or pyrimethanil.
6. The combination of item 1 or 2, wherein the aromatic hydrocarbon is tolclofos-M.
7. The combination of item 1 or 2, wherein the aryl-phenylketone is metrafenone and/ or pyriofenone.
8. The combination of item 1 or 2, wherein the azanaphthalene is proquinazid and/or quinoxyfen.
9. The combination of item 1 or 2, wherein the benzamide is fluopicolide and/or zoxamide.
10. The combination of item 1 or 2, wherein the benzenesulfonamide is flusulfamide.
11. The combination of item 1 or 2, wherein the BTH is probenazole and/or acibenzolar-S-M.
12. The combination of item 1 or 2, wherein the CAA is dimethomorph, mandipropamid, valifenalate, benthiavalicarb-isopropyl and/or iprovalicarb.
13. The combination of item 1 or 2, wherein the carbamate is propamocarb and/or diethofencarb.
14. The combination of item 1 or 2, wherein the cyanoacetamideoxime is cymoxanil.
15. The combination of item 1 or 2, wherein the dicarboximide is iprodione and/or procymidone.
16. The combination of item 1 or 2, wherein the dithiolane is isoprothiolane.
17. The combination of item 1 or 2, wherein the growth regulator is ethephon and/or paclobutrazol.
18. The combination of item 1 or 2, wherein the guanidine is dodine.
19. The combination of item 1 or 2, wherein the heteroaromatic fungicide is etridiazole.
20. The combination of item 1 or 2, wherein the inorganic fungicide is potassium-bicarbonate, potassium-carbonate and/or potassium-phosphite-monobasic.
21. The combination of item 1 or 2, wherein the MBC is carbendazim, thiophanate-M, benomyl and/or thiabendazole.
22. The combination of item 1 or 2, wherein the MBI is tricyclazole.
23. The combination of item 1 or 2, wherein the membrane disruptor is iminoctadine and/or iminoctadine-triacetate.
24. The combination of item 1 or 2, wherein the organo tin compound is fentin-hydroxide.
25. The combination of item 1 or 2, wherein the OSBPI is oxathiapiprolin.
26. The combination of item 1 or 2, wherein the PA is metalaxyl-M, benalaxyl, metalaxyl and/or oxadixyl.
27. The combination of item 1 or 2, wherein the phenylacetamide is cyflufenamid.
28. The combination of item 1 or 2, wherein the phenylurea is pencycuron.
29. The combination of item 1 or 2, wherein the phosphonate is fosetyl-Al, potassium-phosphonate, and/or disodium-phosphonate.
30. The combination of item 1 or 2, wherein the phenylpyrrole is fludioxonil.
31. The combination of item 1 or 2, wherein the uncouplers of oxidative phosphorylation is fluazinam, dinocap and/or meptyldinocap.
32. The combination of any one of items 1-31, wherein weight ratio of the compound of Formula I to fungicide (A) is from about 400:1 to 1:400.
33. The combination of any one of items 1-32, wherein weight ratio of the compound of formula I to fungicide (A) is from about 10:1 to 1:10.
34. The combination of any one of items 1-33, wherein the combination has synergistic effect in treating a plant or locus against fungal infection.
35. The combination of any one of items 1-34, wherein the combination has a synergistic curative effect and/or a synergistic protectant effect.
36. The combination of any one of items 1-35 further comprising at least one pesticide, at least one stabilizing surfactant, and/or at least one phytologically acceptable adjuvant.
37. A mixture comprising the combination of any one of items 1-36.
38. The mixture of item 38, wherein the mixture is a tank mix.
39. A composition comprising the combination of any one of items 1-36.
40. The composition of item 39, wherein:
   a) the composition comprises the compound of Formula I in an amount ranging from about 0.1% to 90% by weight based on the total weight of the composition, and/or
   b) the composition comprises fungicide (A) in an amount ranging from about 0.1% to 90% by weight based on the total weight of the composition.
41. The composition of item 39 or 40, wherein the composition further comprises a phytologically acceptable carrier.
42. A method for treating a plant or locus against fungal infection comprising applying (i) an amount of a compound of Formula I 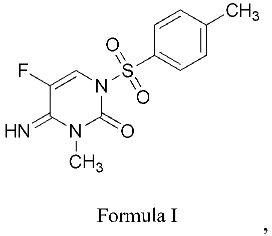 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobins to the plant or locus, so as to thereby treat the plant or locus against fungal infection.
43. A method for treating a plant or locus against fungal infection comprising applying an effective amount of the combination, mixture, or composition of any one of items 1-41 to the plant or locus so as to thereby treat the plant or locus against fungal infection.
44. The method of item 42 or 43, wherein:
   a) the method is more effective in treating a plant or locus against fungal infection than when each fungicide at the same amount is applied alone,
   b) the amount of the compound of Formula I and the amount of the fungicide (A) when applied together is more effective in treating a plant or locus against fungal infection than when each fungicide at the same amount is applied alone,
   c) the amount of the compound of Formula I applied is less than the fungicidally effective amount of the compound of Formula I when the compound of Formula I is used alone and/or the amount of the fungicide (A) applied is less than the fungicidally effective amount of the fungicide (A) when the fungicide (A) is used alone,
   d) the method is effective for controlling fungal infection of the plant or locus, and/or
   e) the method is effective for protecting the plant or locus against fungal infection.
45. The method of item 44, wherein:
   a) controlling fungal infection comprises controlling fungal disease infecting the plant or locus, controlling a plant or soil disease caused by phytopathologic fungi, controlling fungal attack on the plant or locus, reducing fungal infection of the plant or locus, and/or curing a plant or soil disease caused by phytopathologic fungi, and/or
   b) protecting the plant or locus against fungal infection comprises protecting the plant or locus against fungal attack, protecting the plant or locus from fungal disease, and/or preventing fungal infection of the plant or locus.
46. The method of any one of items 42-45, wherein:
   a) the compound of Formula I and the fungicide (A) are applied to propagation material of the plant,
   b) the compound of Formula I and the fungicide (A) are applied to seed and/or seedling of the plant,
   c) the method comprises a protectant application of the compound of Formula I and the fungicide (A),
   d) the method comprises a curative application of the compound of Formula I and the fungicide (A),
   e) the compound of Formula I and the fungicide (A) are applied simultaneously or contemporaneously,
   f) the compound of Formula I and the fungicide (A) are applied separately or together,
   g) the method is effective for reducing leaf necrosis,
   h) the compound of Formula I is applied at an amount from 1 g/ha to 500 g/ha, and/or
   i) the fungicide (A) is applied at an amount from 0.1 g/ha to 4000 g/ha.
47. The method of any one of items 42-46, wherein the compound of Formula I is applied at an amount of 1 g/ha or 500 g/ha.
48. The method of any one of items 42-46, wherein:
   a) the ametoctradin is applied in the range of 50 g/ha to 500 g/ha,
   b) the carbendazim is applied in the range of 200 g/ha to 550g/ha,
   c) the cymoxanil is applied in the range of 50 g/ha to 200 g/ha,
   d) the cyprodinil is applied in the range of 50 g/ha to 500g/ha,
   e) the dimethomorph is applied in the range of 50 g/ha to 500 g/ha,
   f) the dithianon is applied in the range of 50 g/ha to 200 g/ha,
   g) the dodine is applied in the range of 25 g/ha to 250 g/ha,
   h) the fluazinam is applied in the range of 50 g/ha to 250 g/ha,
   i) the fluopicolide is applied in the range of 25 g/ha to 150 g/ha,
   j) the fosetyl-Al is applied in the range of 500 g/ha to 2000 g/ha,
   k) the hexaconazole is applied in the range of 25 g/ha to 150 g/ha,
   l) the mandipropamid is applied in the range of 25 g/ha to 750 g/ha,
   m) the metalaxyl-M is applied in the range of 3-5 g ai/100 seeds ,
   n) the oxathiapiprolin is applied in the range of 5 g/ha to 100 g/ha,
   o) the potassium-phosphonate is applied in the range of 400 g/ha to 2100 g/ha,
   p) the propamocarb is applied in the range of 500 g/ha to 1000 g/ha,
   q) the pyrimethanil is applied in the range of 50 g/ha to 300 g/ha,
   r) the sulphur is applied in the range of 400 g/ha to 4000 g/ha,
   s) the thiophanate-M is applied in the range of 300 g/ha to 1500 g/ha,
   t) the tricyclazole is applied in the range of 100 g/ha to 500 g/ha,
   u) the valifenalate is applied in the range of 50 g/ha to 250 g/ha,
   v) the zoxamide is applied in the range of 25 g/ha to 200 g/ha,
   w) the cyflufenamid is applied in the range of 5 g/ha to 50 g/ha,
   x) the metrafenone is applied in the range of 50 g/ha to 500 g/ha,
   y) the pyriofenone is applied in the range of 10 g/ha to 100 g/ha,
   z) the bupirimate is applied in the range of 50 g/ha to 400 g/ha,
49. A method for controlling a plant disease caused by phytopathologic fungi comprising contacting the plant or a locus of the plant with an effective amount the combination, mixture or composition of any one of items 1-41 so as to thereby control the plant disease.
50. A method for controlling fungal attack on a plant, seed or seedling comprising applying the combination, mixture or composition of any one of items 1-41 to the plant, seed, seedling and/or a locus of the plant so as to thereby control fungal attack on the plant, seed or seedling.
51. A method for controlling fungal attack on a plant, seed or seedling comprising applying the combination, mixture or composition of any one of items 1-41 to the plant, seed, seedling and/or locus of the plant so as to thereby control fungal attack on the plant, seed or seedling.
52. A method of treating a plant, seed or seedling to produce a plant resistant to fungal attack, the method comprising applying the combination, mixture or composition of any one of items 1-41 to the plant, seed adapted to produce the plant, seeding adapted to produce the plant, or a locus of the plant so as to thereby produce a plant resistant to fungal attack.
53. A method of protecting a plant from fungal attack, the method comprising applying the combination, mixture or composition of any one of items 1-41 to the to the plant, a locus of the plant, or a seed or seedling adapted to produce the plant so as to thereby protect the plant from fungal attack.
54. A plant resistant to fungal attack, wherein the seed adapted to produce the plant, the seedling adapted to produce the plant, or a locus of plant is treated with the combination, mixture or composition of any one of items 1-41.
55. A plant seed or seedling adapted to produce a plant resistant to fungal attack, wherein the plant seed or seedling is treated with the combination, mixture or composition of any one of items 1-41.
56. A method for the controlling fungal attack on a plant comprising applying the combination, mixture or composition of any one of items 1-41 to soil, plant, root, foliage, seed, locus of the fungus, and/or a locus in which the infestation is to be prevented so as to thereby control fungal attack on the plant.
57. A method for the controlling plant and/or soil fungal diseases comprising applying the combination, mixture or composition of any one of items 1-41 to soil, plant, root, foliage, seed, locus of the fungus, and/or a locus in which the infestation is to be prevented so as to thereby control plant and/or soil fungal diseases.
58. A method for controlling plant disease caused by phytopathologic fungi comprising contacting the plant, propagation material of the plant, or a locus of the plant with (i) an amount of a compound of Formula I 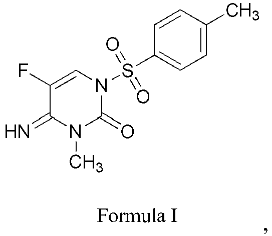 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby control the plant disease.
59. A method for controlling fungal attack on a plant, seed or seedling comprising applying to the plant, seed, seedling and/or a locus of the plant (i) an amount of a compound of Formula I 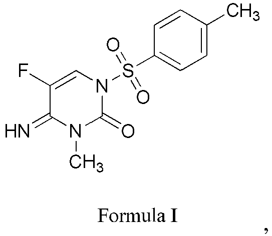 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby control fungal attack on the plant, seed or seedling.
60. A method for protecting a plant, seed or seedling from fungal attack comprising applying to the plant, seed, seedling and/or locus of the plant (i) an amount of a compound of Formula I 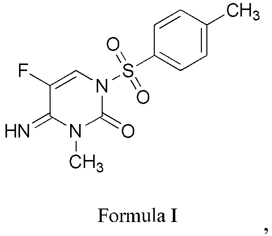 and (ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin, so as to thereby protect the plant, seed or seedling from fungal attack.
61. Use of the combination, mixture or composition of any one of items 1-41 for treating a plant or locus against fungal infection.
62. The combination, mixture or composition of any one of items 1-41 for use to treat a plant or locus against fungal infection.

## Claims

1. A fungicidal combination comprising:
(i) an amount of a compound of Formula I 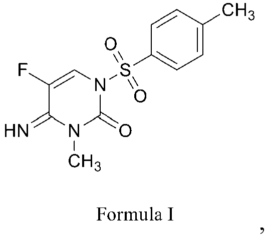 and
(ii) an amount of at least one fungicide (A) selected from the group consisting of pyrimidines, antibiotics, anilinopyrimidines (AP), aromatic hydrocarbons, aryl-phenylketones, azanaphthalenes, benzamides, benzenesulfonamides, benzo-thiadiazoles (BTH), carboxylic acid amides (CAA), carbamates, cyanoacetamideoxime, dicarboximides, dithiolanes, growth regulators, guanidines, heteroaromatics, inorganics, methyl benzimidazole carbamates (MBC), melanin biosynthesis inhibitors (MBI), membrane disruptors, organo tin compounds, oxysterol binding protein homologue inhibition (OSBPI), phenylamides (PA), phenylacetamides, phenylureas, phosphonates, polyoxins, phenylpyrroles, uncouplers of oxidative phosphorylation, dithianon, sulphur, bordeaux-mixture, thiram, zineb, ziram, famoxadone, fenamidone, pyribencarb, ametoctradin, diniconazole, penconazole, triadimefon, triadimenol, triflumizole, bromuconazole, imazalil, tridemorph, flutolanil, thifluzamide and metominostrobin.

2. The combination of claim 1, wherein weight ratio of the compound of Formula I to fungicide (A) is from about 400:1 to 1:400.

3. The combination of claim 1 or 2 further comprising at least one pesticide, at least one stabilizing surfactant, and/or at least one phytologically acceptable adjuvant.

4. A mixture comprising the combination of any one of claims 1-3.

5. The mixture of claim 4, wherein the mixture is a tank mix.

6. A composition comprising the combination of any one of claims 1-3.

7. The composition of claim 6, wherein:
a) the composition comprises the compound of Formula I in an amount ranging from about 0.1% to 90% by weight based on the total weight of the composition, and/or
b) the composition comprises fungicide (A) in an amount ranging from about 0.1% to 90% by weight based on the total weight of the composition.

8. The composition of claim 6 or 7, wherein the composition further comprises a phytologically acceptable carrier.

9. A method for treating a plant or locus against fungal infection comprising applying an effective amount of the combination, mixture, or composition of any one of claims 1-8 to the plant or locus so as to thereby treat the plant or locus against fungal infection.

10. The method of claim 9, wherein:
a) the method is more effective in treating a plant or locus against fungal infection than when each fungicide at the same amount is applied alone,
b) the amount of the compound of Formula I and the amount of the fungicide (A) when applied together is more effective in treating a plant or locus against fungal infection than when each fungicide at the same amount is applied alone,
c) the amount of the compound of Formula I applied is less than the fungicidally effective amount of the compound of Formula I when the compound of Formula I is used alone and/or the amount of the fungicide (A) applied is less than the fungicidally effective amount of the fungicide (A) when the fungicide (A) is used alone,
d) the method is effective for controlling fungal infection of the plant or locus, and/or
e) the method is effective for protecting the plant or locus against fungal infection.

11. The method of claim 10, wherein:
a) controlling fungal infection comprises controlling fungal disease infecting the plant or locus, controlling a plant or soil disease caused by phytopathologic fungi, controlling fungal attack on the plant or locus, reducing fungal infection of the plant or locus, and/or curing a plant or soil disease caused by phytopathologic fungi, and/or
b) protecting the plant or locus against fungal infection comprises protecting the plant or locus against fungal attack, protecting the plant or locus from fungal disease, and/or preventing fungal infection of the plant or locus.

12. The method of any one of claims 9-11, wherein:
a) the compound of Formula I and the fungicide (A) are applied to propagation material of the plant,
b) the compound of Formula I and the fungicide (A) are applied to seed and/or seedling of the plant,
c) the method comprises a protectant application of the compound of Formula I and the fungicide (A),
d) the method comprises a curative application of the compound of Formula I and the fungicide (A),
e) the compound of Formula I and the fungicide (A) are applied simultaneously or contemporaneously,
f) the compound of Formula I and the fungicide (A) are applied separately or together,
g) the method is effective for reducing leaf necrosis,
h) the compound of Formula I is applied at an amount from 1 g/ha to 500 g/ha, and/or
i) the fungicide (A) is applied at an amount from 0.1 g/ha to 4000 g/ha.

13. A method for controlling a plant disease caused by phytopathologic fungi comprising contacting the plant or a locus of the plant with an effective amount the combination, mixture or composition of any one of claims 1-8 so as to thereby control the plant disease.

14. A plant seed or seedling adapted to produce a plant resistant to fungal attack, wherein the plant seed or seedling is treated with the combination, mixture or composition of any one of claims 1-8.

15. Use of the combination, mixture or composition of any one of claims 1-8 for treating a plant or locus against fungal infection.
